# EUROPEAN PATENT SPECIFICATION

(11) **EP 4 266 630 B1**
(45) Date of publication and mention of the grant of the patent: **29.07.2026**
(21) Application number: 21922567.9
(22) Date of filing: 13.12.2021
(51) Int. Cl.: H04L 12/18, H04L 9/40, H04M 3/56, H04N 7/15

(54) **CONFERENCE ACCESS METHOD AND ELECTRONIC DEVICE**
KONFERENZZUGANGSVERFAHREN UND ELEKTRONISCHE VORRICHTUNG
PROCÉDÉ D'ACCÈS À UNE CONFÉRENCE ET DISPOSITIF ÉLECTRONIQUE

(30) Priority: 30.01.2021 CN 202110131858
(43) Date of publication of application: 25.10.2023
(73) Proprietor: Huawei Technologies Co., Ltd., Shenzhen, Guangdong 518129 (CN)
(72) Inventor: PAN, Jinling, Shenzhen, Guangdong 518129 (CN); SHI, Rui, Shenzhen, Guangdong 518129 (CN)
(74) Representative: Epping - Hermann - Fischer
(86) International application number: PCT/CN2021/137534
(87) International publication number: WO 2022/160977

(56) References cited:
- EP-A1- 2 081 372
- WO-A1-2018/213415
- CN-A- 103 929 553
- CN-A- 105 072 126
- CN-A- 109 302 411
- CN-A- 112 286 147
- US-A1- 2016 309 462

## Description

### TECHNICAL FIELD

Embodiments of this application relate to the field of communication technologies, and in particular, to a conference access method and an electronic device.

### BACKGROUND

In daily life, we have been participating increasingly frequently in both-party or multi-party conferences in single media or multimedia forms such as audio and video. During creation of the foregoing conferences or in a conference process, a user adds a conference member through an operation interface of an electronic device on which a conference is created, so that the conference member joins the conference.

However, in the foregoing manner, there are a large quantity of operation steps. In addition, missed selection, incorrect selection, or multiple selection easily occurs during operation performed by the user, and therefore the user needs to perform re-selection. The foregoing causes complex user operations, inconvenience of use, a long time consumed, and poor user experience. How to enable the user to quickly and conveniently add a conference member during the conference creation and the conference process and improve user experience becomes a goal that we pursue.

CN 112286147 A discloses A home device control method and a device relate to the field of communications technologies. Regardless of whether a home device is configured with a network and registered, an electronic device can control the home device, so as to simplify a home device control process. The home device includes a first antenna whose transmitting distance is a first distance and a second antenna whose transmitting distance is a second distance, and the first distance is less than the second distance. When detecting that the home device meets a preset condition, the electronic device sends a second message to the home device, to indicate the home device to use the first antenna and to indicate to obtain a random code; receives the random code sent by the home device by using the first antenna; accesses a wireless local area network based on the random code, and obtains configuration information including an interface element of a control page and a control instruction that are used to control the home device; and displays the control page and interacts with a user by using the control page, and sends the control instruction to the home device through the wireless local area network, to control the home device.

### SUMMARY

To resolve the foregoing technical problems, this application provides a conference access method and an electronic device. In the foregoing conference creation and conference process, by using technical solutions provided in this application, operation steps of adding a conference member can be reduced, inconvenience of use can be improved, a time consumed can be shortened, and user experience can be improved, so that a user can add a conference member quickly and conveniently.

To achieve the foregoing objective, the following technical solutions are used in embodiments of this application. The invention is defined according to the accompanying independent claims: a first electronic device as in claim 1, a second electronic device as in claim 5, a conference access method applied to a first electronic device as in claim 9, a conference access method applied to a second electronic device as in claim 10, a computer-readable storage medium as in claim 11 and a computer program product as in claim 12. Addtional aspects of the invention are to be found in the dependent claims.

For beneficial effects corresponding to the foregoing other aspects, refer to descriptions of beneficial effects in the device aspects.

### BRIEF DESCRIPTION OF DRAWINGS

FIG. 1 is a schematic diagram of a conference access scenario according to an embodiment of this application;
FIG. 2A and FIG. 2B are a schematic diagram of a conference access process;
FIG. 3 is a schematic diagram of a hardware structure of an electronic device according to an embodiment of this application;
FIG. 4A is a schematic diagram of a principle of an ultra-short-distance wireless communication module and an antenna according to an embodiment of this application;
FIG. 4B is a schematic diagram of a principle of an ultra-short-distance wireless communication module and an antenna according to an embodiment of this application;
FIG. 5A to FIG. 5C are schematic diagrams of specific structures of an ultra-short-distance wireless communication module and an antenna according to an embodiment of this application;
FIG. 6 is a schematic diagram of transmit distances of an ultra-short-distance wireless communication module and an antenna in a conference access method according to an embodiment of this application;
FIG. 7 is a schematic diagram of a structure of an antenna for performing ultra-short-distance communication according to an embodiment of this application;
FIG. 8A-1, FIG. 8A-2, and FIG. 8A-3 are a schematic flowchart of a conference access method according to an embodiment of this application;
FIG. 8B-1, FIG. 8B-2, and FIG. 8B-3 are another schematic flowchart of a conference access method according to an embodiment of this application;
FIG. 8C-1, FIG. 8C-2, and FIG. 8C-3 are still another schematic flowchart of a conference access method according to an embodiment of this application;

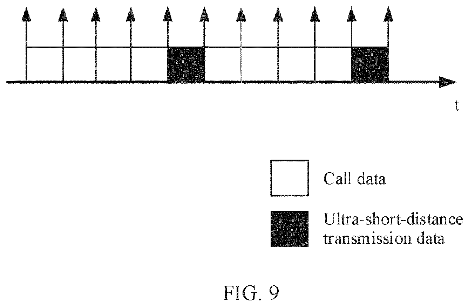

FIG. 9 is a schematic diagram of a time-division switching mode of an electronic device according to an embodiment of this application;

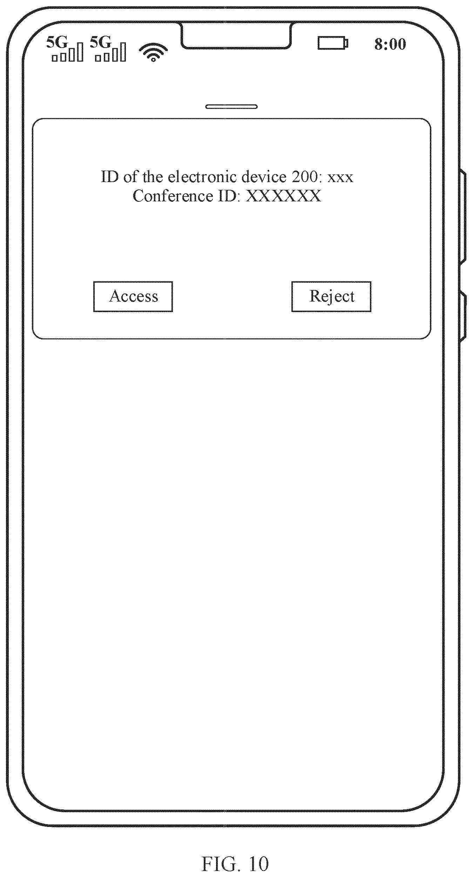

FIG. 10 is a schematic diagram of an interface of an electronic device according to an embodiment of this application;

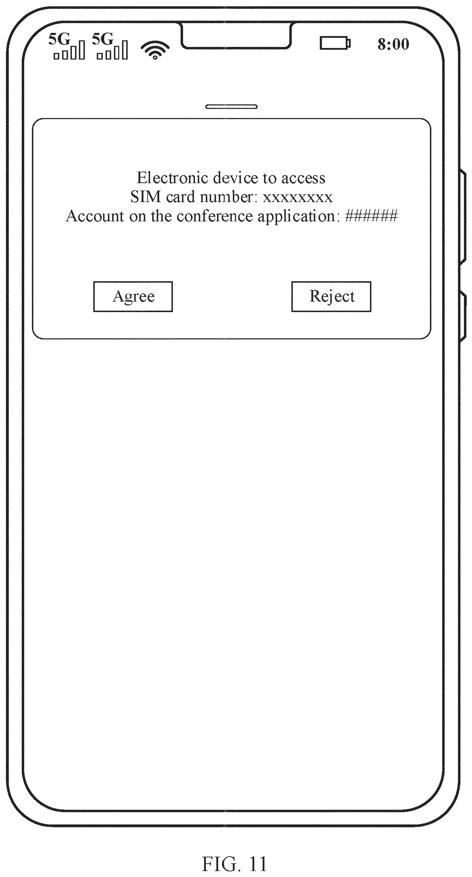

FIG. 11 is a schematic diagram of another interface of an electronic device according to an embodiment of this application;

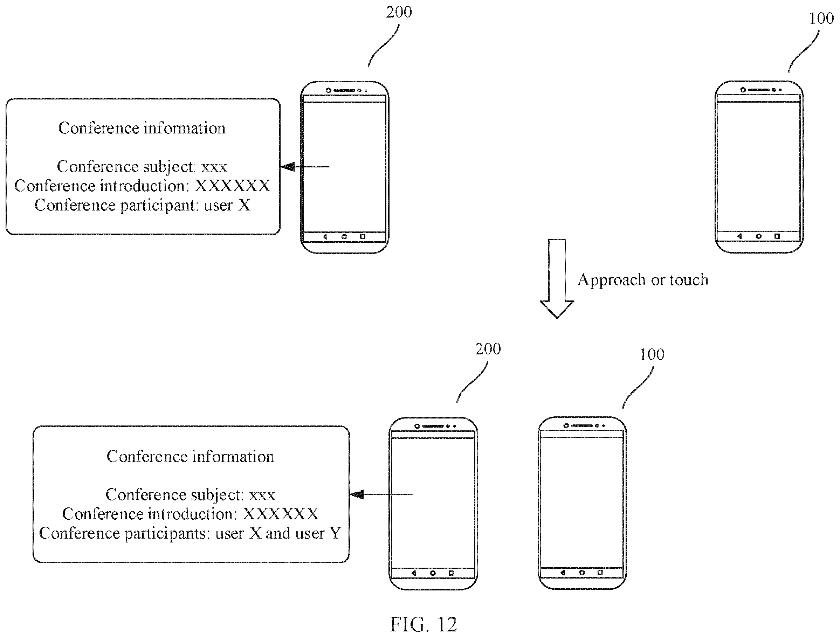

FIG. 12 is a schematic diagram of a conference access process according to an embodiment of this application;
FIG. 13A-1, FIG. 13A-2, FIG. 13A-3, and FIG. 13A-4 are a schematic flowchart of a conference access method according to an embodiment of this application;
FIG. 13B-1, FIG. 13B-2, FIG. 13B-3, and FIG. 13B-4 are another schematic flowchart of a conference access method according to an embodiment of this application;
FIG. 13C-1, FIG. 13C-2, FIG. 13C-3, and FIG. 13C-4 are still another schematic flowchart of a conference access method according to an embodiment of this application;

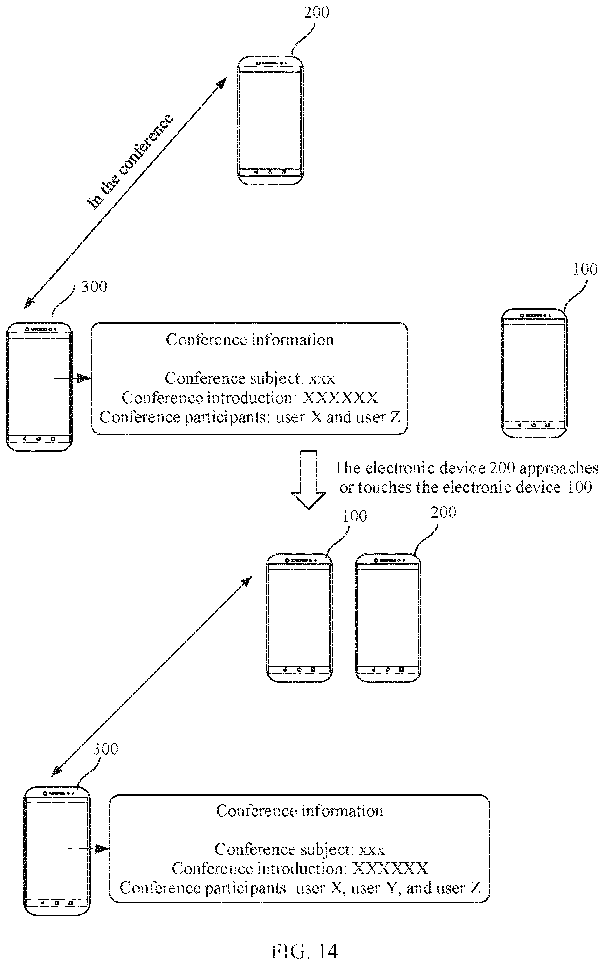

FIG. 14 is another schematic diagram of a conference access process according to an embodiment of this application;
FIG. 15A-1 and FIG. 15A-2 are a schematic flowchart of a conference access method according to an embodiment of this application;
FIG. 15B-1 and FIG. 15B-2 are another schematic flowchart of a conference access method according to an embodiment of this application; and

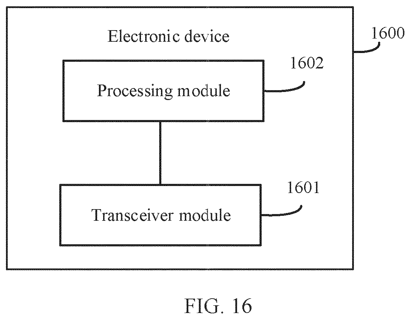

FIG. 16 is a schematic diagram of a structure of an electronic device according to an embodiment of this application.

### DESCRIPTION OF EMBODIMENTS

The following describes technical solutions in embodiments of this application with reference to the accompanying drawings in embodiments of this application. In descriptions in embodiments of this application, "/" means "or" unless otherwise specified. For example, A/B may represent A or B. In this specification, the term "and/or" describes only an association relationship between associated objects and represents that three relationships may exist. For example, A and/or B may represent the following three cases: Only A exists, both A and B exist, and only B exists. In addition, in the descriptions in embodiments of this application, "a plurality of" means two or more.

Hereinafter, the terms "first" and "second" are used only for descriptive purposes, and cannot be understood as indicating or implying relative importance or implicitly indicating a quantity of indicated technical features. Therefore, features defining "first" and "second" may explicitly or implicitly include one or more of the features. In the descriptions of embodiments, unless otherwise specified, "a plurality of" means two or more than two.

In embodiments of this application, the word "example", "for example", or the like is used to represent giving an example, an illustration, or a description. Any embodiment or design scheme described as "example" or "for example" in embodiments of this application should not be explained as being more preferred or having more advantages than another embodiment or design scheme. Exactly, use of the word "example", "for example", or the like is intended to present a relative concept in a specific manner.

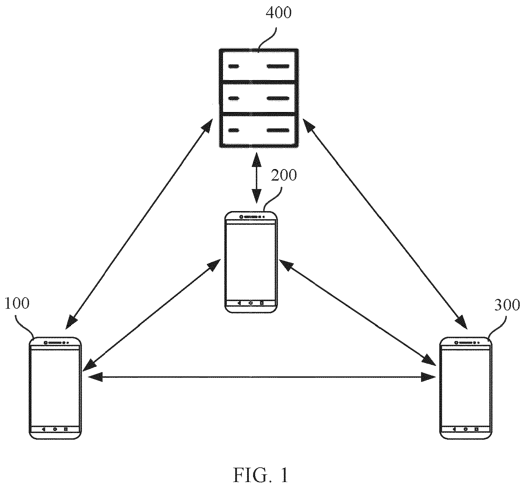

FIG. 1 is a schematic diagram of a conference access scenario according to an embodiment of this application. As shown in FIG. 1, an electronic device 200 may be used as a conference initiator to create a conference. It may be understood that, if the conference is a regular conference, it may be considered that the electronic device 200, a login account on the electronic device 200, or a login account of a conference application on the electronic device 200 is a conference chairman. An electronic device 100 and an electronic device 300 may access the conference created by the electronic device 200. Correspondingly, in the conference, conference members corresponding to the electronic device 100 and the electronic device 300 may be the electronic device 100 and the electronic device 300, or may be login accounts on the electronic device 100 and the electronic device 300, or may be login accounts of conference applications on the electronic device 100 and the electronic device 300. For ease of description, the following description is provided merely by using an example in which the electronic device 200 is a conference chairman, and the electronic device 100 and the electronic device 300 are conference members. However, a person skilled in the art should understand that, using a login account on the electronic device 200 or a login account of a conference application on the electronic device 200 as a conference chairman, using login accounts on the electronic device 100 and the electronic device 300 as conference members, or using login accounts of conference applications on the electronic device 100 and the electronic device 300 as conference members also falls within the scope of this application. The electronic device 100 may also be referred to as a first electronic device, the electronic device 200 may also be referred to as a second electronic device, and the electronic device 300 may also be referred to as a third electronic device.

In a broad sense, the conference members include the conference chairman. In a narrow sense, the conference members are different from the conference chairman.

When there is the conference chairman, conference participants include the conference chairman and conference members; or when there is no conference chairman, the conference participants include the conference members.

Optionally, a conference may be a conference without a conference chairman. For example, in a conference scenario of a multi-person audio or video call in a WeChat application, it may be considered that the electronic device 200 only initiates a conference, and the electronic device 100 and the electronic device 300 may access the conference. However, there is no conference chairman in the conference, that is, there is no conference host.

It may be understood that one conference corresponds to one conference group. All conference participants form a conference group. For example, the electronic device 200 creates a conference, and after the electronic device 100 and the electronic device 300 access the conference, a conference group corresponding to the conference includes the electronic device 200, the electronic device 100, and the electronic device 300. Herein, the electronic device 100 and the electronic device 300 are merely examples, and that only two electronic devices access the conference is not limited. A quantity of electronic devices accessing the conference may be any quantity. It may be understood that the electronic device 200 serving as the conference initiator may alternatively be another electronic device. This application is merely an example, and does not limit that a conference initiator can only be the electronic device 200.

A server 400 may be a conference server, and is configured to: manage a conference, provide a conference call service, and the like. For example, the server 400 may include a voice over Internet protocol (voice over Internet protocol, VOIP) server. In embodiments of this application, the server 400 may be configured to determine whether an electronic device serving as a conference chairman is valid, and may be further configured to determine whether an electronic device that requests to access a conference is valid. For example, the server 400 can obtain an account and a conference ID of an electronic device serving as a conference chairman on a conference application, and determine that the account of the electronic device on the conference application is the chairman of the conference corresponding to the conference ID stored in the server 400, to determine validity of the electronic device serving as the conference chairman.

Optionally, the electronic device 100, the electronic device 200, and the electronic device 300 may communicate with the server 400 in any one of communication manners such as 2G/3G/4G/5G cellular mobile communication, optical fiber communication, and Ethernet communication. Communication manners of the electronic device 100, the electronic device 200, and the electronic device 300 with the server 400 may be all the same, or may be partially the same, or may be all different. In this way, a conference call between the electronic devices may be implemented through information forwarding of the server 400. Optionally, the electronic device 100, the electronic device 200, and the electronic device 300 may access a routing device (for example, a router) in a first communication manner, and communicate with the server 400 in a second communication manner by using the routing device, to implement a conference call. The first communication manner may be any communication manner in 2G/3G/4G/5G cellular mobile communication, optical fiber communication, Bluetooth (Bluetooth, BT), wireless local area networks (wireless local area networks, WLAN) (for example, Wi-Fi), ZigBee, frequency modulation (frequency modulation, FM), near field communication (near field communication, NFC), infrared (infrared, IR), universal 2.4 G/5 G frequency band wireless communication, and USB communication. For example, the second communication manner may be a 2G/3G/4G/5G cellular mobile communication manner or an optical fiber communication manner.

The electronic devices (for example, the electronic device 100, the electronic device 200, and the electronic device 300) in embodiments of this application include but are not limited to a smartphone, a smart headset, a smart screen, a smart sound box, a tablet computer, a wearable device with a wireless communication function (for example, a smartwatch, a smart band, a smart ring, or smart glasses), an in-vehicle device, an augmented reality (augmented reality, AR)/virtual reality (virtual reality, VR) device, a personal digital assistant (personal digital assistant, PDA), and the like. An example embodiment of the electronic device includes but is not limited to a portable wireless routing device that carries iOS^{®}, Android^{®}, Microsoft^{®}, Windows, Linux, or another operating system. The foregoing electronic device may alternatively be another portable device, such as a laptop (Laptop). It should be further understood that in some other embodiments, the foregoing electronic device may not be a portable device but a device such as a desktop computer.

When the electronic device 200 adds a conference member during conference creation or during the conference, a user of the electronic device 200 enables, by using an interactive operation interface, the conference member to access the current conference. For example, the user of the electronic device 200 may check or enter identification information such as a user name or an account corresponding to the conference member on the interactive operation interface, to connect the conference member to the conference created by the electronic device 200.

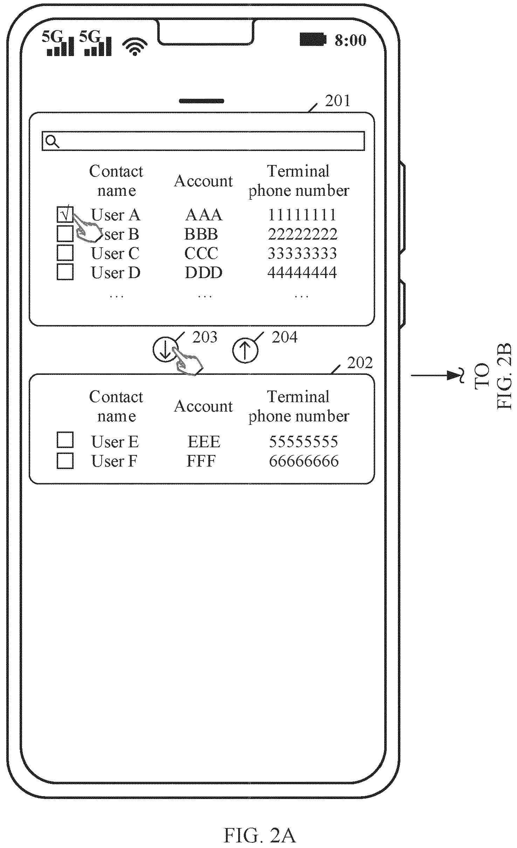

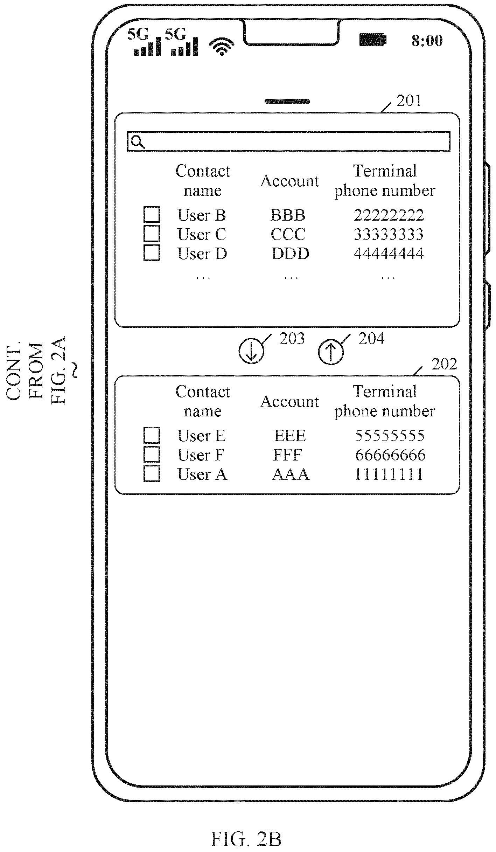

For example, as shown in FIG. 2A and FIG. 2B, a box 201 displays information about a contact that does not access the conference. A box 202 displays information about a conference member that has accessed the conference. For example, in FIG. 2A and FIG. 2B, the user on the side of the electronic device 200 expects to add a new conference member, namely, a user A, and may tap a selection box in front of the user A on the electronic device 200, and then tap a control 203, so that related information of the user A may be added to the box 202. In this way, an electronic device corresponding to the user A is connected to the conference.

Optionally, in FIG. 2A and FIG. 2B, the user may further enter, in a search box, information about a conference member to be added, to find the conference member to be added, and connect the conference member to the current conference.

Optionally, in FIG. 2A and FIG. 2B, the user may further select a conference member that has accessed the conference, and then tap a control 204, so that the selected conference member exits the current conference.

In the foregoing process, in one aspect, when the electronic device 200 adds conference members during conference creation or the conference, the user of the electronic device 200 usually needs to select the conference members one by one. Therefore, there are a large quantity of steps, operation duration is long, and missed selection, incorrect selection, or multiple selection easily occurs in a selection process. In a further aspect, because a screen size of the electronic device 200 is limited, when a new conference member is added, the interactive operation interface is easily blocked by a conference interface (such as an audio interface or a video interface). Therefore, when performing an interactive operation, the user of the electronic device 200 easily touches the conference interface by mistake, causing conference interruption. As a result, the conference is in a suspended state. In conclusion, the operation of adding a conference member is complex, time-consuming, and inconvenient, and user experience is poor.

To resolve the foregoing technical problems, this application provides a conference access method and an electronic device. Electronic devices may interact with each other in an ultra-short-distance communication manner. An electronic device that expects to access a current conference accesses the current conference in a natural interaction manner such as touching or approaching an electronic device that is a conference chairman, or another electronic device that has accessed the current conference. In this way, a quick and convenient conference access manner is provided. The conference access manner is easy to operate, consumes a short time, and has better user experience. In addition, this manner ensures security. In addition, this manner further resolves a problem of touch by mistake.

In the conference access method provided in embodiments of this application, the electronic device 100, the electronic device 200, and the electronic device 300 shown in FIG. 1 may interact with another electronic device to add a new conference member based on an ultra-short-distance communication manner, and may also make a conference call based on any one of common communication manners such as 2G/3G/4G/5G cellular mobile communication, optical fiber communication, and Ethernet communication. In other words, the electronic device may switch between the ultra-short-distance communication manner and the common communication manner, or the electronic device may use the ultra-short-distance communication manner and the common communication manner in parallel, to implement different functions.

The ultra-short-distance communication manner is a communication manner in which communication can be performed only when a distance between both communication parties is within a preset secure distance. The preset secure distance is a distance at which both communication parties can exchange secret information. For example, the preset secure distance may be less than or equal to any short distance such as 30 cm, 20 cm, or 10 cm. The preset secure distance may be specifically set based on a user requirement. It may be understood that, for both communication parties, because ultra-short-distance communication can be performed only within a preset secure distance, the ultra-short-distance communication manner can ensure data transmission security.

The ultra-short-distance communication manner may be a communication manner improved based on a plurality of conventional communication manners. For example, the ultra-short-distance communication manner may include one of a Wi-Fi ultra-short-distance communication manner, a Bluetooth ultra-short-distance communication manner, a ZigBee ultra-short-distance communication manner, and the like.

It should be noted that, in some embodiments, when the ultra-short-distance communication manner is implemented, no new hardware device may be added. For example, a transmit power of an antenna may be changed without changing an original hardware device basis, to implement an ultra-short-distance communication manner. In some other embodiments, when the ultra-short-distance communication manner is implemented, only a small improvement may be made on an existing hardware device. For example, an antenna that can implement ultra-short-distance communication may be added to implement the ultra-short-distance communication manner. In other words, to implement the ultra-short-distance communication manner, no new hardware device needs to be added or an existing hardware device does not need to be greatly transformed.

In the scenario shown in FIG. 1, based on whether at least one electronic device in the electronic device 100 and the electronic device 300 has accessed a conference currently created by the electronic device 200, the scenario shown in FIG. 1 may be classified into the following two scenarios:

Scenario 1: In the scenario 1, there is no electronic device that accesses the conference currently created by the electronic device 200. In other words, neither the electronic device 100 nor the electronic device 300 accesses the current conference. In the scenario 1, the electronic device 200 starts to create the conference for access by other electronic devices (for example, the electronic device 100 and the electronic device 300). It may also be considered that, in the scenario 1, only the electronic device 200 participates in the conference. An electronic device of a to-access-party may join, by approaching the electronic device 200, the conference created by the electronic device 200.

Scenario 2: In the scenario 2, at least one electronic device accesses the conference currently created by the electronic device 200. In other words, currently, the electronic device 200 and at least one another electronic device are in a conference, and a corresponding conference group includes the electronic device 200 and the at least one another electronic device. It can be learned from the foregoing content that, the conference in embodiments of this application includes a regular conference and a conference without a conference chairman. Therefore, the scenario 2 may further include a scenario in which a conference chairman exists and a scenario in which no conference chairman exists. In the scenario in which a conference chairman exists and the scenario in which no conference chairman exists, the electronic device of the to-access-party may join the current conference by approaching any electronic device that participates in the conference.

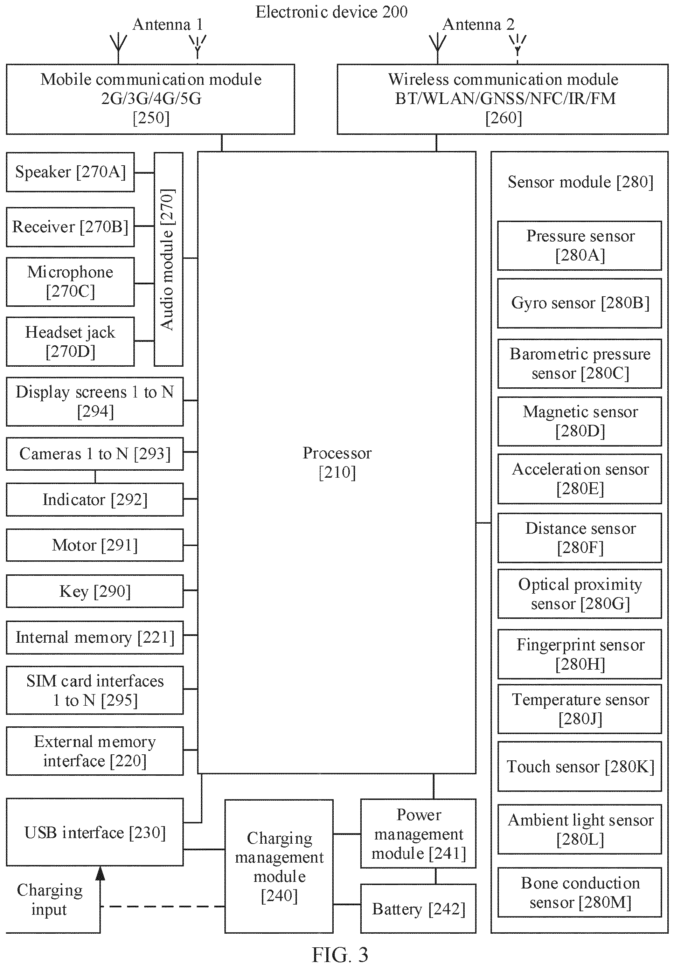

For example, FIG. 3 is a schematic diagram of a hardware structure of an electronic device according to an embodiment of this application. Herein, the electronic device may be any electronic device in the electronic device 100, the electronic device 200, and the electronic device 300 shown in FIG. 1.

Using the electronic device 200 as an example, as shown in FIG. 3, the electronic device 200 may include a processor 210, an external memory interface 220, an internal memory 221, a universal serial bus (universal serial bus, USB) interface 230, a battery 240, an antenna 1, an antenna 2, a mobile communication module 250, a wireless communication module 260, an audio module 270, a speaker 270A, a receiver 270B, a microphone 270C, a sensor module 280, a key 290, a motor 291, an indicator 292, a camera 293, a display screen 294, and a subscriber identity module (subscriber identity module, SIM) card interface 295.

It may be understood that, the structure shown in embodiments of this application does not constitute a specific limitation on the electronic device 200. In some other embodiments of this application, the electronic device 200 may include more or fewer components than those shown in the figure, or combine some components, or split some components, or have different component arrangements. The components shown in the figure may be implemented by hardware, software, or a combination of software and hardware.

The processor 210 may include one or more processing units. For example, the processor 210 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, and/or a neural-network processing unit (neural-network processing unit, NPU), and the like. Different processing units may be independent devices, or may be integrated into one or more processors.

In some embodiments, the processor 210 may include one or more interfaces. The interfaces may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

The USB interface 230 is an interface that conforms to a USB standard specification, and may be specifically a Mini USB interface, a Micro USB interface, a USB Type C interface, or the like. It may be understood that, an interface connection relationship between the modules shown in embodiments of this application is merely an example for description, and does not constitute a structural limitation on the mobile routing device 200. In some other embodiments of this application, the mobile routing device 200 may alternatively use an interface connection manner different from that in the foregoing embodiment, or use a combination of a plurality of interface connection manners.

A wireless communication function of the electronic device 200 may be implemented by using the antenna 1, the antenna 2, the mobile communication module 250, the wireless communication module 260, the modem processor, the baseband processor, and the like.

The antenna 1 and the antenna 2 are configured to transmit and receive an electromagnetic wave signal. Each antenna in the mobile routing device 200 may be configured to cover one or more communication frequency bands. Different antennas may be further multiplexed, to improve antenna utilization. For example, the antenna 1 may be multiplexed as a diversity antenna of a wireless local area network. In some other embodiments, the antenna may be used in combination with a tuning switch.

The mobile communication module 250 may provide a solution applied to the electronic device 200 for mobile communication including 2G/3G/4G/5G mobile communication. The mobile communication module 250 may include at least one filter, a switch, a power amplifier, a low noise amplifier (low noise amplifier, LNA), and the like. The mobile communication module 250 may receive an electromagnetic wave by using the antenna 1, perform processing such as filtering or amplification on the received electromagnetic wave, and transmit the electromagnetic wave to a baseband communication processor for demodulation. The mobile communication module 250 may further amplify a signal modulated by the baseband communication processor, and convert the signal into an electromagnetic wave for radiation by using the antenna 1. In some embodiments, at least some functional modules in the mobile communication module 250 may be disposed in the processor 210. In some embodiments, at least some functional modules of the mobile communication module 250 may be disposed in a same device as at least some modules of the processor 210.

The wireless communication module 260 may provide a solution applied to the electronic device 200 for wireless communication including wireless local area networks (wireless local area networks, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field wireless communication (near field communication, NFC) technology, an infrared (infrared, IR) technology, and the like. The wireless communication module 260 may be one or more devices integrating at least one communication processing module. For example, the wireless communication module 260 receives an electromagnetic wave by using the antenna 2, performs frequency modulation and filtering processing on the electromagnetic wave signal, and sends a processed signal to the processor 210. The wireless communication module 260 may further receive a to-be-sent signal from an application processor 211, perform frequency modulation and amplification on the to-be-sent signal, and convert the signal into an electromagnetic wave for radiation by using the antenna 2.

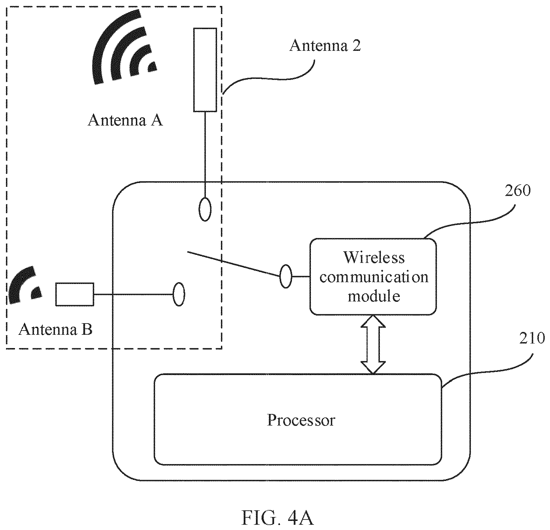

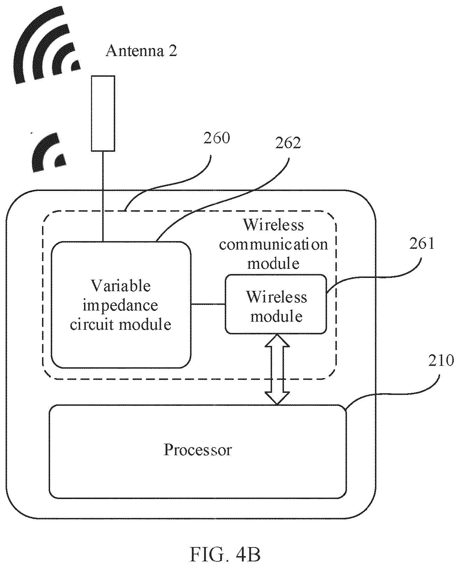

In embodiments of this application, the foregoing ultra-short-distance communication manner may be implemented by using the antenna 2. For example, FIG. 4A and FIG. 4B are schematic diagrams of structures of antennas that can perform ultra-short-distance communication.

In an example, FIG. 4A shows a principle structure of an ultra-short-distance wireless communication module and an antenna according to an embodiment of this application. As shown in FIG. 4A, the electronic device 200 may include the processor 210, the wireless communication module 260, an antenna A, and an antenna wire B. The antenna 2 includes the antenna A and the antenna B.

The antenna A (also referred to as a first antenna, such as a strong antenna) and the antenna B (also referred to as a second antenna, such as a weak antenna) are configured to transmit and receive electromagnetic waves. Further, the wireless communication module 260 converts an electromagnetic wave received from the antenna A or the antenna B into a signal, and sends the signal to the processor 210 for processing; or the wireless communication module 260 receives a to-be-sent signal from the processor 210, and converts the to-be-sent signal into an electromagnetic wave for radiation by using the strong antenna or the weak antenna. In embodiments of this application, a first transmit distance (for example, 10 meters or 5 meters, and this may be specifically set by a user) for transmitting a signal by the strong antenna is greater than a second transmit distance (for example, 0.2 meters or 0.3 meters, and this may be specifically set by the user) for transmitting a signal by the weak antenna. A second transmit distance for transmitting a signal by the weak antenna is less than or equal to a preset secure distance. The preset secure distance is a distance at which the user of the electronic device 200 exchanges secret information with another electronic device by using the electronic device 200. For example, the preset secure distance may be 50 cm, 40 cm, 30 cm, 20 cm, or the like. In this way, the electronic device 200 can receive the secret information sent by the another electronic device only when the electronic device 200 is located within a range in which a distance between the electronic device 200 and the another electronic device is less than or equal to the preset secure distance. In this way, a security risk is reduced (for example, the secret information is not received by other devices beyond a distance of 50 cm away from the another electronic device). The user of the electronic device 200 may approach the electronic device 200 within a preset secure distance from another electronic device only when surroundings are secure, thereby improving security. In some embodiments, the processor 210 may control switching between the strong antenna and the weak antenna. When the electronic device 200 uses the strong antenna, the electronic device 200 receives a signal sent by the another electronic device only when a distance between the electronic device 200 and the another electronic device is less than the first transmit distance; or when the electronic device 200 uses the weak antenna, the electronic device receives a signal sent by the another electronic device only when a distance between the electronic device 200 and the another electronic device is less than the second transmit distance. The first transmit distance is greater than the preset secure distance, and the second transmit distance is less than or equal to the preset secure distance. In some embodiments, the first transmit distance and the second transmit distance may be respectively referred to as a first distance and a second distance.

In another example, FIG. 4B shows another principle structure of an ultra-short-distance wireless communication module and an antenna according to an embodiment of this application. As shown in FIG. 4B, the electronic device 200 may include the processor 210, the wireless communication module 260, and the antenna 2. The wireless communication module 260 includes a wireless module 261 and a variable impedance circuit module 262. The antenna 2 is configured to transmit and receive wireless signals. The variable impedance circuit module 262 may be a circuit, an integrated line, or the like, including a variable impedor. The processor 210 adjusts, by controlling and adjusting an impedance value of the variable impedance circuit module 262, a transmit power loaded on the antenna 2, to control a transmit distance for transmitting a wireless signal by the antenna 2. For example, when the impedance value of the variable impedance circuit module 262 is a first impedance value, a transmit power of the antenna 2 is a first transmit power. In this case, a distance for transmitting the wireless signal by the antenna 2 is the first transmit distance (a function of the strong antenna is implemented). When the impedance value of the variable impedance circuit module 262 is a second impedance value, a transmit power of the antenna 2 is a second transmit power. In this case, a distance for transmitting the wireless signal by the antenna 2 is the second transmit distance (a function of the weak antenna is implemented). The first transmit power is greater than the second transmit power. The first transmit distance is greater than the preset secure distance, and the second transmit distance is less than or equal to the preset secure distance. In some embodiments, the first transmit distance and the second transmit distance may be respectively referred to as a first distance and a second distance. In another example corresponding to FIG. 4B, other descriptions about the processor 210 and the wireless communication module 260 are the same as related descriptions in an example corresponding to FIG. 4A. Details are not described herein again.

It should be noted that, although structures of the ultra-short-distance wireless communication module and the antenna in FIG. 4A and FIG. 4B are described by using the electronic device 200 as an example, the electronic device 100 and the electronic device 300 may also include structures of the ultra-short-distance wireless communication module and the antenna. For example, corresponding to the reference numerals in FIG. 4A, the electronic device 100 may include a processor 110, a wireless communication module 160, and the antenna 2. The antenna 2 includes the antenna A and the antenna B. Corresponding to the reference numerals in FIG. 4B, the electronic device 100 may include a processor 110, a wireless communication module 160, and the antenna 2. Specific descriptions are the same as or similar to descriptions related to FIG. 4A and FIG. 4B, and details are not described herein again.

It may be understood that principle structures shown in the example corresponding to FIG. 4A and the another example corresponding to FIG. 4B do not constitute a specific limitation on the wireless communication module and the antenna in the electronic device 200. In some other embodiments, structures of the wireless communication module and the antenna in the electronic device 200 may include more or fewer components than those shown in the figure, or combine some components, or split some components, or have different component arrangements. The components shown in the figure may be implemented by hardware, software, or a combination of software and hardware. Correspondingly, the foregoing content is also applicable to structures of the ultra-short-distance wireless communication module and the antenna of the electronic device 100. Details are not described herein again.

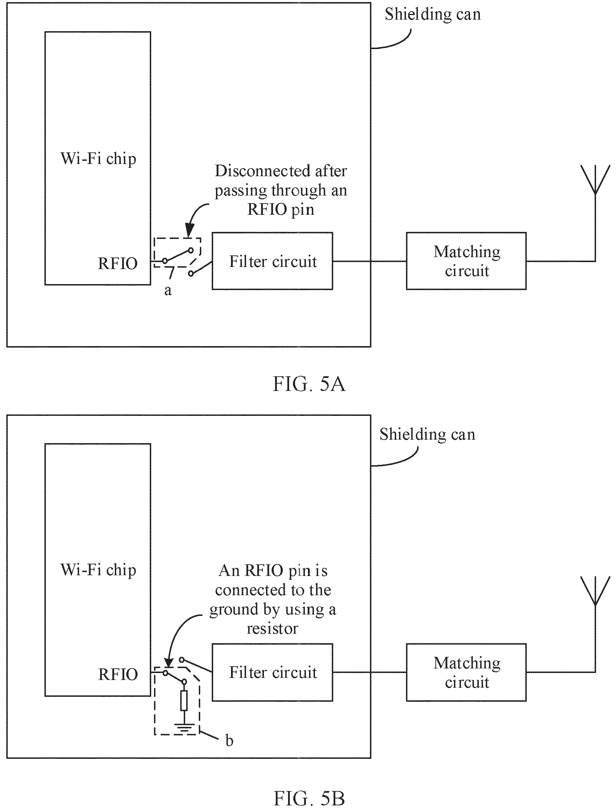

In some embodiments, the strong antenna and the weak antenna may share a part of cabling, for example, as described in embodiments shown in FIG. 5A to FIG. 5C.

For example, FIG. 5A to FIG. 5C show three implementations of a strong antenna and a weak antenna in FIG. 4A. Structures of a wireless communication module and an antenna of the electronic device 100 and the electronic device 300 may also use the three manners shown in FIG. 5A to FIG. 5C. As shown in FIG. 5A to FIG. 5C, the strong antenna and the weak antenna may share a part of cabling.

In this embodiment of this application, the strong antenna and the weak antenna in the electronic device may be switched by using a radio frequency switch. Physically, both the weak antenna and the radio frequency switch (the weak antenna is shown in a dashed-line box in FIG. 5A to FIG. 5C) may be disposed in a shielding can, or the weak antenna may be disposed in a chip.

An objective of the weak antenna in embodiments of this application is to reduce a transmit distance to the greatest extent. A principle of constructing the weak antenna may be as follows:
(1) reducing a length of the antenna, to reduce electromagnetic waves radiated to the air;
(2) reducing radiation efficiency, and converting, by using a resistor, partial electromagnetic wave radiation into heat energy for consumption; and
(3) reducing a return loss and reflecting partial radio frequency energy back to inside of a chip, and the like.

The weak antenna may be specifically implemented by:
(i) shortening the antenna;
(ii) disconnecting a point in a path of the strong antenna, or grounding the point by using a resistor, an inductor, or a capacitor; and
(iii) using a shielding can, and the like.

It should be understood that the specific implementations (i) and (ii) of the weak antenna may be implemented on a PCB board or inside a chip.

It should be further understood that a function of the shielding can is to weaken radiation.

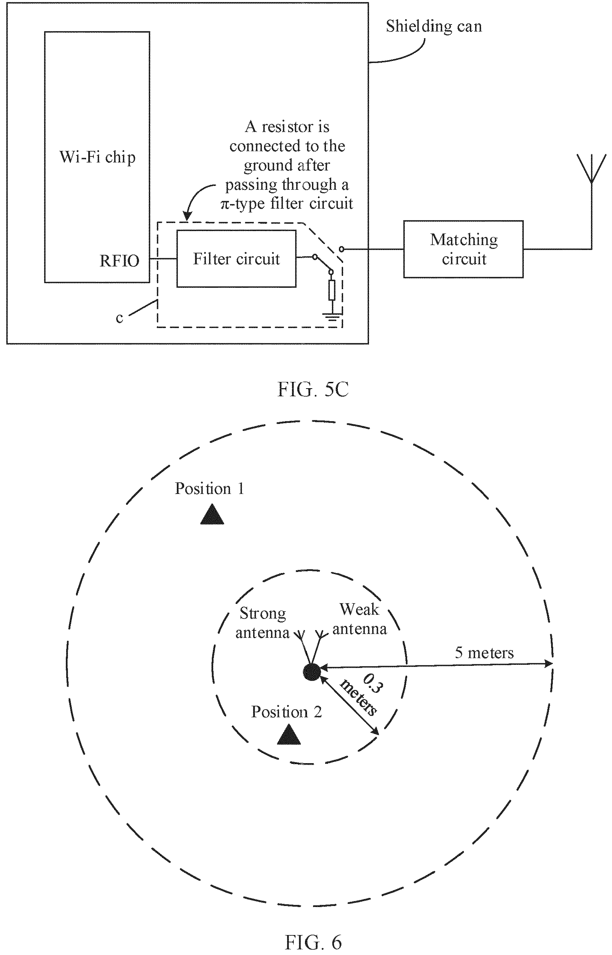

It should be further understood that the shortening the antenna means that the weak antenna is shorter than the strong antenna. The three structures of the weak antenna are shown in FIG. 5A to FIG. 5C, and the weak antenna is shown in structures in the dashed-line box in FIG. 5A to FIG. 5C. In structures of the strong antenna in FIG. 5A to FIG. 5C, a filter circuit (for example, a π-type circuit), a matching circuit (for example, a π-type circuit), and an antenna body (for example, the antenna body may be a segment of metal cabling) outside the matching circuit are all connected by using a radio frequency input/output (radio frequency input/output, RFIO) pin. The weak antenna a shown in the dashed-line box in FIG. 5A, the weak antenna b shown in the dashed-line box in FIG. 5B, and the weak antenna c shown in the dashed-line box in FIG. 5C have different lengths, but each are shorter than the strong antenna. A function of the filter circuit is to prevent interference, and the matching circuit is configured to match the strong antenna.

For example, as shown in FIG. 5A, the weak antenna a may be located in the shielding can. The weak antenna a may include the RFIO pin of a Wi-Fi chip and a first-way switch in a two-way switch (the first-way switch is not connected to any device) that are in the shielding can. Sometimes, the weak antenna a may further include a cabling between the RFIO pin and the first-way switch. The two-way switch is a switch between the cabling or the RFIO pin and the filter circuit. The cabling or the RFIO pin may be connected or disconnected to or from the filter circuit by using the two-way switch. As shown in FIG. 5A, the first-way switch is a switch connected to the RFIO pin or the cabling and disconnected from the filter circuit. It should be understood that the two-way switch in embodiments of this application may be a single-pole double-throw switch.

For example, as shown in FIG. 5B, the weak antenna b may be located in the shielding can. The weak antenna b may include the RFIO pin of a Wi-Fi chip, a first-way switch in a two-way switch (the first-way switch is connected to the resistor), and a matching device that are in the shielding can. Sometimes, the weak antenna b may further include a first cabling between the RFIO pin and the first-way switch. Sometimes, the weak antenna b may further include a second cabling between the matching device and the ground. The matching device may be the resistor. Partial electromagnetic wave radiation may be converted, through resistor grounding, into heat energy for consumption, to reduce radiation efficiency of the weak antenna b. The two-way switch is a switch between the RFIO pin or the first cabling, the resistor, and the filter circuit. By using the switch, the RFIO pin or the first cabling may be connected to the resistor and disconnected from the filter circuit, or the RFIO pin or the first cabling may be disconnected from the resistor and connected to the filter circuit. The first-way switch is a switch that is in the two-way switch and that is connected to the matching device and disconnected from the filter circuit.

For example, as shown in FIG. 5C, the weak antenna c may be located in the shielding can. A matching device (for example, the resistor) is connected to the ground after passing through a chip-matched filter circuit. The weak antenna c may include the RFIO pin of a Wi-Fi chip, the filter circuit, a first-way switch in a two-way switch (the first-way switch is connected to the resistor), and a matching device (for example, the resistor) that are in the shielding can. Sometimes, the weak antenna c may further include a first cabling between the RFIO pin and the filter circuit. Sometimes, the weak antenna c may further include a second cabling between the filter circuit and the matching device. Partial electromagnetic wave radiation may be converted, through matching device (for example, the resistor) grounding, into heat energy for consumption, to reduce radiation efficiency of the weak antenna c. The two-way switch is a switch between the filter circuit and the matching device in the shielding can and a switch between the filter circuit and the matching circuit that is outside the shielding can. By using the two-way switch, the filter circuit and the matching device in the shielding can may be connected to each other, and the filter circuit may be disconnected from the matching circuit outside the shielding can; or the filter circuit and the matching device in the shielding can may be disconnected from each other, and the filter circuit may be connected to the matching circuit outside the shielding can. The first-way switch is a switch configured to connect the filter circuit to the matching device in the shielding can.

It should be understood that the strong antenna in FIG. 5A and FIG. 5B may include the RFIO pin, a second-way switch in the two-way switch, the filter circuit, the matching circuit, and the antenna body connected outside the matching circuit. Sometimes, the strong antenna in FIG. 5A and FIG. 5B may further include a cabling between the RFIO pin and the second-way switch in the two-way switch. The second-way switch is a switch configured to connect the RFIO pin and the filter circuit.

The strong antenna in FIG. 5C may include the RFIO pin, the filter circuit, the second-way switch in the two-way switch, the matching circuit, and the antenna body connected outside the matching circuit. Sometimes, the strong antenna in FIG. 5C may further include a cabling between the RFIO pin and the filter circuit. The second-way switch is a switch configured to connect the filter circuit in the shielding can to the matching circuit outside the shielding can.

It should be understood that the wireless communication module 260 shown in FIG. 4A may be the Wi-Fi chip, or may be the Wi-Fi chip and a circuit matching the Wi-Fi chip. The wireless module 261 shown in FIG. 4B may be the Wi-Fi chip, and the wireless communication module 260 shown in FIG. 4B may be the Wi-Fi chip and a circuit matching the Wi-Fi chip.

In the foregoing settings in which the different structures of the weak antenna cooperate with different transmit power (Tx power) of the Wi-Fi chip, different ultra-short-distance communication requirements (for example, from 10 cm to 2 m) can be met.

For example, Table 1 shows communication distances at different transmit power when several different structures of the weak antenna (the second antenna) cooperate with the Wi-Fi chip.

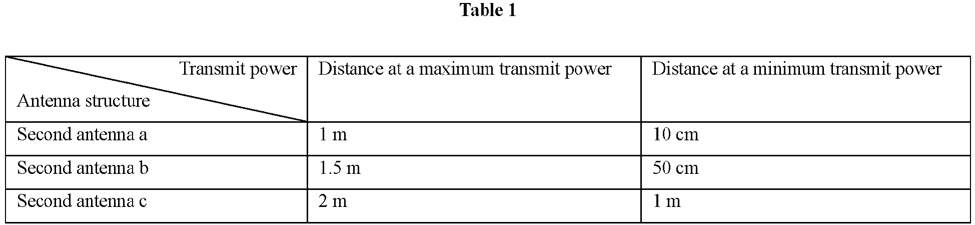

For example, Table 2 shows communication distances at different transmit power when several different structures of the second antenna cooperate with a Bluetooth chip.

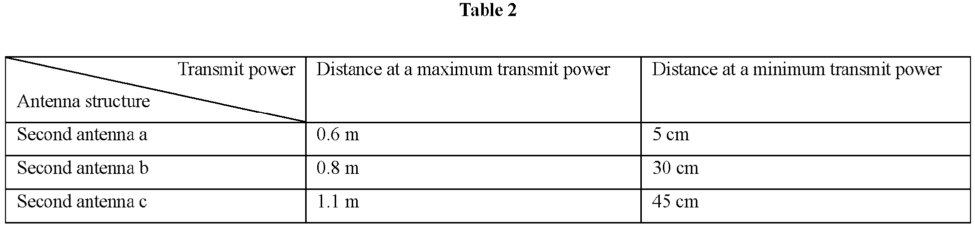

For example, Table 3 shows communication distances at different transmit power when several different structures of the second antenna cooperate with a ZigBee chip.

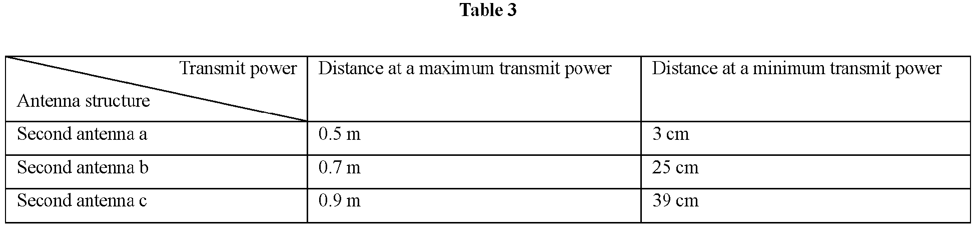

Due to a characteristic of a physical device in the chip, the maximum transmit power of the antenna is related to the minimum transmit power of the antenna. If the minimum transmit power of the electronic device 200 is reduced to a quite small value, the maximum transmit power is also reduced. In this way, a distance requirement during normal working is not met. In embodiments of this application, because different intelligent devices have different structures and security performance requirements for the intelligent devices are different, manufacturers of the intelligent devices may use different structures and different transmit power of the second antenna, to ensure communication distances of the intelligent devices. For example, for manufacturers of different intelligent air conditioners, thicknesses of housings of the intelligent air conditioners may be different. In this case, when the structures and the transmit power of the second antenna are the same, communication distances at which the intelligent air conditioners can be discovered may also be different. Different intelligent device manufacturers may test and obtain, based on a structure of the intelligent device, a structure of the second antenna, and a specific transmit power, a secure distance at which the intelligent device is discovered.

It should be understood that, in embodiments of this application, the electronic device 200 includes a plurality of chips (for example, the electronic device 200 includes a Wi-Fi chip, a Bluetooth chip, and a ZigBee chip). In this case, the Wi-Fi chip, the Bluetooth chip, and the ZigBee chip in the electronic device 200 may share the first antenna and the second antenna in FIG. 5A; or the Wi-Fi chip, the Bluetooth chip, and the ZigBee chip in the electronic device 200 may share the first antenna and the second antenna in FIG. 5B; or the Wi-Fi chip, the Bluetooth chip, and the ZigBee chip in the electronic device 200 may share the first antenna and the second antenna in FIG. 5C.

Alternatively, the Wi-Fi chip, the Bluetooth chip, and the ZigBee chip in the electronic device 200 may not share the first antenna and the second antenna.

It should be further understood that FIG. 5A to FIG. 5C show a physical first antenna and a physical second antenna, and the first device may switch between the physical first antenna and the physical second antenna by using a radio frequency switch. In embodiments of this application, the first device may alternatively have only one antenna physically, but logically include the first antenna and the second antenna.

The electronic device 200 may implement the logical first antenna and the logical second antenna by adjusting a transmit power of the physical antenna. For example, when the transmit power of the physical antenna is the first transmit power, the physical antenna may be considered as the logical first antenna; or when the transmit power of the physical antenna is the second transmit power, the physical antenna may be considered as the logical second antenna. The first transmit power is greater than the second transmit power.

In a possible implementation, the electronic device 200 may adjust the transmit power of the physical antenna by adjusting a device inside the chip. For example, the electronic device 200 may adjust the transmit power of the physical antenna by using a multi-stage amplifier inside the chip.

For example, the electronic device 200 may shield the multi-stage amplifier inside the chip by adjusting a value of a register, so that the transmit power of the physical antenna is the first transmit power, and in this case, the physical antenna may be considered as the logical first antenna. The electronic device 200 may alternatively adjust the value of the register, so that the transmit power of the physical antenna is the second transmit power, and in this case, the physical antenna may be considered as the logical second antenna. The first transmit power is greater than the second transmit power.

In another possible implementation, the electronic device 200 may alternatively adjust the transmit power of the physical antenna by using a peripheral circuit outside the chip.

The first antenna and the second antenna in embodiments of this application may be the physical first antenna and the physical second antenna, or may be the logical first antenna and the logical second antenna.

In embodiments of this application, a same effect may be achieved when the electronic device 200 switches between the logical first antenna and the logical second antenna and the electronic device 200 switches, by using a radio frequency switch, between the physical first antenna and the physical second antenna.

With reference to the foregoing examples, an example in which the first distance is 5 meters and the second distance is 0.3 meters is used. When the electronic device uses the strong antenna, if a distance between the electronic device (located at a circle center shown in FIG. 6) and another electronic device is less than the first distance (for example, the another electronic device is located at a position 1 shown in FIG. 6), the electronic device may communicate with the another electronic device; or when the electronic device uses the weak antenna, if a distance between the electronic device (located at the circle center shown in FIG. 6) and the another electronic device is less than the second distance (for example, the another electronic device is located at a position 2 shown in FIG. 6), the electronic device may communicate with the another electronic device.

Correspondingly, when the antenna of the electronic device is configured with the first transmit power, if the distance between the electronic device (located at the circle center shown in FIG. 6) and the another electronic device is less than the first distance (for example, the mobile device is located at the position 1 shown in FIG. 6), the electronic device may communicate with the another electronic device; or when the antenna of the electronic device is configured with the second transmit power, if the distance between the electronic device (located at the circle center shown in FIG. 6) and the another electronic device is less than the second distance (for example, the mobile device is located at the position 2 shown in FIG. 6), the electronic device may communicate with the another electronic device.

In an actual operation, precision of the first distance and the second distance is not that accurate, and an error may exist. In this way, the first distance or the second distance presents a range instead of a precise numerical distance in the actual operation. In addition, in different environments, even if a same antenna and a same transmit power are used, the first distance and the second distance may be different.

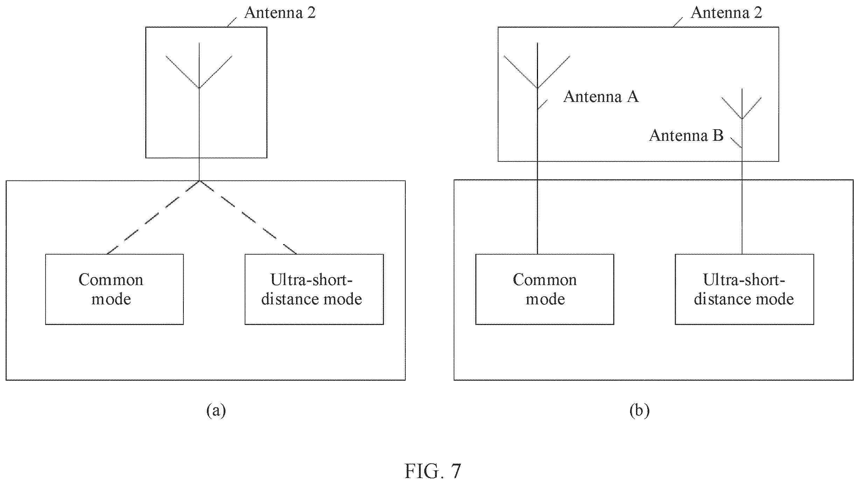

In some embodiments, as shown in (a) in FIG. 7, the antenna 2 in FIG. 3 may include a plurality of different working modes, for example, including working modes such as a common mode and an ultra-short-distance mode. The transmit power of the antenna 2 is different in different working modes. For example, in the common mode, the transmit power of the antenna 2 is large, and the electronic device can communicate with another electronic device at a long distance. For another example, in the ultra-short-distance mode, the transmit power of the antenna 2 is small, and the electronic device can communicate with another electronic device at a short distance.

In some other embodiments, as shown in (b) in FIG. 7, the antenna 2 may include two different antennas: the antenna A and the antenna B. Because the transmit power of the antenna A is large, when communication is performed by using the antenna A, the electronic device can communicate with another electronic device at a long distance. It may also be considered that the antenna 2 currently works in the foregoing common mode. Because the transmit power of the antenna B is small, when communication is performed by using the antenna B, the electronic device can communicate with another electronic device at a short distance. It may also be considered that the antenna 2 currently works in the foregoing ultra-short-distance mode.

In other words, in the ultra-short-distance mode, the transmit power of the antenna is small and the communication distance is short; and in the common mode, the transmit power of the antenna is large and the communication distance is long.

An embodiment of this application provides a conference access method. An electronic device of a to-access-party may join a current conference by approaching or touching a conference chairman based on an ultra-short-distance communication manner.

FIG. 8A-1, FIG. 8A-2, and FIG. 8A-3 are a flowchart of a conference access method according to an embodiment of this application. An electronic device 100 is a to-access-party, that is, an electronic device that wants to access a current conference. An electronic device 200 is a conference chairman, and it may be considered that an account of the electronic device 200 on a conference application is an account of a conference creator. The current conference that the electronic device 200 attends is denoted as a conference A.

In the method shown in FIG. 8A-1, FIG. 8A-2, and FIG. 8A-3, the electronic device 100 includes a first antenna and a second antenna. The first antenna is a strong antenna, and the second antenna is a weak antenna. A first transmit distance for transmitting a signal by the first antenna is greater than a second transmit distance for transmitting a signal by the second antenna, and the second transmit distance is less than or equal to a preset secure distance. The electronic device 200 includes a third antenna and a fourth antenna. The third antenna is a strong antenna, and the fourth antenna is a weak antenna. A third transmit distance for transmitting a signal by the third antenna is greater than a fourth transmit distance for transmitting a signal by the fourth antenna, and the fourth transmit distance is less than or equal to the preset secure distance. The preset secure distance is a distance at which a user of the electronic device exchanges secret information with another electronic device by using the electronic device. For example, the preset secure distance may be 30 cm.

As shown in FIG. 8A-1, FIG. 8A-2, and FIG. 8A-3, the conference access method provided in this embodiment of this application includes the following steps.

S801a: The electronic device 100 receives a first input.

In some embodiments, after starting the conference application in response to an operation of the user, the electronic device 100 receives the first input.

The conference application indicates an application that can perform a conference in a form of audio or videos. For example, the conference application may be Huawei Meetime, a WeChat audio and video call, or another application that can perform a conference. A type of the conference application is not limited in this embodiment of this application.

In some embodiments, the first input is that the user taps an option "touch to access a conference" in the conference application. The first input may alternatively be a voice input, a gesture input, or an input in another form after the electronic device 100 starts the conference application. This is not limited in this embodiment of this application.

In some other embodiments, the electronic device 100 may directly receive the first input. In other words, the electronic device 100 may receive the first input when displaying a home screen or another application screen.

For example, the first input may be a voice input, a specific gesture input, a touch operation, or an input in another form of "touch to access a conference". This is not limited in this embodiment of this application.

In this embodiment of this application, the first input indicates that the user on the side of the electronic device 100 wants to access the current conference.

It may be understood that, that the user on the side of the electronic device 100 wants to access the current conference means that the user expects that the electronic device 100, a login account on the electronic device 100, or a login account of the conference application on the electronic device 100 may access the current conference.

S802a: The electronic device 100 broadcasts a first message by using the first antenna, where the first message includes a conference joining request and an identity (identity, ID) of the electronic device 100.

In some embodiments, when receiving the first input, the electronic device 100 broadcasts the first message by using the first antenna, where the first message includes the conference joining request and the ID of the electronic device 100. Because the transmit distance of the first antenna is long, an electronic device that is far from the electronic device 100 may also receive the first message.

For example, if the transmit distance of the first antenna is 5 m, all electronic devices within a distance of 5 m away from the electronic device 100 may receive the first message.

The ID of the electronic device 100 represents information that can uniquely identify the electronic device 100. For example, the ID of the electronic device 100 may be information such as a MAC address of the electronic device 100.

In some embodiments, the first message may be a neighborhood aware network (neighborhood aware network, NAN) service discovery frame (service discovery frame, SDF) publish (publish) message or a broadcast message of another type. A type of the first message is not limited in this application.

S803a: The electronic device 200 receives the first message within the transmit distance of the first antenna, obtains the conference joining request and the ID of the electronic device 100, and generates a random key.

Because the electronic device 100 broadcasts the first message by using the first antenna, if the electronic device 200 is located within the transmit distance of the first antenna of the electronic device 100, the electronic device 200 may receive the first message, and further obtain the conference joining request and the ID of the electronic device 100 that are included in the first message.

In this embodiment of this application, the electronic device 200 may further generate the random key. Information is encrypted by using the random key, so that security of subsequent information transmission can be improved.

S804a: The electronic device 200 sends a first response message by using the fourth antenna, where the first response message includes the random key and an ID of the electronic device 200.

The ID of the electronic device 200 represents information that can uniquely identify the electronic device 200. For example, the ID of the electronic device 200 may be information such as a MAC address of the electronic device 200.

In some embodiments, the first response message may further include information such as a conference ID or a conference password of the conference A (a conference that the electronic device 200 attends).

In some embodiments, the first response message may further include basic conference information, for example, a conference subject, a conference introduction, and conference participants.

In some embodiments, the first response message may be a NAN SDF Follow-up message or a broadcast message of another type. A type of the first response message is not limited in this application.

It may be understood that because the electronic device 200 sends the first response message by using the fourth antenna, and the transmit distance of the fourth antenna is short, the electronic device 100 can receive the first response message only when a distance between the electronic device 100 and the electronic device 200 is short, so that a distance-based trust relationship can be established between the electronic device 100 and the electronic device 200. In this trust relationship, secure and reliable data exchange can be implemented.

In this embodiment of this application, the electronic device 200 switches between the third antenna and the fourth antenna in a time-division multiplexing manner. The electronic device 200 maintains normal communication of the conference A by using the third antenna most of the time, and in a small part of time, enables, by using the fourth antenna, the electronic device of the to-access-party to access the conference A by using the access method provided in this embodiment of this application.

As shown in FIG. 9, the electronic device 200 is in normal communication of the conference A most of the time, and in little time, enables, by using the fourth antenna, another electronic device to access the conference A. The electronic device 200 may implement time-division switching between an ultra-short-distance mode and a common mode by switching an antenna, to separately transmit call data and ultra-short-distance transmission data in different modes at different times. It should be noted that, because a period of time-division switching is in a unit of millisecond, in a switching process, it is difficult for the user to perceive that the electronic device switches between the ultra-short-distance mode and the common mode. In other words, the user may consider that the ultra-short-distance transmission process and the conference call data transmission process occur at the same time.

For example, the electronic device 200 may periodically switch between the third antenna and the fourth antenna. When switching to the third antenna, the electronic device 200 exchanges call data with a server 400 by using a router, to ensure that a conference call is normally performed. When the electronic device 200 switches to the fourth antenna, if another electronic device requests to join the current conference, the electronic device 200 invites, by using a Wi-Fi channel 6, the another electronic device that is quite close to the electronic device 200 to join the current conference.

S805a: The electronic device 100 receives the first response message within the transmit distance of the fourth antenna, and obtains the random key and the ID of the electronic device 200.

In this embodiment of this application, because the electronic device 200 sends the first response message by using the fourth antenna, and the transmit distance of the fourth antenna is short, the electronic device 100 can receive the first response message only when a distance between the electronic device 100 and the electronic device 200 is short.

Further, the electronic device 100 obtains the random key and the ID of the electronic device 200 that are in the first response message.

In some embodiments, the electronic device 100 may be located within the transmit distance of the fourth antenna in a manner in which the electronic device 100 approaches the electronic device 200, or in a manner in which the electronic device 200 approaches the electronic device 100, or in a manner in which the electronic device 100 and the electronic device 200 approach each other.

In some other embodiments, the electronic device 100 may be located within the transmit distance of the fourth antenna in a manner in which the electronic device 100 touches the electronic device 200.

In some embodiments, the electronic device 100 may further obtain information such as the conference ID or the conference password of the conference A.

S806a: The electronic device 100 receives a second input used to indicate to join the conference, and encrypts a SIM card number of the electronic device 100 and the account of the electronic device 100 on the conference application by using the random key.

In some embodiments, after receiving the first response message, the electronic device 100 may directly receive the second input used to indicate to join the conference.

In some other embodiments, after receiving the first response message, the electronic device 100 may display a part or all of content of the first response message, and after the user views and confirms the first response message, receive the second input used to indicate to join the conference.

As shown in FIG. 10, after receiving the first response message, the electronic device 100 may display the ID of the electronic device 200 on a screen of the electronic device 100, and may further display information such as the conference ID of the conference A. When the user on the side of the electronic device 100 views and confirms that the conference in which the electronic device 200 serves as the conference chairman is a conference that the electronic device 100 is to join, the second input is received.

Optionally, the second input may be a touch operation, a voice input, a gesture input, or an input in another form. This is not limited in this application.

In this embodiment of this application, after receiving the second input, the electronic device 100 may encrypt the SIM card number of the electronic device 100 and the account of the electronic device 100 on the conference application by using the obtained random key generated by the electronic device 200.

The SIM card number of the electronic device 100 is used by the server to call back the electronic device 100.

In some embodiments, the account of the electronic device 100 on the conference application represents a login account of the electronic device 100 on the conference application. For example, the account of the electronic device 100 on the conference application may be account information such as a nickname of the Meetime application and a WeChat ID.

If the conference application is WeChat, the account of the electronic device 100 on the conference application is a login WeChat account on the electronic device 100. It may be understood that the electronic device 100 may be added to the conference A by using the account of the electronic device 100 on the conference application.

S807a: The electronic device 100 sends a second message by using the second antenna, where the second message includes the ID of the electronic device 200 and information encrypted by using the random key.

Because the electronic device 100 receives the first response message within the transmit distance of the fourth antenna, it may be considered that a distance between the electronic device 100 and the electronic device 200 is quite short. In this case, the electronic device 100 may send the second message to the electronic device 200 by using the second antenna.

The second message includes the information encrypted by using the random key in S806a and the ID of the electronic device 200.

In this embodiment of this application, the ID of the electronic device 200 may be plaintext, and does not need to be encrypted.

It may be understood that, because the random key is generated by the electronic device 200, only the electronic device 200 can decrypt the information encrypted by using the random key. Even if another electronic device obtains the encrypted information, the another electronic device cannot obtain specific content of the information, so that security in the communication process can be improved.

S808a: The electronic device 200 receives the second message within the transmit distance of the second antenna, and decrypts the second message by using the random key to obtain the SIM card number of the electronic device 100 and the account of the electronic device 100 on the conference application.

In this embodiment of this application, because the electronic device 100 sends the second message by using the second antenna in S807a, the electronic device 200 can receive the second message only when the electronic device 200 is within the transmit distance of the second antenna.

Further, the electronic device 200 may decrypt the encrypted information in the second message by using the random key generated by the electronic device 200, to obtain the SIM card number of the electronic device 100 and the account of the electronic device 100 on the conference application.

It should be noted that, after the electronic device 200 performs S804a, if the second message is received within preset duration, S808a is performed; or if the second message is not received within the preset duration, it indicates that the electronic device 100 does not approach the electronic device 200. In other words, the electronic device 100 does not intend to join the conference that the electronic device 200 attends, and therefore the electronic device 100 directly exits, and the process ends.

S809a: The electronic device 200 receives a third input used to indicate consent.

In some embodiments, after receiving the second message, the electronic device 200 directly receives the third input used to indicate consent.

For example, when the conference A that the electronic device 200 attends has a low permission or has no permission, for example, a public-interest conference that introduces garbage classification or the like, the user on the side of the electronic device 200 expects more conference participants, and the electronic device 200 may directly receive the third input used to indicate consent.

In some other embodiments, after receiving the second message, the electronic device 200 displays information such as the SIM card number of the electronic device 100 and the account of the electronic device 100 on the conference application that are in the second message, and after the user views and confirms the information, the third input used to indicate consent is received.

For example, when the conference that the electronic device 200 attends has a high permission, for example, when confidential content is discussed in the conference that the electronic device 200 attends, the electronic device 200 needs to present, to the user, related information of the electronic device of the to-access-party. As shown in FIG. 11, only after the user views and confirms the information, and taps a control "Agree", the electronic device 200 can receive the third input used to indicate consent.

Optionally, the third input may be a touch operation, a voice input, a gesture input, or an input in another form. This is not limited in this application.

In this embodiment of this application, only after receiving the third input used to indicate consent, the electronic device 200 sends the third message to the server, that is, performs subsequent steps such as S810a. If the electronic device 200 receives the third input used to indicate rejection, the method process ends, and the electronic device 100 does not join the conference A.

It should be noted that, in some embodiments, step S809a may be omitted, and subsequent steps S810a to S814a are directly performed. For example, after receiving the second message, the electronic device 200 (in this case, the electronic device 200 may be the conference chairman, or may be a conference member that is not the conference chairman) may directly send the third message by using the third antenna and by using an encryption mechanism provided by the conference application for the conference. In this case, the current conference has no permission restriction (that is, anyone can join the current conference) and does not require approval by the conference chairman. In this case, the electronic device of the to-access-party may access the current conference by touching any electronic device that participates in the conference. This is more convenient.

S810a: The electronic device 200 sends the third message by using the third antenna and by using the encryption mechanism provided by the conference application for the conference, where the third message includes the SIM card number of the electronic device 100, the account of the electronic device 100 on the conference application, the account of the electronic device 200 on the conference application, and the conference ID.

In this embodiment of this application, after receiving the third input used to indicate consent, the electronic device 200 may send the third message by using the third antenna and by using the encryption mechanism provided by the conference application for the conference.

In some embodiments, the conference application may provide a specific encryption mechanism for each conference in the conference application, to ensure that a person outside the conference cannot obtain conference information during normal communication of the conference, thereby further ensuring conference security.

For example, if the electronic device 200 currently performs the conference A by using the WeChat application, the WeChat application may provide a specific encryption mechanism for the conference A. In this embodiment of this application, a specific manner of the encryption mechanism is not limited.

In some embodiments, the third message includes the SIM card number of the electronic device 100, the account of the electronic device 100 on the conference application, the account of the electronic device 200 on the conference application, and the conference ID.

S811a: The server 400 receives the third message, and obtains the SIM card number of the electronic device 100, the account of the electronic device 100 on the conference application, the account of the electronic device 200 on the conference application, and the conference ID by using a decryption mechanism provided by the conference application for the conference.

It may be understood that, if the conference application provides a specific encryption mechanism for the conference, the server corresponding to the conference application may provide a decryption mechanism for the conference, and the encryption mechanism corresponds to the decryption mechanism.

In this embodiment of this application, the server 400 obtains specific information in the received third message by using the corresponding decryption mechanism.

S812a: The server 400 determines whether the account of the electronic device 200 on the conference application is a chairman of the conference corresponding to the conference ID.

In this embodiment of this application, the server 400 determines, based on the obtained account of the electronic device 200 on the conference application and the obtained conference ID, whether the account of the electronic device 200 on the conference application is the chairman of the conference corresponding to the conference ID.

In some embodiments, the server 400 stores a list of correspondences between conference IDs and accounts of conference chairmen on the conference application, and the server 400 determines, by using the list, whether the account of the electronic device 200 on the conference application is the chairman of the conference corresponding to the conference ID.

S813a: If the account of the electronic device 200 on the conference application is the chairman of the conference corresponding to the conference ID, call back the SIM card number of the electronic device 100.

In this embodiment of this application, if the account of the electronic device 200 on the conference application is the chairman of the conference corresponding to the conference ID, the server 400 calls back the electronic device 100 based on the obtained SIM card number of the electronic device 100.

In some other embodiments, if the account of the electronic device 200 on the conference application is not the chairman of the conference corresponding to the conference ID, the process ends.

S814a: The electronic device 100 is connected, and joins the conference by using the first antenna.

In this embodiment of this application, after the server 400 calls back the SIM card number of the electronic device 100, the electronic device 100 is connected, and the electronic device 100 joins the conference by using the first antenna, that is, joins the conference A.

Optionally, after the electronic device 100 accesses the conference A, if the user of the electronic device 100 finds that the user does not need to access the conference A or wants to exit the conference A, the user may hang up the conference A at any time, so that the electronic device 100 exits the conference A. For example, the user may exit the conference application by tapping a control "Hang-up". The user may also exit the conference in another manner such as entering a voice input "Exit the conference". A manner in which the electronic device exits the conference is not limited in this embodiment of this application.

Optionally, the electronic device 100 may switch to the first antenna after S807a, or may switch to the first antenna in S814a. This is not limited in this embodiment of this application.

FIG. 8B-1, FIG. 8B-2, and FIG. 8B-3 are a flowchart of another conference access method according to an embodiment of this application. An electronic device 100 is a to-access-party, an electronic device 200 is a conference chairman, and a current conference that the electronic device 200 attends is denoted as a conference A.

In the method shown in FIG. 8B-1, FIG. 8B-2, and FIG. 8B-3, the electronic device 100 includes a first antenna and a second antenna. The first antenna is a strong antenna, and the second antenna is a weak antenna. A first transmit distance for transmitting a signal by the first antenna is greater than a second transmit distance for transmitting a signal by the second antenna, and the second transmit distance is less than or equal to a preset secure distance. The electronic device 200 includes a third antenna and a fourth antenna. The third antenna is a strong antenna, and the fourth antenna is a weak antenna. A third transmit distance for transmitting a signal by the third antenna is greater than a fourth transmit distance for transmitting a signal by the fourth antenna, and the fourth transmit distance is less than or equal to the preset secure distance. The preset secure distance is a distance at which a user of the electronic device exchanges secret information with another electronic device by using the electronic device. For example, the preset secure distance may be 30 cm.

As shown in FIG. 8B-1, FIG. 8B-2, and FIG. 8B-3, the conference access method provided in this embodiment of this application includes the following steps.

S801b: The electronic device 100 receives a first input.

S801b is the same as S801a. For details, refer to the description of S801a. Details are not described herein again.

S802b: The electronic device 100 broadcasts a first message by using the second antenna, where the first message includes a conference joining request and an ID of the electronic device 100.

In this embodiment of this application, the electronic device 100 may broadcast the first message by using the second antenna (a weak antenna).

It may be understood that, because the transmit distance of the second antenna is short, a distance between an electronic device that can receive the first message and the electronic device 100 is short.

S803b: The electronic device 200 receives the first message within the transmit distance of the second antenna, obtains the conference joining request and the ID of the electronic device 100, and generates a random key.

Because the transmit distance of the second antenna is short, that the electronic device 200 receives the first message within the transmit distance of the second antenna indicates that a distance between the electronic device 200 and the electronic device 100 is short.

In some embodiments, the electronic device 200 may be located within the transmit distance of the second antenna in a manner in which the electronic device 100 approaches the electronic device 200, or in a manner in which the electronic device 200 approaches the electronic device 100, or in a manner in which the electronic device 100 and the electronic device 200 approach each other.

In some other embodiments, the electronic device 200 may be located within the transmit distance of the second antenna in a manner in which the electronic device 100 touches the electronic device 200.

S804b: The electronic device 200 sends a first response message by using the fourth antenna, where the first response message includes the random key and an ID of the electronic device 200.

In this embodiment of this application, the random key may be sent in plaintext. Because the distance between the electronic device 100 and the electronic device 200 is less than or equal to the preset secure distance, it may be considered that sending the random key in plaintext is secure.

S805b: The electronic device 100 receives the first response message within the transmit distance of the fourth antenna, and obtains the random key and the ID of the electronic device 200.

S804b and S805b are similar to S804a and S805a. For details, refer to descriptions of S804a and S805a. Details are not described herein again.

S806b: The electronic device 100 encrypts a SIM card number of the electronic device 100 and an account of the electronic device 100 on the conference application by using the random key.

In this embodiment of this application, because the electronic device 100 approaches the electronic device 200, it may be determined that the electronic device 100 wants to join the conference A that the electronic device 200 attends. In this way, after S805b, the electronic device 100 may directly encrypt the SIM card number of the electronic device 100 and the account of the electronic device 100 on the conference application by using the random key, and does not need to receive a second input used to indicate to join the conference.

Optionally, after receiving the second input used to indicate to join the conference, the electronic device 100 may also encrypt the SIM card number of the electronic device 100 and the account of the electronic device 100 on the conference application by using the random key, to further ensure that the conference that the electronic device joins is correct.

S807b: The electronic device 100 sends a second message by using the first antenna, where the second message includes the ID of the electronic device 200 and information encrypted by using the random key.

In this embodiment of this application, the electronic device 100 sends the second message by using the first antenna. In this way, the distance between the electronic device 100 and the electronic device 200 do not need to be always within the transmit distance of the second antenna of the electronic device 100, and the electronic device 100 may leave the electronic device 200 for a distance after initially approaching the electronic device 200, so that it is convenient for another electronic device to approach the electronic device 200 to join the conference A, thereby improving operation convenience.

S808b: The electronic device 200 receives the second message within the transmit distance of the first antenna, and decrypts the second message by using the random key to obtain the SIM card number of the electronic device 100 and the account of the electronic device 100 on the conference application.

Because the electronic device 100 sends the second message by using the first antenna, the electronic device 200 can receive the second message only within the transmit distance of the first antenna.

S809b: The electronic device 200 receives a third input used to indicate consent.

In some embodiments, this step may be omitted, and a subsequent step is directly performed.

S810b: The electronic device 200 sends the third message by using the third antenna and by using the encryption mechanism provided by the conference application for the conference, where the third message includes the SIM card number of the electronic device 100, the account of the electronic device 100 on the conference application, the account of the electronic device 200 on the conference application, and the conference ID.

S811b: The server 400 receives the third message, and obtains the SIM card number of the electronic device 100, the account of the electronic device 100 on the conference application, the account of the electronic device 200 on the conference application, and the conference ID by using a decryption mechanism provided by the conference application for the conference.

S812b: The server 400 determines whether the account of the electronic device 200 on the conference application is a chairman of the conference corresponding to the conference ID.

S813b: If the account of the electronic device 200 on the conference application is the chairman of the conference corresponding to the conference ID, call back the SIM card number of the electronic device 100.

S814b: The electronic device 100 is connected, and joins the conference by using the first antenna.

S809b to S814b are the same as S809a to S814a. For details, refer to descriptions of S809a to S814a. Details are not described herein again.

It can be learned from the foregoing descriptions that, a difference between the conference access method shown in FIG. 8A-1, FIG. 8A-2, and FIG. 8A-3 and the conference access method shown in FIG. 8B-1, FIG. 8B-2, and FIG. 8B-3 lies in that: in FIG. 8A-1, FIG. 8A-2, and FIG. 8A-3, the electronic device 100 first broadcasts the first message by using the first antenna, and then sends the second message by using the second antenna; and in FIG. 8B-1, FIG. 8B-2, and FIG. 8B-3, the electronic device 100 first broadcasts the first message by using the second antenna, and then sends the second message by using the first antenna.

It may be considered that, in the method shown in FIG. 8A-1, FIG. 8A-2, and FIG. 8A-3, when the distance between the electronic device 100 and the electronic device 200 is long, the electronic device 100 may start to request to join the conference A, and then the electronic device 100 approaches the electronic device 200, to join the conference A. In the method shown in FIG. 8B-1, FIG. 8B-2, and FIG. 8B-3, when the electronic device 100 requests to join the conference A, the distance between the electronic device 100 and the electronic device 200 is less than or equal to the preset secure distance, and then the electronic device 100 may leave the electronic device 200 for a specific distance, to continue to complete a process of joining the conference A.

Based on the methods shown in FIG. 8A-1, FIG. 8A-2, and FIG. 8A-3 and FIG. 8B-1, FIG. 8B-2, and FIG. 8B-3, it may be understood that, in the conference access method provided in embodiments of this application, a specific occasion on which the to-access-party approaches the conference chairman is not limited, provided that the to-access-party approaches or touches the conference chairman in a conference access process.

In the methods shown in FIG. 8A-1, FIG. 8A-2, and FIG. 8A-3 and FIG. 8B-1, FIG. 8B-2, and FIG. 8B-3, the electronic device 100 and the electronic device 200 each include two antennas, and different transmit distances are implemented by using different antennas.

In some embodiments, the electronic device 100 may use only one of the first antenna and the second antenna in the conference access process, and implement different transmit distances by adjusting the transmit power of the antenna. Likewise, the electronic device 200 may also use only one of the third antenna and the fourth antenna, and implement different transmit distances by adjusting the transmit power of the antenna.

In some other embodiments, each of the electronic device 100 and the electronic device 200 may have only one antenna, and implement different transmit distances by adjusting the transmit power of the antenna. For example, the electronic device 100 includes only the first antenna, and the electronic device 200 includes only the third antenna.

With reference to FIG. 8C-1, FIG. 8C-2, and FIG. 8C-3, the following describes another conference access method according to an embodiment of this application. An electronic device 100 is a to-access-party, an electronic device 200 is a conference chairman, and a current conference that the electronic device 200 attends is denoted as a conference A.

In the method shown in FIG. 8C-1, FIG. 8C-2, and FIG. 8C-3, the electronic device 100 includes only the first antenna, and may implement different transmit distances by adjusting the transmit power of the first antenna. For example, the transmit power of the first antenna includes a first transmit power and a second transmit power, and the first transmit power is greater than the second transmit power. In this way, it may be considered that the first antenna at the first transmit power is a strong antenna, and the first antenna at the second transmit power is a weak antenna. Similarly, the electronic device 200 includes only the third antenna, the transmit power of the third antenna includes a third transmit power and a fourth transmit power, and the third transmit power is greater than the fourth transmit power. In this way, it may be considered that the third antenna at the third transmit power is a strong antenna, and the third antenna at the fourth transmit power is a weak antenna.

As shown in FIG. 8C-1, FIG. 8C-2, and FIG. 8C-3, the method includes the following steps.

S801c: The electronic device 100 receives a first input.

S801c is the same as S801a. For details, refer to the description of S801a. Details are not described herein again.

S802c: The electronic device 100 broadcasts a first message by using the first antenna at the first transmit power, where the first message includes a conference joining request and an ID of the electronic device 100.

In this embodiment of this application, the first antenna at the first transmit power is similar to the strong antenna (the first antenna) in S802a, and a difference lies only in an implementation of the strong antenna. Therefore, it may be considered that S802c is similar to S802a. For specific descriptions, refer to S802a. Details are not described herein again.

S803c: The electronic device 200 receives the first message within the transmit distance at the first transmit power, obtains the conference joining request and the ID of the electronic device 100, and generates a random key.

S804c: The electronic device 200 sends a first response message by using the third antenna at the fourth transmit power, where the first response message includes the random key and an ID of the electronic device 200.

In this embodiment of this application, the third antenna at the fourth transmit power is similar to the weak antenna (the fourth antenna) in S804a, and a difference lies only in an implementation of the weak antenna. Therefore, it may be considered that S804c is similar to S804a. For specific descriptions, refer to S804a. Details are not described herein again.

S805c: The electronic device 100 receives the first response message within the transmit distance of the third antenna at the fourth transmit power, and obtains the random key and the ID of the electronic device 200.

S806c: The electronic device 100 receives a second input used to indicate to join the conference, and encrypts a SIM card number of the electronic device 100 and the account of the electronic device 100 on the conference application by using the random key.

S807c: The electronic device 100 sends a second message by using the first antenna at the second transmit power, where the second message includes the ID of the electronic device 200 and information encrypted by using the random key.

In this embodiment of this application, the first antenna at the second transmit power is similar to the weak antenna (the second antenna) in S807a, and a difference lies only in an implementation of the weak antenna. Therefore, it may be considered that S807c is similar to S807a. For specific descriptions, refer to S807a. Details are not described herein again.

S808c: The electronic device 200 receives the second message within the transmit distance of the first antenna at the second transmit power, and decrypts the second message by using the random key to obtain the SIM card number of the electronic device 100 and the account of the electronic device 100 on the conference application.

S809c: The electronic device 200 receives a third input used to indicate consent.

In some embodiments, this step may be omitted, and a subsequent step is directly performed.

S810c: The electronic device 200 sends the third message by using the third antenna at the third transmit power and by using the encryption mechanism provided by the conference application for the conference, where the third message includes the SIM card number of the electronic device 100, the account of the electronic device 100 on the conference application, the account of the electronic device 200 on the conference application, and the conference ID.

In this embodiment of this application, the third antenna at the third transmit power is similar to the strong antenna (the third antenna) in S810a, and a difference lies only in an implementation of the strong antenna. Therefore, it may be considered that S810c is similar to S810a. For specific descriptions, refer to S810a. Details are not described herein again.

S811c: The server 400 receives the third message, and obtains the SIM card number of the electronic device 100, the account of the electronic device 100 on the conference application, the account of the electronic device 200 on the conference application, and the conference ID by using a decryption mechanism provided by the conference application for the conference.

S812c: The server 400 determines whether the account of the electronic device 200 on the conference application is a chairman of the conference corresponding to the conference ID.

S813c: If the account of the electronic device 200 on the conference application is the chairman of the conference corresponding to the conference ID, call back the SIM card number of the electronic device 100.

S814c: The electronic device 100 is connected, and joins the conference by using the first antenna at the first transmit power.

The method shown in FIG. 8C-1, FIG. 8C-2, and FIG. 8C-3 is similar to the method shown in FIG. 8A-1, FIG. 8A-2, and FIG. 8A-3. The first antenna in FIG. 8A-1, FIG. 8A-2, and FIG. 8A-3 is replaced with the first antenna at the first transmit power in FIG. 8C-1, FIG. 8C-2, and FIG. 8C-3, the second antenna in FIG. 8A-1, FIG. 8A-2, and FIG. 8A-3 is replaced with the first antenna at the second transmit power in FIG. 8C-1, FIG. 8C-2, and FIG. 8C-3, the third antenna in FIG. 8A-1, FIG. 8A-2, and FIG. 8A-3 is replaced with the third antenna at the third transmit power in FIG. 8C-1, FIG. 8C-2, and FIG. 8C-3, and the fourth antenna in FIG. 8A-1, FIG. 8A-2, and FIG. 8A-3 is replaced with the third antenna at the fourth transmit power in FIG. 8C-1, FIG. 8C-2, and FIG. 8C-3. In the method shown in FIG. 8A-1, FIG. 8A-2, and FIG. 8A-3, different transmit distances are implemented by switching between different antennas. In the method shown in FIG. 8C-1, FIG. 8C-2, and FIG. 8C-3, different transmit distances are implemented by adjusting a transmit power of a same antenna.

Similarly, for the method described in FIG. 8B-1, FIG. 8B-2, and FIG. 8B-3, a new schematic flowchart (not shown) may be obtained through the same replacement. Similar to the method shown in FIG. 8B-1, FIG. 8B-2, and FIG. 8B-3, different from implementing different transmit distances by switching between different antennas in FIG. 8B-1, FIG. 8B-2, and FIG. 8B-3, in the new schematic flowchart, different transmit distances are implemented by adjusting a transmit power of a same antenna. It may also be considered that effects of different antennas are implemented by adjusting a transmit power of a same antenna.

It may be understood that the foregoing methods may be combined in any manner. For example, the electronic device 100 may include the strong antenna and the weak antenna (the first antenna and the second antenna), the electronic device 200 includes only the third antenna, and different transmit distances are implemented by adjusting the transmit power of the third antenna. For another example, the electronic device 200 may include the strong antenna and the weak antenna (the third antenna and the fourth antenna), the electronic device 100 includes only the first antenna, and different transmit distances are implemented by adjusting the transmit power of the first antenna. This is not limited in this embodiment of this application.

It should be noted that, the electronic device 100 is merely an example, and that only one electronic device accesses the conference A in which the electronic device 200 serves as the conference chairman is not limited. A quantity of electronic devices that access the conference A is not limited in this application.

In some embodiments, in addition to the electronic device 200, there may be one or more other electronic devices that participate in the conference A. This is not limited in this application.

By using the methods shown in FIG. 8A-1, FIG. 8A-2, and FIG. 8A-3 to FIG. 8C-1, FIG. 8C-2, and FIG. 8C-3 and the extended methods, the electronic device of the to-access-party can join, based on an ultra-short-distance communication manner by using a natural interaction manner of approaching or touching the electronic device that servers as the conference chairman nearby, the conference that the conference chairman attends. In this process, as shown in FIG. 12, provided that the electronic device 100 of the to-access-party approaches or touches the electronic device 200 serving as the conference chairman, the electronic device 100 may join the conference that the electronic device 200 attends. As shown in FIG. 12, a user Y corresponding to the electronic device 100 is added to conference participant information displayed by the electronic device 200.

For example, there are a plurality of electronic devices that want to access the current conference in a conference room 1, an electronic device 1 used by a user 1 serves as the conference chairman of the current conference, and the plurality of electronic devices (for example, electronic devices 2 to 10) that want to access the current conference may access the current conference conveniently and quickly by separately approaching or touching the electronic device 1.

It should be noted that, in some embodiments, if the current conference has no permission, and it is expected that as many people as possible can join the current conference, S809a, S809b, and S809c may be omitted, and the electronic device 200 may directly perform subsequent steps when the third input used to indicate consent is not received, so that the electronic device 100 joins the current conference.

It should be further noted that, in some embodiments, the electronic device 200 may alternatively be another conference participant that is not the conference chairman. In this case, steps S809a, S809b, and S809c may also be omitted.

The conference access method provided in this embodiment of this application is easy to operate, consumes a short time, and has better user experience. In addition, the method decreases operation complexity, and resolves a problem of touch by mistake. In addition, in the conference access process, the electronic devices communicate with each other in the ultra-short-distance communication manner, and a communication distance is quite short. Therefore, secure and reliable data exchange can be established between both communication parties, thereby ensuring security.

The foregoing methods shown in FIG. 8A-1, FIG. 8A-2, and FIG. 8A-3 to FIG. 8C-1, FIG. 8C-2, and FIG. 8C-3 and the extended methods describe a process in which the to-access-party accesses the current conference by approaching or touching the conference chairman. In some embodiments, the to-access-party may also access the current conference by approaching or touching a conference member. Herein, the conference member is a conference participant other than the conference chairman. With reference to FIG. 13A-1, FIG. 13A-2, FIG. 13A-3, and FIG. 13A-4 to FIG. 13C-1, FIG. 13C-2, FIG. 13C-3, and FIG. 13C-4, the following specifically describes a process in which the electronic device of the to-access-party joins the current conference based on the ultra-short-distance communication manner by approaching or touching a conference participant.

FIG. 13A-1, FIG. 13A-2, FIG. 13A-3, and FIG. 13A-4 are a flowchart of a conference access method according to an embodiment of this application. An electronic device 100 is a to-access-party, an electronic device 200 is a conference member, an electronic device 300 is a conference chairman, and a conference that the electronic device 200 and the electronic device 300 attend is denoted as a conference A.

In the method shown in FIG. 13A-1, FIG. 13A-2, FIG. 13A-3, and FIG. 13A-4, the electronic device 100 includes a first antenna and a second antenna. The first antenna is a strong antenna, and the second antenna is a weak antenna. A first transmit distance for transmitting a signal by the first antenna is greater than a second transmit distance for transmitting a signal by the second antenna, and the second transmit distance is less than or equal to a preset secure distance. The electronic device 200 includes a third antenna and a fourth antenna. The third antenna is a strong antenna, and the fourth antenna is a weak antenna. A third transmit distance for transmitting a signal by the third antenna is greater than a fourth transmit distance for transmitting a signal by the fourth antenna, and the fourth transmit distance is less than or equal to the preset secure distance. The preset secure distance is a distance at which a user of the electronic device exchanges secret information with another electronic device by using the electronic device. For example, the preset secure distance may be 30 cm.

As shown in FIG. 13A-1, FIG. 13A-2, FIG. 13A-3, and FIG. 13A-4, the method includes the following steps.

S901a: The electronic device 100 receives a first input.

S902a: The electronic device 100 broadcasts a first message by using the first antenna, where the first message includes a conference joining request and an ID of the electronic device 100.

S903a: The electronic device 200 receives the first message within the transmit distance of the first antenna, obtains the conference joining request and the ID of the electronic device 100, and generates a random key.

In this embodiment of this application, the electronic device 200 receives the first message broadcast by the electronic device 100, and obtains the conference joining request and the ID of the electronic device 100 based on the first message.

In this embodiment of this application, the electronic device 200 generates a random key. Information is encrypted by using the random key, so that security of subsequent information transmission can be improved.

S904a: The electronic device 200 sends a first response message by using the fourth antenna, where the first response message includes the random key and an ID of the electronic device 200.

S905a: The electronic device 100 receives the first response message within the transmit distance of the fourth antenna, and obtains the random key and the ID of the electronic device 200.

S906a: The electronic device 100 receives a second input used to indicate to join the conference, and encrypts a SIM card number of the electronic device 100 and the account of the electronic device 100 on the conference application by using the random key.

S907a: The electronic device 100 sends a second message by using the second antenna, where the second message includes the ID of the electronic device 200 and information encrypted by using the random key.

S908a: The electronic device 200 receives the second message within the transmit distance of the second antenna, and decrypts the second message by using the random key to obtain the SIM card number of the electronic device 100 and the account of the electronic device 100 on the conference application.

S901a to S908a are similar to S801a to S808a, and a difference lies only in that the conference chairman (the electronic device 200) communicating with the electronic device 100 of the to-access-party is replaced with the conference member (the electronic device 200), and other content remains unchanged. For details, refer to descriptions of S801a to S808a, and details are not described herein again.

S909a: The electronic device 200 sends the third message by using the third antenna and by using the encryption mechanism provided by the conference application for the conference, where the third message includes the SIM card number of the electronic device 100, the account of the electronic device 100 on the conference application, and the account of the electronic device 200 on the conference application.

Because the electronic device 200 receives the second message sent by the electronic device 100, the electronic device 200 sends the third message by using the third antenna and by using the encryption mechanism provided by the conference application for the conference.

Correspondingly, the third message includes the SIM card number of the electronic device 100, the account of the electronic device 100 on the conference application, and the account of the electronic device 200 on the conference application.

Optionally, the third message may further include other information such as a conference ID of the conference A. This is not limited in this embodiment of this application.

S910a: The server 400 receives the third message, and obtains the SIM card number of the electronic device 100, the account of the electronic device 100 on the conference application, and the account of the electronic device 200 on the conference application by using a decryption mechanism provided by the conference application for the conference.

In this embodiment of this application, the server 400 decrypts the received third message by using the decryption mechanism corresponding to the conference, to obtain the SIM card number of the electronic device 100, the account of the electronic device 100 on the conference application, and the account of the electronic device 200 on the conference application.

In some embodiments, if the third message includes the conference ID of the conference A, the server 400 may further obtain the conference ID.

S911a: The server 400 sends the third message to the electronic device 300 by using an encryption mechanism provided by the conference application for the conference.

In some embodiments, the server 400 may determine, based on the account of the electronic device 200 on the conference application (optionally, even further based on the conference ID of the conference A), that the conference chairman of the conference A is the account of the electronic device 300 on the conference application, and then send the third message to the electronic device 300.

In some other embodiments, the server 400 may alternatively determine the conference chairman only based on the conference ID.

After determining the conference chairman, the server 400 may send an encrypted third message to the electronic device 300 serving as the conference chairman.

It may be considered that, that the server 400 sends the third message to the electronic device 300 indicates that the server 400 sends the third message to the conference application that logs in to the electronic device 300.

S912a: The electronic device 300 receives the third message, and obtains the SIM card number of the electronic device 100, the account of the electronic device 100 on the conference application, and the account of the electronic device 200 on the conference application by using a decryption mechanism provided by the conference application for the conference.

Correspondingly, the electronic device 300 receives the encrypted third message, and may obtain, by using the corresponding decryption mechanism, the SIM card number of the electronic device 100, the account of the electronic device 100 on the conference application, and the account of the electronic device 200 on the conference application that are included in the third message.

S913a: The electronic device 300 receives a third input used to indicate consent or rejection.

In some embodiments, after obtaining content of the third message, the electronic device 300 receives the third input.

In some other embodiments, after obtaining the content of the third message, the electronic device 300 displays the content of the third message. For example, the electronic device 300 displays, in a prompt box on the screen, the SIM card number of the electronic device 100, the account of the electronic device 100 on the conference application, and the account of the electronic device 200 on the conference application. Only after the user views and confirms the content of the third message, the electronic device 300 may receive the third input.

Optionally, the third input may be a touch operation, a voice input, a gesture input, or an input in another form. This is not limited in this application.

S914a: The electronic device 300 sends a fourth message to the server 400 by using the encryption mechanism provided by the conference application for the conference, where the fourth message includes third input information corresponding to the third input.

In this embodiment of this application, the third input information may be "Agree", or may be "Reject".

"Agree" indicates that the electronic device 300 allows the electronic device 100 to join the conference A; and "Reject" indicates that the electronic device 300 does not allow the electronic device 100 to join the conference A.

S915a: If the third input indicating consent is received, the server 400 calls back the SIM card number of the electronic device 100; or if the third input indicating rejection is received, the server 400 notifies the electronic device 100 that the conference joining request is rejected by the conference chairman.

S916a: The electronic device 100 is connected, and joins the conference by using the first antenna.

If the third input indicating consent is received, the server 400 calls back the SIM card number of the electronic device 100, then the electronic device 100 is connected, and the electronic device 100 joins the conference A by using the first antenna.

If the third input indicating rejection is received, the server 400 notifies the electronic device 100 that the conference joining request is rejected by the conference chairman, the process ends, and S916a is no longer performed.

Optionally, after the electronic device 100 accesses the conference A, if the user of the electronic device 100 finds that the user does not need to access the conference A or wants to exit the conference A, the user may hang up the conference A at any time, so that the electronic device 100 exits the conference A. For example, the user may exit the conference application by tapping a control "Hang-up". The user may also exit the conference in another manner such as entering a voice input "Exit the conference". A manner in which the electronic device exits the conference is not limited in this embodiment of this application.

Optionally, the electronic device 100 may switch to the first antenna after S907a, or may switch to the first antenna in S916a. This is not limited in this embodiment of this application.

FIG. 13B-1, FIG. 13B-2, FIG. 13B-3, and FIG. 13B-4 are a flowchart of another conference access method according to an embodiment of this application. An electronic device 100 is a to-access-party, an electronic device 200 is a conference member, an electronic device 300 is a conference chairman, and a conference that the electronic device 200 and the electronic device 300 attend is denoted as a conference A.

In the method shown in FIG. 13B-1, FIG. 13B-2, FIG. 13B-3, and FIG. 13B-4, the electronic device 100 includes a first antenna and a second antenna. The first antenna is a strong antenna, and the second antenna is a weak antenna. A first transmit distance for transmitting a signal by the first antenna is greater than a second transmit distance for transmitting a signal by the second antenna, and the second transmit distance is less than or equal to a preset secure distance. The electronic device 200 includes a third antenna and a fourth antenna. The third antenna is a strong antenna, and the fourth antenna is a weak antenna. A third transmit distance for transmitting a signal by the third antenna is greater than a fourth transmit distance for transmitting a signal by the fourth antenna, and the fourth transmit distance is less than or equal to the preset secure distance. The preset secure distance is a distance at which a user of the electronic device exchanges secret information with another electronic device by using the electronic device. For example, the preset secure distance may be 30 cm.

As shown in FIG. 13B-1, FIG. 13B-2, FIG. 13B-3, and FIG. 13B-4, the conference access method provided in this embodiment of this application includes the following steps.

S901b: The electronic device 100 receives a first input.

S902b: The electronic device 100 broadcasts a first message by using the second antenna, where the first message includes a conference joining request and an ID of the electronic device 100.

S903b: The electronic device 200 receives the first message within the transmit distance of the second antenna, obtains the conference joining request and the ID of the electronic device 100, and generates a random key.

S904b: The electronic device 200 sends a first response message by using the fourth antenna, where the first response message includes the random key and an ID of the electronic device 200.

S905b: The electronic device 100 receives the first response message within the transmit distance of the fourth antenna, and obtains the random key and the ID of the electronic device 200.

S906b: The electronic device 100 encrypts a SIM card number of the electronic device 100 and an account of the electronic device 100 on the conference application by using the random key.

S907b: The electronic device 100 sends a second message by using the first antenna, where the second message includes the ID of the electronic device 200, the SIM card number of the electronic device 100, and the account of the electronic device 100 on the conference application that are encrypted by using the random key.

S908b: The electronic device 200 receives the second message within the transmit distance of the first antenna, and decrypts the second message by using the random key to obtain the SIM card number of the electronic device 100 and the account of the electronic device 100 on the conference application.

S901b to S908b are similar to S801b to S808b, and a difference lies only in that the conference chairman (the electronic device 200) communicating with the electronic device 100 of the to-access-party is replaced with the conference member (the electronic device 200), and other content remains unchanged. For details, refer to descriptions of S801b to S808b, and details are not described herein again.

S909b: The electronic device 200 sends the third message by using the third antenna and by using the encryption mechanism provided by the conference application for the conference, where the third message includes the SIM card number of the electronic device 100, the account of the electronic device 100 on the conference application, and the account of the electronic device 200 on the conference application.

S910b: The server 400 receives the third message, and obtains the SIM card number of the electronic device 100, the account of the electronic device 100 on the conference application, and the account of the electronic device 200 on the conference application by using a decryption mechanism provided by the conference application for the conference.

S911b: The server 400 sends the third message to the electronic device 300 by using an encryption mechanism provided by the conference application for the conference.

S912b: The electronic device 300 receives the third message, and obtains the SIM card number of the electronic device 100, the account of the electronic device 100 on the conference application, and the account of the electronic device 200 on the conference application by using a decryption mechanism provided by the conference application for the conference.

S913b: The electronic device 300 receives a third input used to indicate consent or rejection.

S914b: The electronic device 300 sends a fourth message to the server 400 by using the encryption mechanism provided by the conference application for the conference, where the fourth message includes third input information corresponding to the third input.

S915b: If the third input indicating consent is received, the server 400 calls back the SIM card number of the electronic device 100; or if the third input indicating rejection is received, the server 400 notifies the electronic device 100 that the conference joining request is rejected by the conference chairman.

S916b: The electronic device 100 is connected, and joins the conference by using the first antenna.

S909b to S916b are the same as S909a to S916a. For details, refer to the descriptions of S909a to S916a. Details are not described herein again.

It can be learned based on the foregoing content that, a difference between the conference access method shown in FIG. 13A-1, FIG. 13A-2, FIG. 13A-3, and FIG. 13A-4 and the conference access method shown in FIG. 13B-1, FIG. 13B-2, FIG. 13B-3, and FIG. 13B-4 lies in that: in FIG. 13A-1, FIG. 13A-2, FIG. 13A-3, and FIG. 13A-4, the electronic device 100 first broadcasts the first message by using the first antenna, and then sends the second message by using the second antenna; and in FIG. 13B-1, FIG. 13B-2, FIG. 13B-3, and FIG. 13B-4, the electronic device 100 first broadcasts the first message by using the second antenna, and then sends the second message by using the first antenna.

It may be considered that, in the method shown in FIG. 13A-1, FIG. 13A-2, FIG. 13A-3, and FIG. 13A-4, when the distance between the electronic device 100 and the electronic device 200 is long, the electronic device 100 may start to request to join the conference A, and then the electronic device 100 approaches the electronic device 200, to join the conference A. In the method shown in FIG. 13B-1, FIG. 13B-2, FIG. 13B-3, and FIG. 13B-4, when the electronic device 100 requests to join the conference A, the distance between the electronic device 100 and the electronic device 200 is less than or equal to the preset first secure distance, and is also less than or equal to the preset second secure distance, and then the electronic device 100 may leave the electronic device 200 for a specific distance, to continue to complete a process of joining the conference A.

Based on the methods shown in FIG. 13A-1, FIG. 13A-2, FIG. 13A-3, and FIG. 13A-4 and FIG. 13B-1, FIG. 13B-2, FIG. 13B-3, and FIG. 13B-4, it may be understood that, in the conference access method provided in embodiments of this application, a specific occasion on which the to-access-party approaches the conference member is not limited, provided that the to-access-party approaches or touches the conference member in a conference access process.

In the methods shown in FIG. 13A-1, FIG. 13A-2, FIG. 13A-3, and FIG. 13A-4 and FIG. 13B-1, FIG. 13B-2, FIG. 13B-3, and FIG. 13B-4, the electronic device 100 and the electronic device 300 each include two antennas, and different transmit distances are implemented by using different antennas.

In some embodiments, the electronic device 100 may use only one of the first antenna and the second antenna in the conference access process, and implement different transmit distances by adjusting the transmit power of the antenna. Likewise, the electronic device 300 may also use only one of the third antenna and the fourth antenna, and implement different transmit distances by adjusting the transmit power of the antenna.

In some other embodiments, each of the electronic device 100 and the electronic device 200 may have only one antenna, and implement different transmit distances by adjusting the transmit power of the antenna. For example, the electronic device 100 includes only the first antenna, and the electronic device 200 includes only the third antenna.

With reference to FIG. 13C-1, FIG. 13C-2, FIG. 13C-3, and FIG. 13C-4, the following describes another conference access method according to an embodiment of this application. An electronic device 100 is a to-access-party, an electronic device 200 is a conference member, an electronic device 300 is a conference chairman, and a conference that the electronic device 200 and the electronic device 200 attend is a conference A.

In the method shown in FIG. 13C-1, FIG. 13C-2, FIG. 13C-3, and FIG. 13C-4, the electronic device 100 includes only the first antenna, and may implement different transmit distances by adjusting the transmit power of the first antenna. For example, the transmit power of the first antenna includes a first transmit power and a second transmit power, and the first transmit power is greater than the second transmit power. In this way, it may be considered that the first antenna at the first transmit power is a strong antenna, and the first antenna at the second transmit power is a weak antenna. Similarly, the electronic device 200 includes only the third antenna, the transmit power of the third antenna includes a third transmit power and a fourth transmit power, and the third transmit power is greater than the fourth transmit power. In this way, it may be considered that the third antenna at the third transmit power is a strong antenna, and the third antenna at the fourth transmit power is a weak antenna.

As shown in FIG. 13C-1, FIG. 13C-2, FIG. 13C-3, and FIG. 13C-4, the method includes the following steps.

S901c: The electronic device 100 receives a first input.

S902c: The electronic device 100 broadcasts a first message by using the first antenna at the first transmit power, where the first message includes a conference joining request and an ID of the electronic device 100.

S903c: The electronic device 200 receives the first message within the transmit distance of the first antenna at the first transmit power, obtains the conference joining request and the ID of the electronic device 100, and generates a random key.

S904c: The electronic device 200 sends a first response message by using the third antenna at the fourth transmit power, where the first response message includes the random key and an ID of the electronic device 200.

S905c: The electronic device 100 receives the first response message within the transmit distance of the third antenna at the fourth transmit power, and obtains the random key and the ID of the electronic device 200.

S906c: The electronic device 100 receives a second input used to indicate to join the conference, and encrypts a SIM card number of the electronic device 100 and the account of the electronic device 100 on the conference application by using the random key.

S907c: The electronic device 100 sends a second message by using the first antenna at the second transmit power, where the second message includes the ID of the electronic device 200 and information encrypted by using the random key.

S908c: The electronic device 200 receives the second message within the transmit distance of the first antenna at the second transmit power, and decrypts the second message by using the random key to obtain the SIM card number of the electronic device 100 and the account of the electronic device 100 on the conference application.

S909c: The electronic device 200 sends the third message by using the third antenna at the third transmit power and by using the encryption mechanism provided by the conference application for the conference, where the third message includes the SIM card number of the electronic device 100, the account of the electronic device 100 on the conference application, and the account of the electronic device 200 on the conference application.

S910c: The server 400 receives the third message, and obtains the SIM card number of the electronic device 100, the account of the electronic device 100 on the conference application, and the account of the electronic device 200 on the conference application by using a decryption mechanism provided by the conference application for the conference.

S911c: The server 400 sends the third message to the electronic device 300 by using an encryption mechanism provided by the conference application for the conference.

S912c: The electronic device 300 receives the third message, and obtains the SIM card number of the electronic device 100, the account of the electronic device 100 on the conference application, and the account of the electronic device 200 on the conference application by using a decryption mechanism provided by the conference application for the conference.

S913c: The electronic device 300 receives a third input used to indicate consent or rejection.

S914c: The electronic device 300 sends a fourth message to the server 400 by using the encryption mechanism provided by the conference application for the conference, where the fourth message includes third input information corresponding to the third input.

S915c: If the third input indicating consent is received, the server 400 calls back the SIM card number of the electronic device 100; or if the third input indicating rejection is received, the server 400 notifies the electronic device 100 that the conference joining request is rejected by the conference chairman.

S916c: The electronic device 100 is connected, and joins the conference by using the first antenna at the first transmit power.

S901c to S916c are similar to S901a to S916a. The first antenna in S901a to S916a is replaced with the first antenna at the first transmit power in S901c to S916c, the second antenna in S901a to S916a is replaced with the first antenna at the second transmit power in S901c to S916c, the third antenna in S901a to S916a is replaced with the third antenna at the third transmit power in S901c to S916c, and the fourth antenna in S901a to S916a is replaced with the third antenna at the fourth transmit power in S901c to S916c. For other content, refer to descriptions in S90 la to S916a. Details are not described herein again.

For S901b to S916b in FIG. 13B-1, FIG. 13B-2, FIG. 13B-3, and FIG. 13B-4, a new schematic flowchart (not shown) may be obtained through the same replacement. The method in the new schematic flowchart is similar to the method in FIG. 13B-1, FIG. 13B-2, FIG. 13B-3, and FIG. 13B-4. Different from implementing different transmit distances by switching between different antennas in FIG. 13B-1, FIG. 13B-2, FIG. 13B-3, and FIG. 13B-4, in the new schematic flowchart, different transmit distances are implemented by adjusting a transmit power of a same antenna. It may also be considered that effects of different antennas are implemented by adjusting a transmit power of a same antenna.

It may be understood that the foregoing described methods may be combined in any manner. For example, the electronic device 100 may include the strong antenna and the weak antenna (the first antenna and the second antenna), the electronic device 200 includes only the third antenna, and different transmit distances are implemented by adjusting the transmit power of the third antenna. For another example, the electronic device 200 may include the strong antenna and the weak antenna (the third antenna and the fourth antenna), the electronic device 100 includes only the first antenna, and different transmit distances are implemented by adjusting the transmit power of the first antenna. This is not limited in this embodiment of this application.

It should be noted that the electronic device 100 is merely an example, and that only one electronic device joins the conference A by interacting with a conference member is not limited. A quantity of electronic devices that access the conference A is not limited in this application.

By using the methods shown in FIG. 13A-1, FIG. 13A-2, FIG. 13A-3, and FIG. 13A-4 to FIG. 13C-1, FIG. 13C-2, FIG. 13C-3, and FIG. 13C-4 and the extended methods, the electronic device 100 of the to-access-party can join, based on the ultra-short-distance communication manner by using a natural interaction manner of approaching or touching the electronic device 200 that serves as the conference member, the conference that the electronic device 200 and the electronic device 300 attend. In this process, as shown in FIG. 14, provided that the electronic device 100 of the to-access-party approaches or touches the electronic device 200 serving as the conference member, the electronic device 100 may join, in the ultra-short-distance communication manner, the conference that the electronic device 200 attends. As shown in FIG. 14, in conference participant information displayed by the electronic device 300, in addition to a user X corresponding to the electronic device 200 and a user Z corresponding to the electronic device 300, a user Y corresponding to the electronic device 100 is further added.

For example, a plurality of electronic devices that want to access the current conference exist in a conference room 1, an electronic device 1 used by a user 1 serves as a conference chairman of the current conference, an electronic device 2 used by a user 2 serves as a conference member of the current conference, and both the electronic device 2 and the electronic device 1 access the current conference. The plurality of electronic devices (for example, electronic devices 3 to 10) that want to access the current conference may access the current conference conveniently and quickly by separately approaching or touching the electronic device 2.

The conference access method provided in this embodiment of this application is easy to operate, consumes a short time, and has better user experience. In addition, the method can reduce operation complexity when a conference member is added to a conference during the conference, reduce a possibility of touch by mistake, effectively avoid blocking on a conference interface by an interactive operation interface, and avoid problems such as conference interruption caused by touch by mistake. In addition, in the conference access process, the electronic devices communicate with each other in the ultra-short-distance communication manner, and a communication distance is quite short. Therefore, secure and reliable data exchange can be established between both communication parties, thereby ensuring security.

Based on the foregoing content, it may be understood that the electronic device of the to-access-party may join the current conference by approaching or touching any electronic device that attends the current conference.

The conference access methods described in FIG. 8A-1, FIG. 8A-2, and FIG. 8A-3 to FIG. 8C-1, FIG. 8C-2, and FIG. 8C-3 and FIG. 13A-1, FIG. 13A-2, FIG. 13A-3, and FIG. 13A-4 to FIG. 13C-1, FIG. 13C-2, FIG. 13C-3, and FIG. 13C-4 are all applied to a scenario in which a conference chairman exists. In daily life, there are many conference scenarios with conference chairmen. For example, in a multi-person voice conference performed by using WeChat, there is no specific conference chairman.

With reference to FIG. 15A-1 and FIG. 15A-2 and FIG. 15B-1 and FIG. 15B-2, the following specifically describes a conference access method in a scenario without a conference chairman.

FIG. 15A-1 and FIG. 15A-2 are a flowchart of a conference access method according to an embodiment of this application. An electronic device 100 is a to-access-party, an electronic device 200 is a conference member in a conference, and the current conference that the electronic device 200 attends is denoted as a conference A. Because there is no conference chairman, the electronic device 200 may be any electronic device in the conference A.

In the method shown in FIG. 15A-1 and FIG. 15A-2, the electronic device 100 includes a first antenna and a second antenna. The first antenna is a strong antenna, and the second antenna is a weak antenna. A first transmit distance for transmitting a signal by the first antenna is greater than a second transmit distance for transmitting a signal by the second antenna, and the second transmit distance is less than or equal to a preset secure distance. The electronic device 200 includes a third antenna and a fourth antenna. The third antenna is a strong antenna, and the fourth antenna is a weak antenna. A third transmit distance for transmitting a signal by the third antenna is greater than a fourth transmit distance for transmitting a signal by the fourth antenna, and the fourth transmit distance is less than or equal to the preset secure distance. The preset secure distance is a distance at which a user of the electronic device exchanges secret information with another electronic device by using the electronic device. For example, the preset secure distance may be 30 cm.

As shown in FIG. 15A-1 and FIG. 15A-2, the method includes the following steps.

S1001a: The electronic device 100 receives a first input, and generates a random key.

In some embodiments, after starting the conference application in response to an operation of the user, the electronic device 100 receives the first input.

In some embodiments, the first input is that the user taps an option "touch to access a conference" in the conference application. The first input may alternatively be a voice input, a gesture input, or an input in another form after the electronic device 100 starts the conference application. This is not limited in this embodiment of this application.

In some other embodiments, the electronic device 100 may directly receive the first input. In other words, the electronic device 100 may receive the first input when displaying a home screen or another application screen.

For example, the first input may be a voice input, a specific gesture input, a touch operation, or an input in another form of "touch to access a conference". This is not limited in this embodiment of this application.

In some embodiments, when receiving the first input, the electronic device 100 may generate the random key.

In some embodiments, after receiving the first input, the electronic device 100 may generate the random key.

S1002a: The electronic device 100 broadcasts a first message by using the second antenna, where the first message includes a conference joining request, an ID of the electronic device 100, and the random key.

In this embodiment of this application, the ID of the electronic device 100 represents information that can uniquely identify the electronic device 100. For example, the ID of the electronic device 100 may be information such as a MAC address of the electronic device 100.

It may be understood that the electronic device 100 broadcasts the first message by using the second antenna, and the transmit distance of the second antenna is short. Therefore, a distance between an electronic device that can receive the first message and the electronic device 100 is short.

This step is similar to S802b, and a difference lies in that the first message broadcast in S1002a further includes the random key generated by the electronic device 100.

S1003a: The electronic device 200 receives the first message within the transmit distance of the second antenna, obtains the conference joining request, the ID of the electronic device 100, and the random key, and encrypts a conference ID and a conference password by using the random key.

Because the electronic device 100 broadcasts the first message by using the second antenna, and the transmit distance of the second antenna is short, when the electronic device 200 is close to the electronic device 100, the electronic device 200 may receive the first message, and obtain the conference joining request, the ID of the electronic device 100, and the random key.

In this embodiment of this application, the electronic device 200 may encrypt, by using the random key, the conference ID and the conference password of the conference A that the electronic device 200 attends.

In some embodiments, the conference A may have no conference password. When there is no conference password, the electronic device 200 encrypts the conference ID of the conference A by using the random key.

S1004a: The electronic device 200 sends a first response message by using the fourth antenna, where the first response message includes the ID of the electronic device 100 and information obtained after the conference ID and the conference password are encrypted by using the random key.

Because the electronic device 100 is close to the electronic device 200, the electronic device 200 sends the first response message by using the fourth antenna.

It may be understood that the distance between the electronic device 200 and the electronic device 100 is within a preset secure distance, so that information transmission security can be ensured.

In some embodiments, the first response message includes the ID of the electronic device and information obtained after the conference ID and the conference password are encrypted by using the random key.

In some other embodiments, the first response message includes the ID of the electronic device and information obtained after the conference ID is encrypted by using the random key.

It may be understood that the random key herein is generated by the electronic device 100. Therefore, only the electronic device 100 can decrypt the encrypted information to obtain the conference ID and the conference password of the conference A, thereby improving security in a communication process.

S1005a: The electronic device 100 receives the first response message within the transmit distance of the fourth antenna, and performs decryption by using the random key to obtain the conference ID and the conference password.

In some embodiments, if the conference password does not exist, the electronic device 100 obtains only the conference ID.

S1006a: The electronic device 200 switches to the third antenna after preset duration.

The preset duration is a short time period, for example, 2 ms or 3 ms. The preset duration may be set by the user. The preset duration is not specifically limited in this application.

The electronic device 200 enables, by using the fourth antenna (the weak antenna), the electronic device 100 to join the conference A in an ultra-short-distance manner. However, because the electronic device 200 is in the conference A, the electronic device 200 should maintain normal conference communication by using the third antenna (the strong antenna) most of the time via a router and the Internet.

Therefore, after the preset duration, the electronic device 200 switches to the third antenna, thereby ensuring normal conference communication.

S1007a: The electronic device 100 sends a second message by using the first antenna and by using an encryption mechanism provided by the conference application for the conference, where the second message includes the conference ID, the conference password, and the account of the electronic device 100 on the conference application.

In some embodiments, if a conference permission is low and no conference password exists, the electronic device 100 sends the second message by using the first antenna and by using the encryption mechanism provided by the conference application for the conference. The second message includes the conference ID and the account of the electronic device 100 on the conference application.

S1008a: The server 400 receives the second message, and obtains the conference ID, the conference password, and the account of the electronic device 100 on the conference application by using a decryption mechanism provided by the conference application for the conference.

In some embodiments, if there is no conference password, the server 400 obtains the conference ID and the account of the electronic device 100 on the conference application by using the decryption mechanism provided by the conference application for the conference.

S1009a: The server 400 determines whether the conference password is correct.

In some embodiments, the server 400 determines whether the conference password is correct by comparing whether the conference ID is consistent with the conference password.

In some other embodiments, if the conference password does not exist, the server 400 determines whether the conference ID is valid.

For example, the server 400 determines whether the conference ID is valid by determining whether the conference ID exists; or the server 400 determines whether the conference ID is valid by determining whether the conference ID is the current conference.

It may be understood that the server 400 may store a list of correspondences between conference IDs and conference passwords; or the server 400 may invoke data stored in a specific memory to determine whether the conference password is correct.

S1010a: If the server 400 determines that the conference password is correct, the electronic device 100 is connected, and joins the conference by using the first antenna.

In some embodiments, when there is no conference password, if the server 400 determines that the conference ID is valid, the electronic device 100 is connected, and joins the conference by using the first antenna.

In some other embodiments, if the server 400 determines that the conference password is incorrect, the electronic device 100 does not join the current conference, and the process ends.

In still some other embodiments, when where is no conference password, if the server 400 determines that the conference ID is invalid, the electronic device 100 does not join the current conference, and the process ends.

Optionally, after the electronic device 100 accesses the conference A, if the user of the electronic device 100 finds that the user does not need to access the conference A or wants to exit the conference A, the user may hang up the conference A at any time, so that the electronic device 100 exits the conference A. For example, the user may exit the conference application by tapping a control "Hang-up". The user may also exit the conference in another manner such as entering a voice input "Exit the conference". A manner in which the electronic device exits the conference is not limited in this embodiment of this application.

Optionally, the electronic device 100 may switch to the first antenna after S1005a, or may switch to the first antenna in S1007a. This is not limited in this embodiment of this application.

In the method shown in FIG. 15A-1 and FIG. 15A-2, the electronic device 100 and the electronic device 200 each include two antennas, and different transmit distances are implemented by using different antennas.

In some embodiments, the electronic device 100 may use only one of the first antenna and the second antenna in the conference access process, and implement different transmit distances by adjusting the transmit power of the antenna. Likewise, the electronic device 200 may also use only one of the third antenna and the fourth antenna, and implement different transmit distances by adjusting the transmit power of the antenna.

In some other embodiments, each of the electronic device 100 and the electronic device 200 may have only one antenna, and implement different transmit distances by adjusting the transmit power of the antenna. For example, the electronic device 100 includes only the first antenna, and the electronic device 200 includes only the third antenna.

With reference to FIG. 15B-1 and FIG. 15B-2, the following describes another conference access method according to an embodiment of this application. An electronic device 100 is a to-access-party, an electronic device 200 is a conference member in a conference, and the current conference that the electronic device 200 attends is denoted as a conference A. Because there is no conference chairman, the electronic device 200 may be any electronic device in the conference A.

In the method shown in FIG. 15B-1 and FIG. 15B-2, the electronic device 100 includes only the first antenna, and may implement different transmit distances by adjusting the transmit power of the first antenna. For example, the transmit power of the first antenna includes a first transmit power and a second transmit power, and the first transmit power is greater than the second transmit power. In this way, it may be considered that the first antenna at the first transmit power is a strong antenna, and the first antenna at the second transmit power is a weak antenna. Similarly, the electronic device 200 includes only the third antenna, the transmit power of the third antenna includes a third transmit power and a fourth transmit power, and the third transmit power is greater than the fourth transmit power. In this way, it may be considered that the third antenna at the third transmit power is a strong antenna, and the third antenna at the fourth transmit power is a weak antenna.

As shown in FIG. 15B-1 and FIG. 15B-2, the method includes the following steps.

S1001b: The electronic device 100 receives a first input, and generates a random key.

S1002b: The electronic device 100 broadcasts a first message by using the first antenna at the second transmit power, where the first message includes a conference joining request, an ID of the electronic device 100, and the random key.

S1003b: The electronic device 200 receives the first message within the transmit distance of the first antenna at the second transmit power, obtains the conference joining request, the ID of the electronic device 100, and the random key, and encrypts a conference ID and a conference password by using the random key.

S1004b: The electronic device 200 sends a first response message by using the third antenna at the fourth transmit power, where the first response message includes the ID of the electronic device 100 and information obtained after the conference ID and the conference password are encrypted by using the random key.

S1005b: The electronic device 100 receives the first response message within the transmit distance of the third antenna at the fourth transmit power, and performs decryption by using the random key to obtain the conference ID and the conference password.

S1006b: The electronic device 200 switches the fourth transmit power of the third antenna to the third transmit power after preset duration.

S1007b: The electronic device 100 sends a second message by using the first antenna at the first transmit power and by using an encryption mechanism provided by the conference application for the conference, where the second message includes the conference ID, the conference password, and the account of the electronic device 100 on the conference application.

S1008b: The server 400 receives the second message, and obtains the conference ID, the conference password, and the account of the electronic device 100 on the conference application by using a decryption mechanism provided by the conference application for the conference.

S1009b: The server 400 determines whether the conference password is correct.

S1010b: If the server 400 determines that the conference password is correct, the electronic device 100 is connected, and joins the conference by using the first antenna at the first transmit power.

The method shown in FIG. 15B-1 and FIG. 15B-2 is similar to the method shown in FIG. 15A-1 and FIG. 15A-2. The first antenna in FIG. 15A-1 and FIG. 15A-2 is replaced with the first antenna at the first transmit power in FIG. 15B-1 and FIG. 15B-2, the second antenna in FIG. 15A-1 and FIG. 15A-2 is replaced with the first antenna at the second transmit power in FIG. 15B-1 and FIG. 15B-2, the third antenna in FIG. 15A-1 and FIG. 15A-2 is replaced with the third antenna at the third transmit power in FIG. 15B-1 and FIG. 15B-2, and the fourth antenna in FIG. 15A-1 and FIG. 15A-2 is replaced with the third antenna at the fourth transmit power in FIG. 15B-1 and FIG. 15B-2. In the method shown in FIG. 15A-1 and FIG. 15A-2, different transmit distances are implemented by switching between different antennas. In the method shown in FIG. 15B-1 and FIG. 15B-2, different transmit distances are implemented by adjusting a transmit power of a same antenna.

Therefore, for content of S1000b to S1010b, refer to descriptions of S1000a to S1010a, and details are not described herein again.

Similarly, the foregoing methods may be combined in any manner. For example, the electronic device 100 may include the strong antenna and the weak antenna (the first antenna and the second antenna), the electronic device 200 includes only the third antenna, and different transmit distances are implemented by adjusting the transmit power of the third antenna. For another example, the electronic device 200 may include the strong antenna and the weak antenna (the third antenna and the fourth antenna), the electronic device 100 includes only the first antenna, and different transmit distances are implemented by adjusting the transmit power of the first antenna. This is not limited in this embodiment of this application.

It should be noted that, the electronic device 100 is merely an example, and that only one electronic device accesses the conference A in which the electronic device 200 serves as the conference chairman is not limited. A quantity of electronic devices that access the conference A is not limited in this application.

In some embodiments, in addition to the electronic device 200, there may be one or more other electronic devices that participate in the conference A. This is not limited in this application.

Based on the methods shown in FIG. 15A-1 and FIG. 15A-2 and FIG. 15B-1 and FIG. 15B-2, the electronic device of the to-access-party can join, based on the ultra-short-distance communication manner by using a natural interaction manner of approaching or touching any electronic device in the conference, the current conference.

Based on the conference access method provided in this embodiment of this application, in a conference scenario without a conference chairman, operation complexity when a new conference member is added during the conference can be reduced, and it is convenient for the electronic device of the to-access-party to quickly and conveniently access the current conference.

Based on the method, the electronic devices can access the conference in a natural interaction manner such as approaching or touching each other. The conference access method provided in this embodiment of this application is easy to operate, consumes a short time, and has better user experience. In addition, the method can reduce operation complexity when a conference member is added during conference creation and during the conference, and reduce a possibility of touch by mistake. In addition, because a communication distance in the ultra-short-distance communication manner is quite short, secure and reliable data exchange can be established between both communication parties, thereby ensuring security of data transmission.

In addition, the ultra-short-distance communication manner is a communication manner based on a conventional wireless communication manner, for example, a conventional Wi-Fi or a conventional Bluetooth technology. Therefore, ultra-short-distance communication can be implemented by making a small change based on the conventional Wi-Fi or conventional Bluetooth communication manner. An ultra-short-distance communication capability of the electronic device may be used as a basic capability, and an API interface is provided. A third-party application invokes the interface to use the ultra-short-distance communication capability. In other words, in the ultra-short-distance communication manner, hardware such as a chip or a device does not need to be added or existing hardware does not need to be greatly transformed.

It should be noted that all or some of the foregoing embodiments of this application may be freely and randomly combined. The combined technical solutions also fall within the scope of this application.

It may be understood that, to implement the foregoing functions, the electronic device includes a corresponding hardware and/or software module for performing each function. With reference to algorithm steps of examples described in embodiments disclosed in this specification, this application can be implemented in a form of hardware or a combination of hardware and computer software. Whether a function is performed by hardware or hardware driven by computer software depends on a particular application and a design constraint of the technical solutions. A person skilled in the art may use different methods to implement the described functions for each particular application with reference to embodiments, but it should not be considered that the implementation goes beyond the scope of this application.

In this embodiment, the electronic device may be divided into functional modules based on the foregoing method examples. For example, each functional module may be obtained through division based on a corresponding function, or two or more functions may be integrated into one processing module. The integrated module may be implemented in a form of hardware. It should be noted that module division in this embodiment is an example and is merely logical function division. In actual implementation, there may be another division manner.

For example, when each functional module is obtained through division based on each corresponding function, FIG. 16 is a possible schematic diagram of composition of an electronic device 1600 according to an embodiment of this application. As shown in the figure, the electronic device 1600 may include a transceiver module 1601 and a processing module 1602.

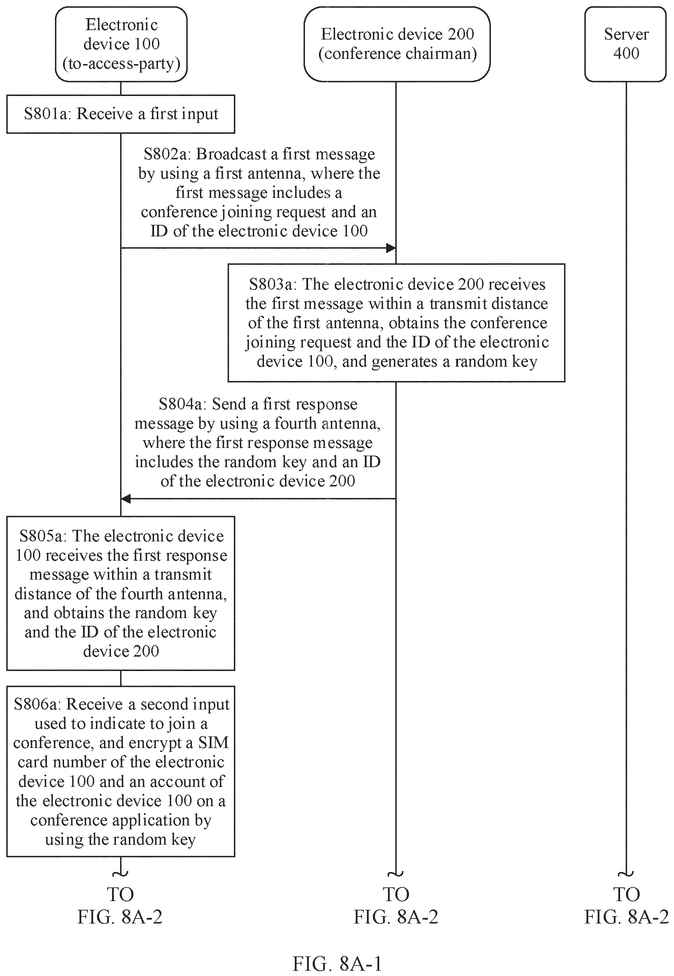

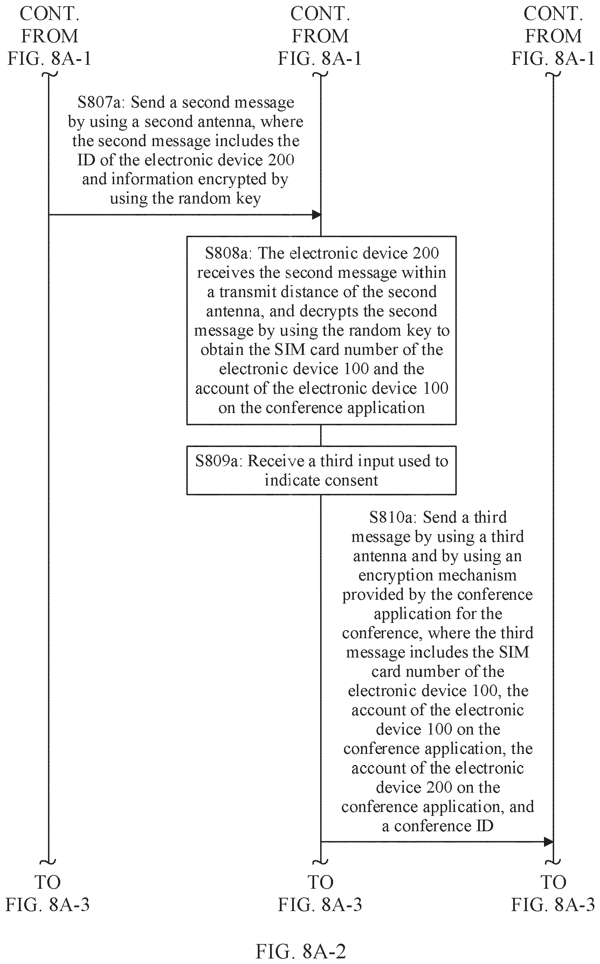

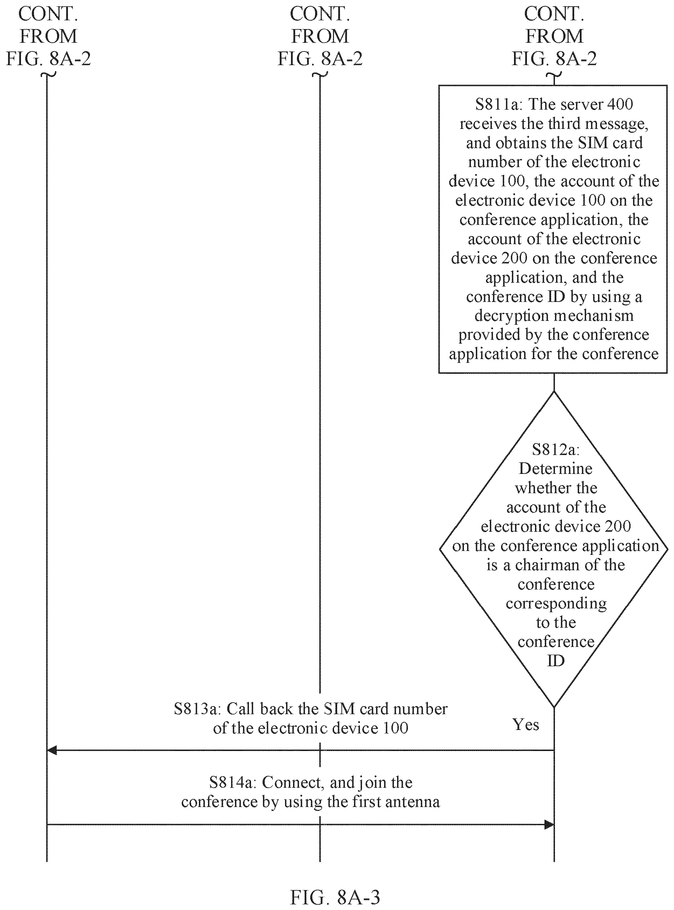

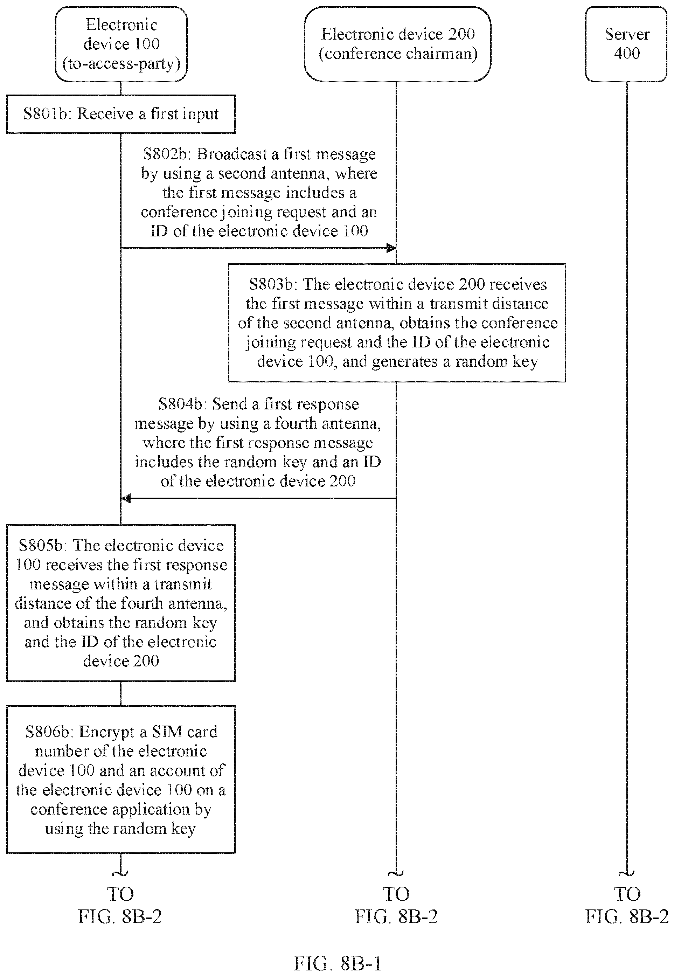

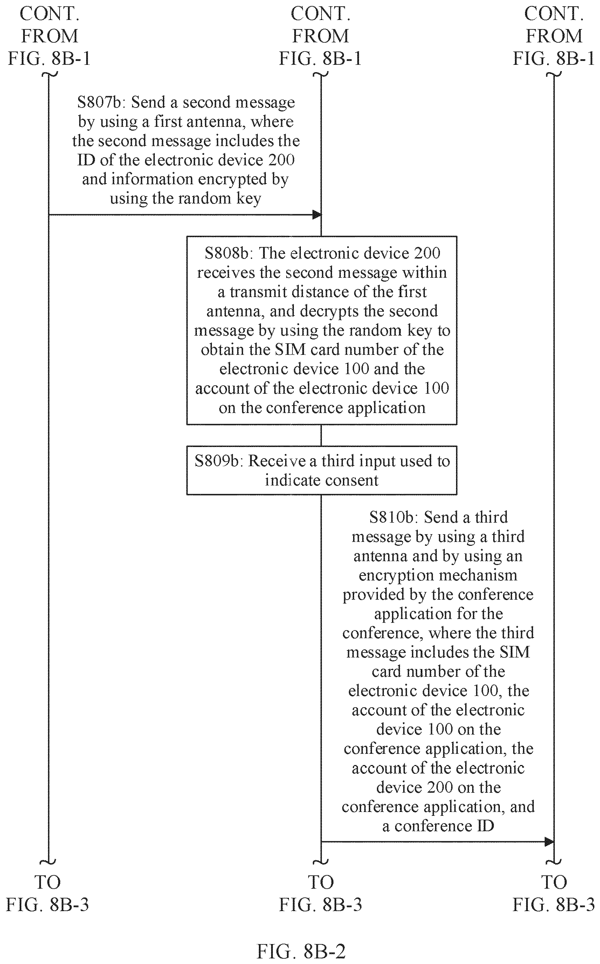

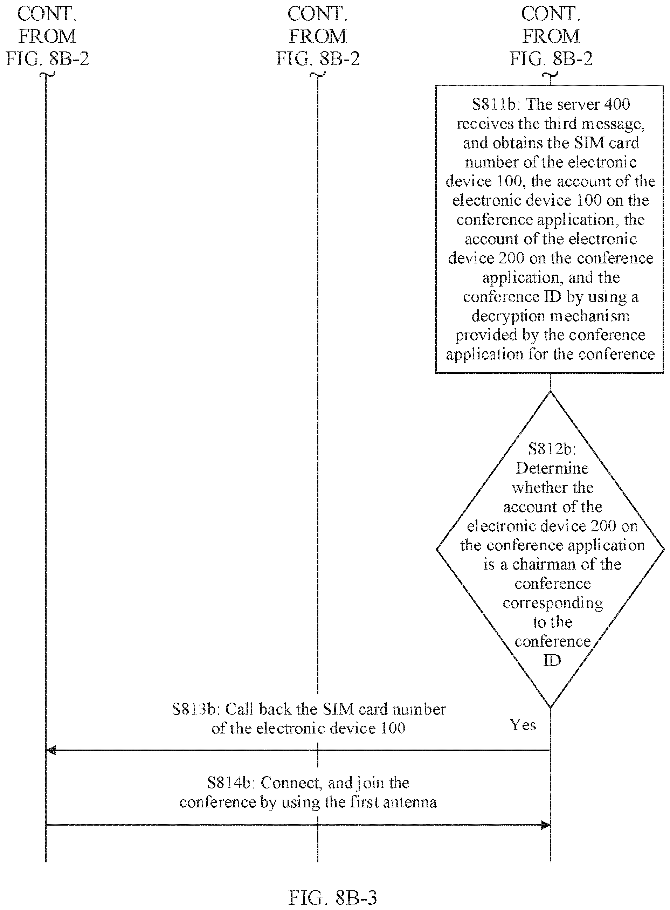

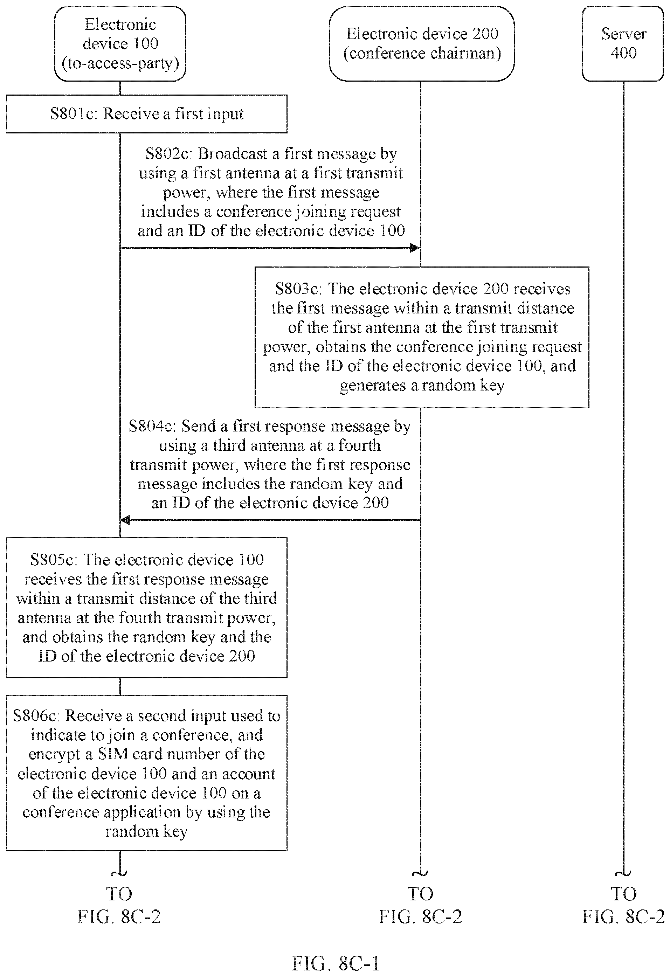

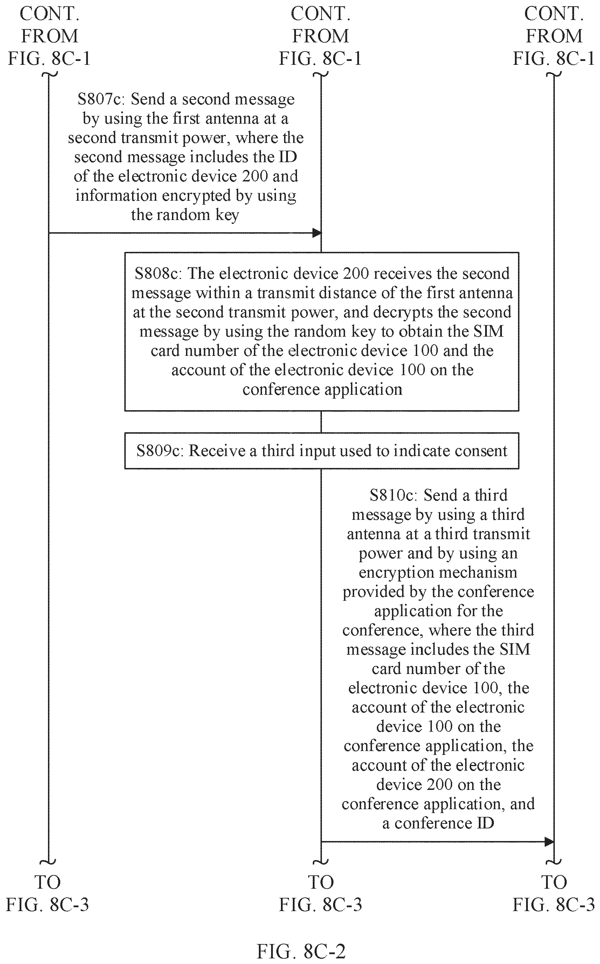

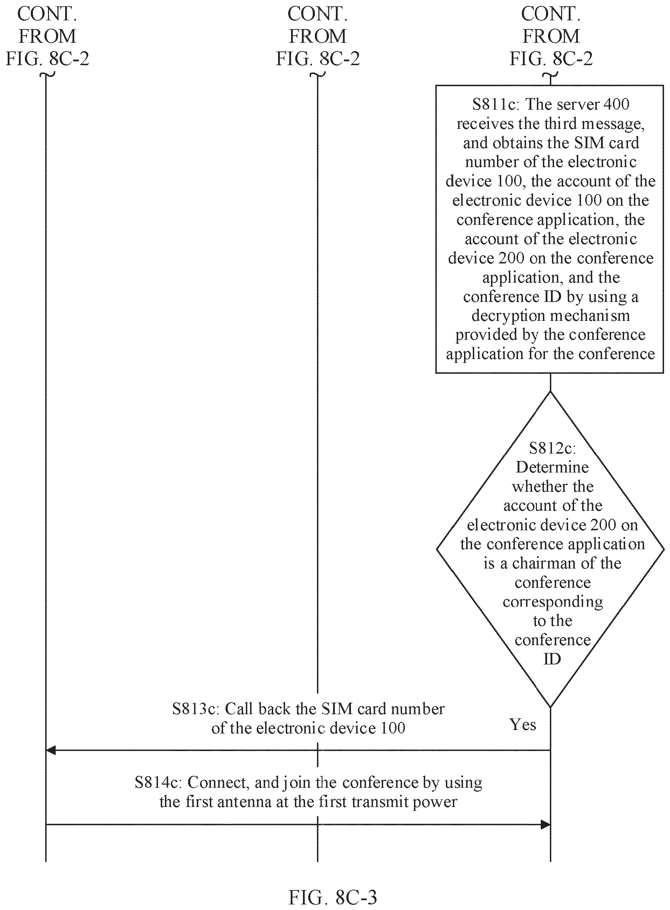

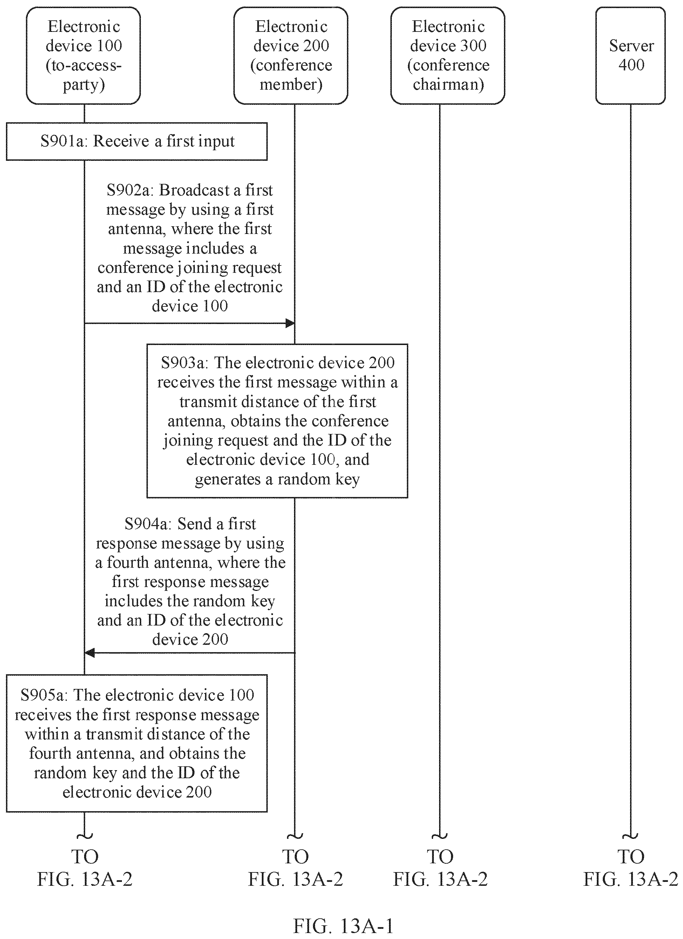

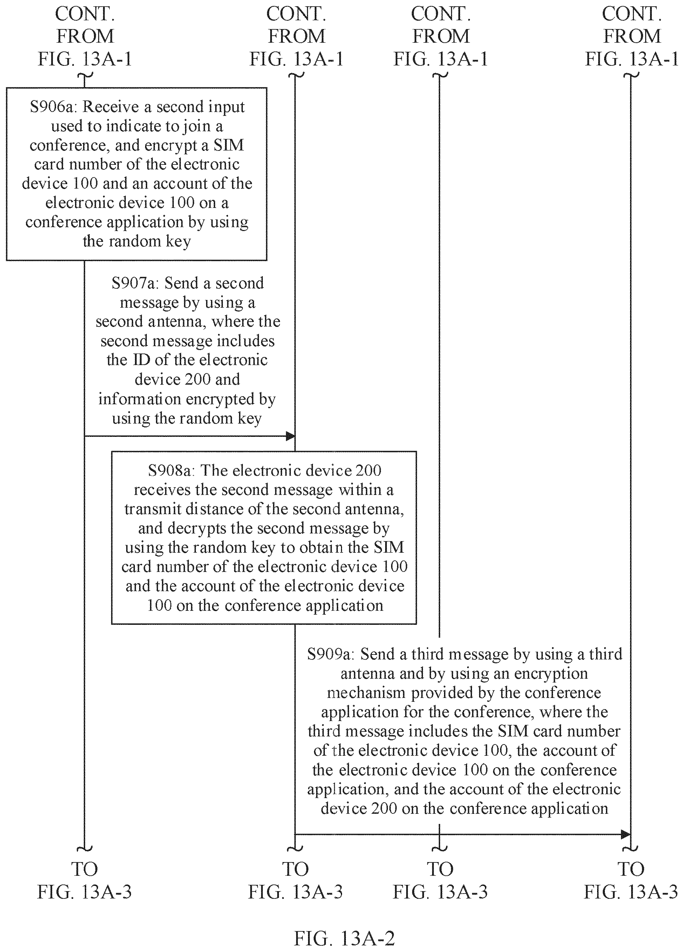

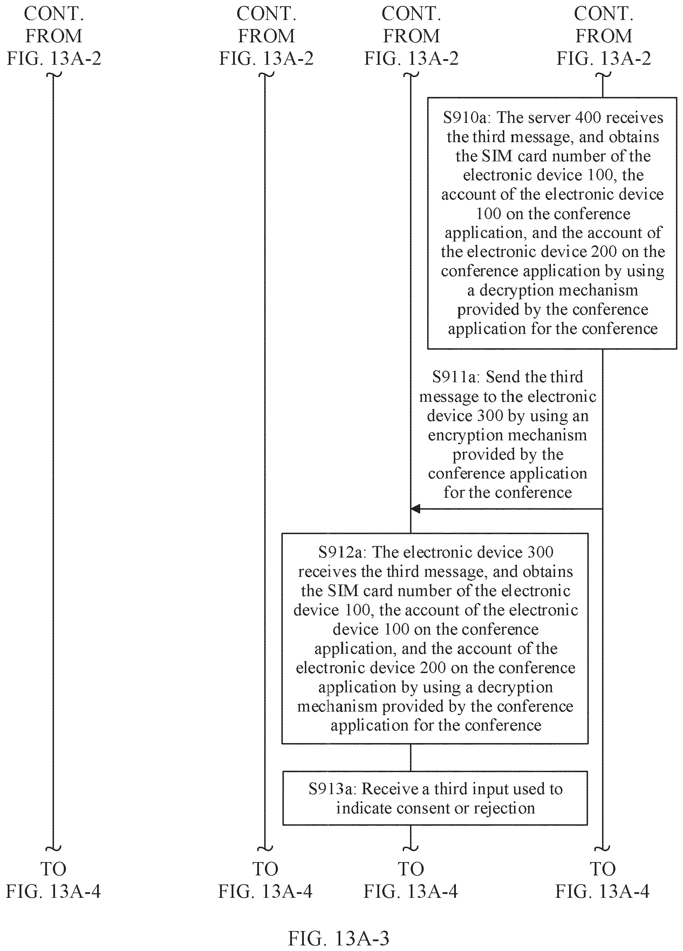

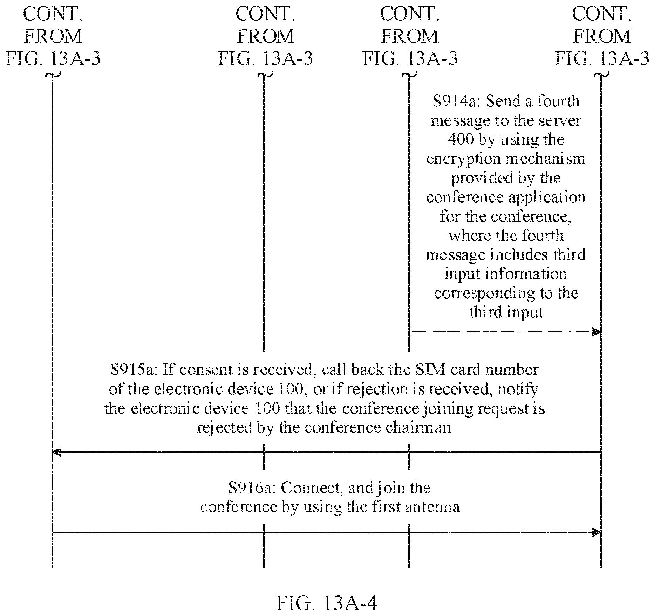

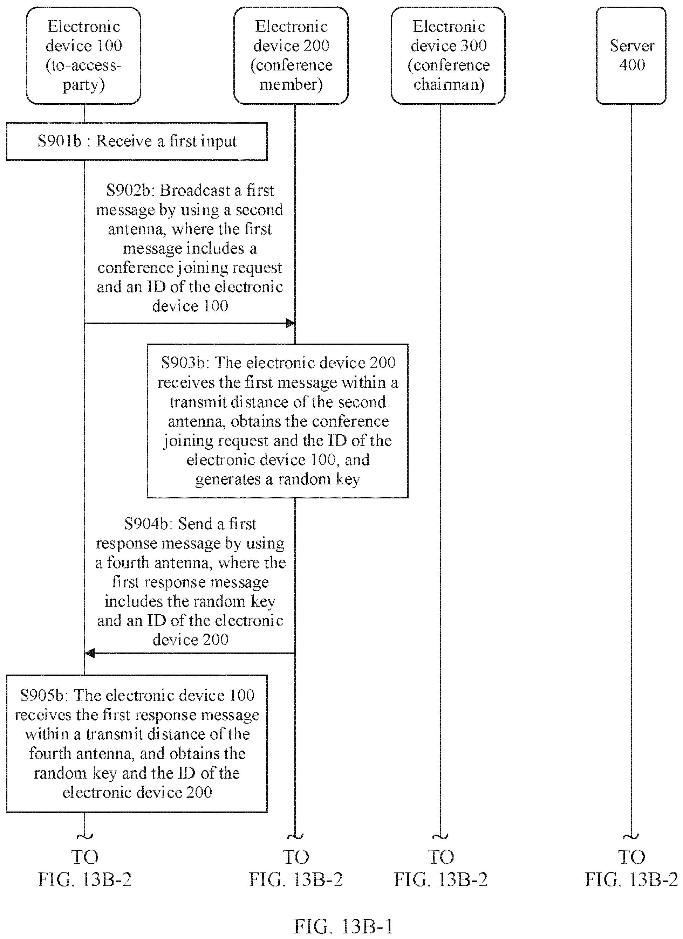

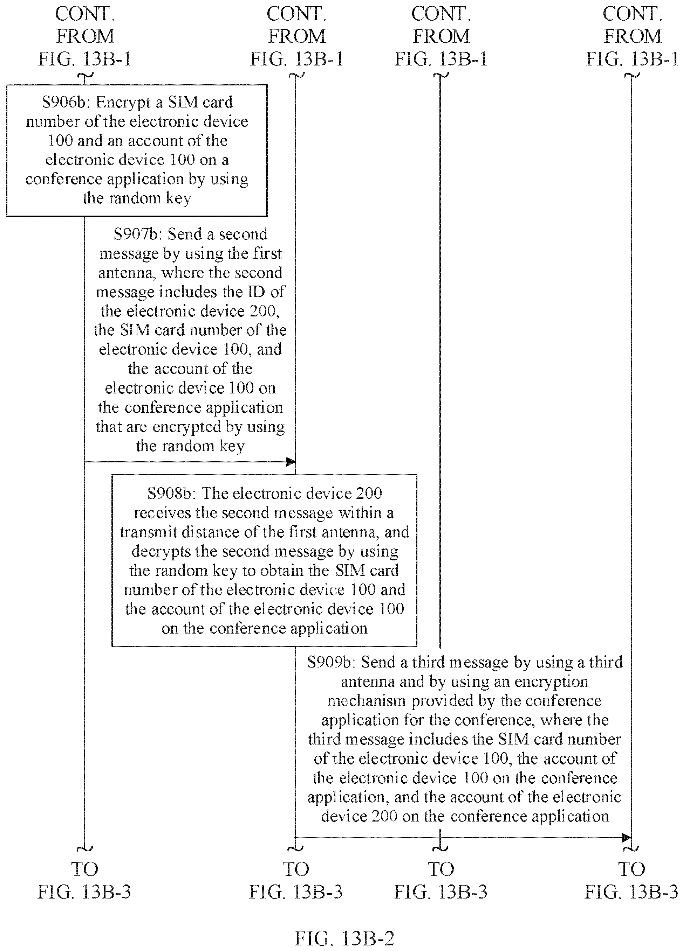

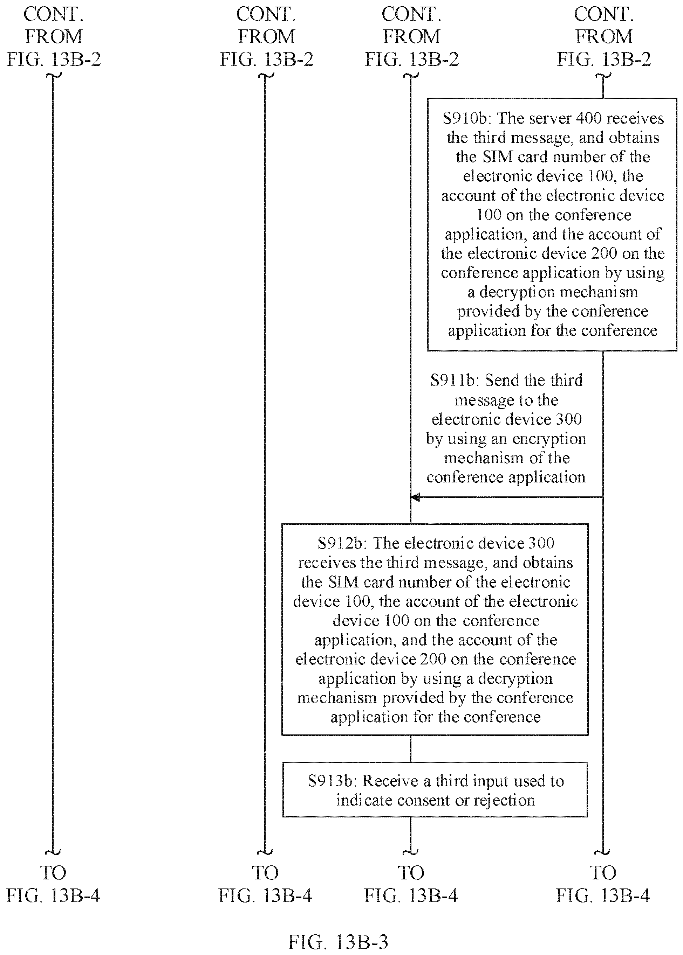

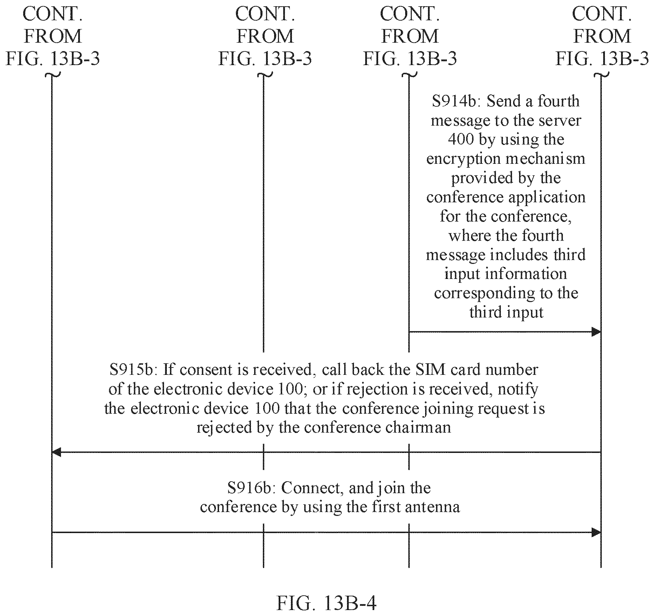

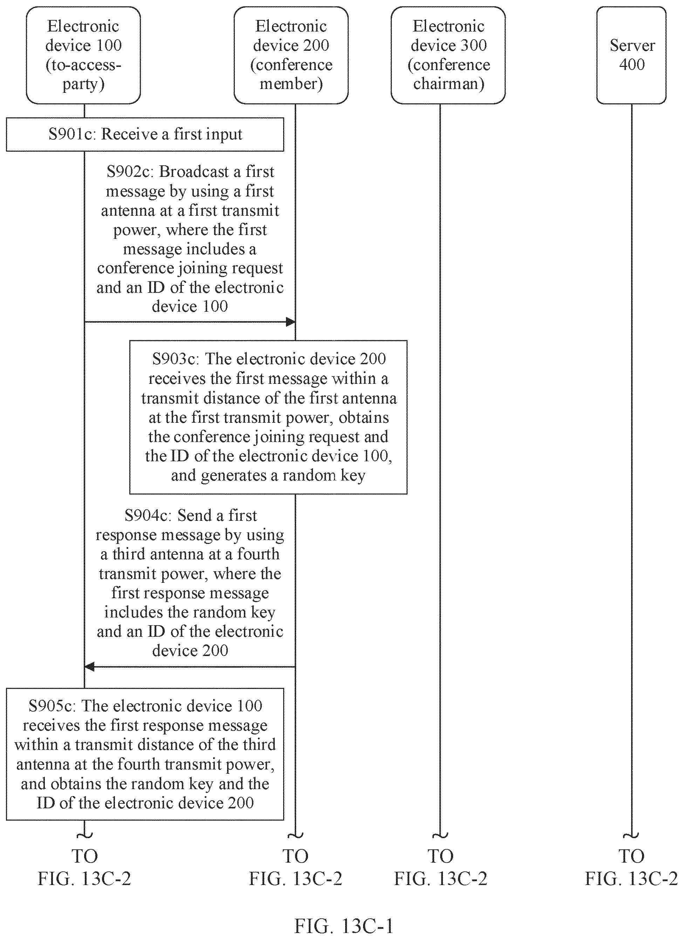

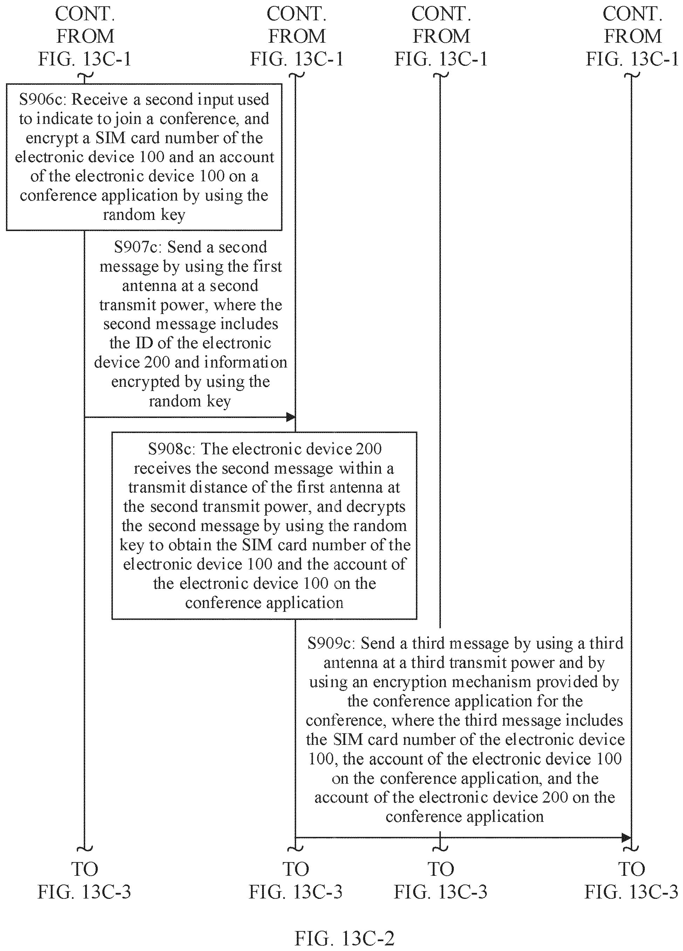

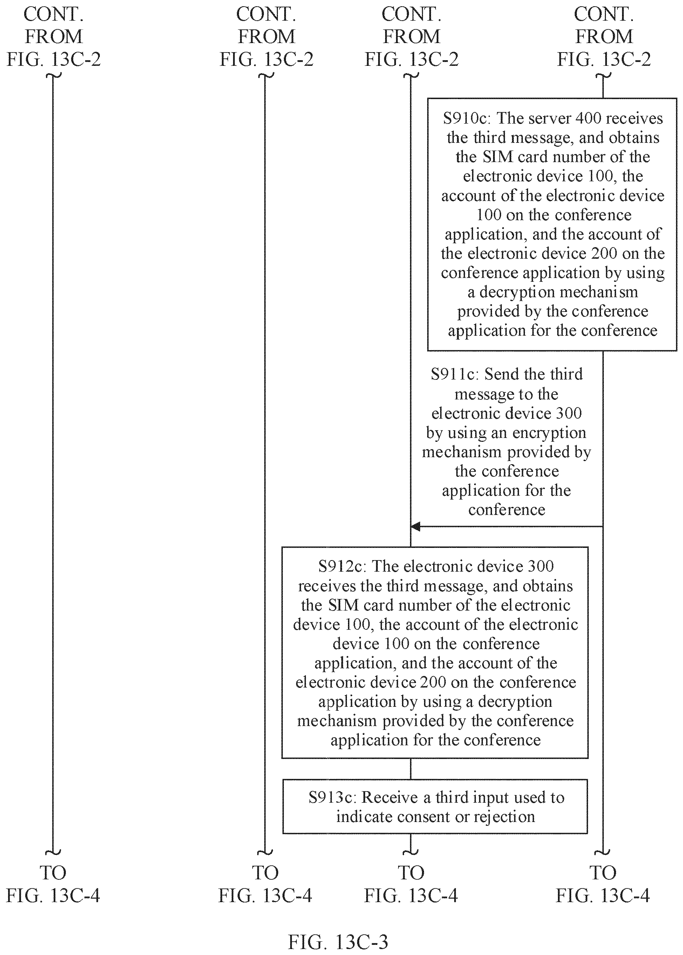

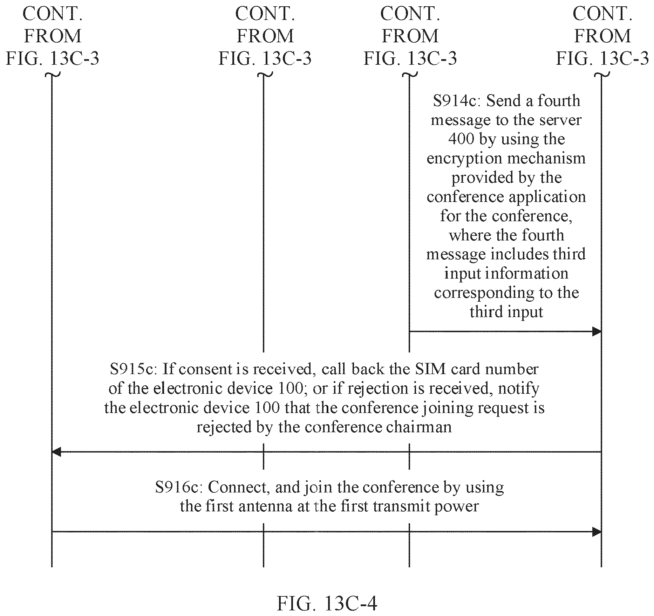

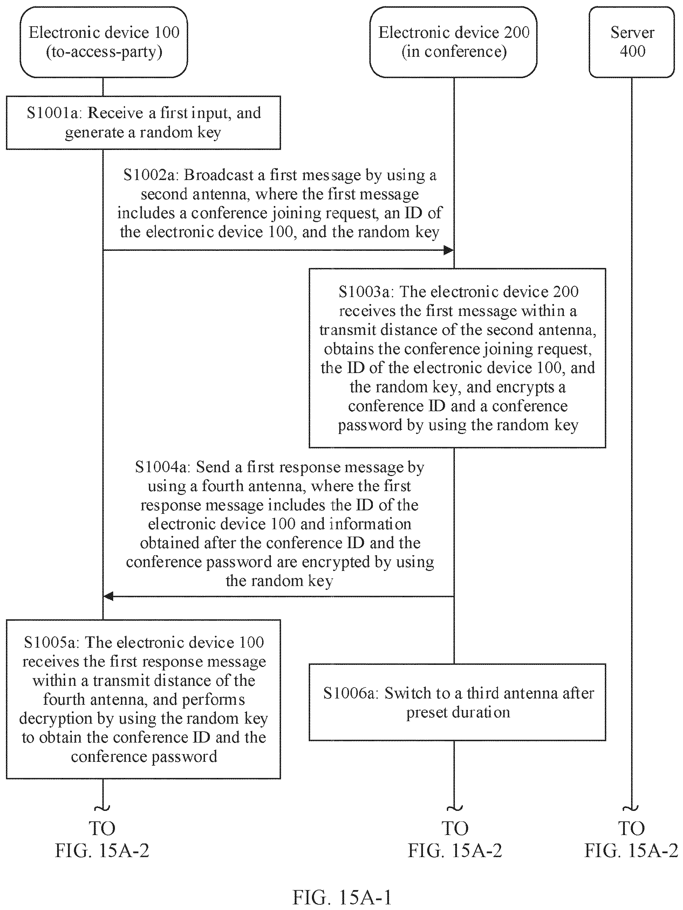

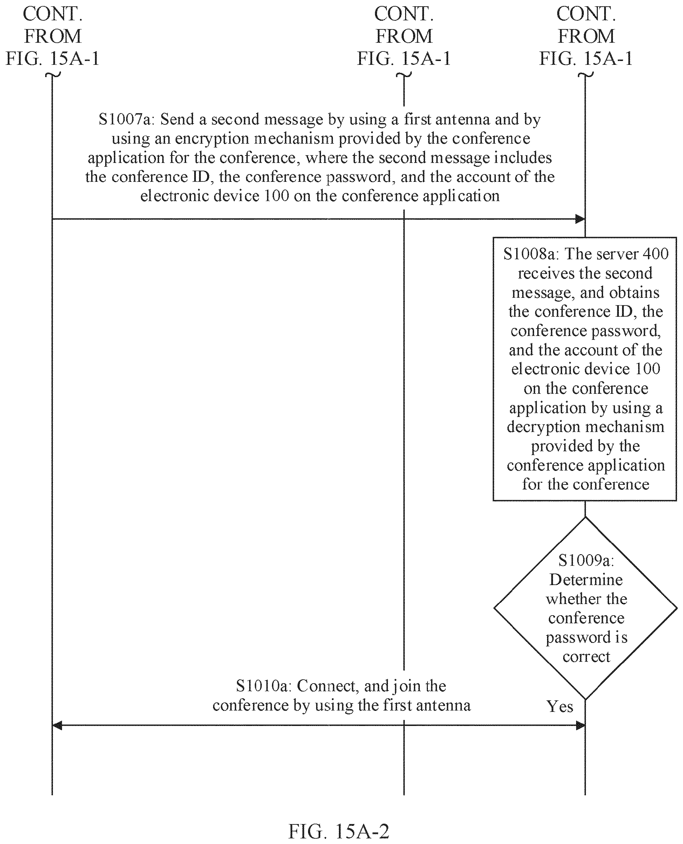

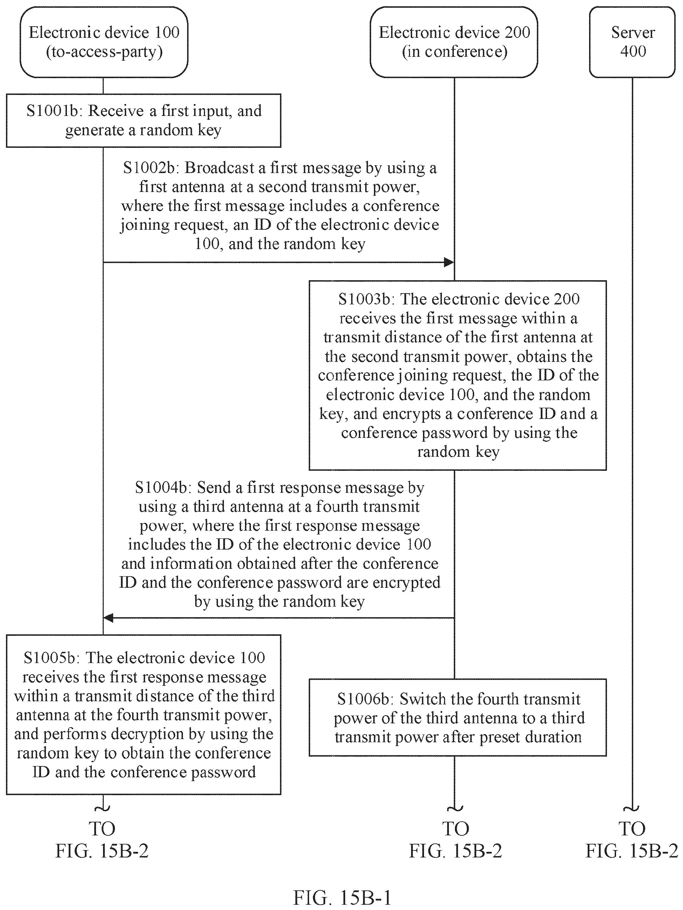

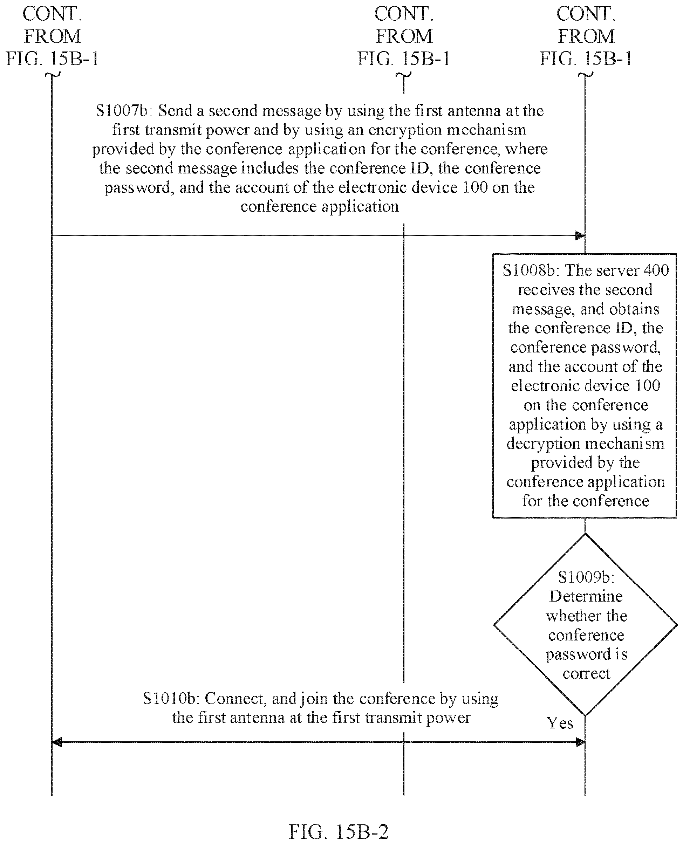

In some embodiments, the electronic device may be the electronic device 200. The transceiver module 1601 may be configured to support the electronic device 1600 in performing S803a and S804a, S808a to S810a, S803b and S804b, S808b to S810b, S803c and S804c, and S808c to S810c in FIG. 8A-1 to FIG. 8C-3, 912a to S914a, S912b to S914b, and S912c to S914c in FIG. 13A-1 to FIG. 13C-4, S1003a and S1004a, and S1003b and S1004b in FIG. 15A-1 to FIG. 15B-2 in the foregoing embodiments, and/or another action or function performed by the electronic device 200 in the foregoing method embodiments. The processing module 1602 may be configured to support the electronic device 1600 in performing S803a, S803b, and S803c in FIG. 8A-1 to FIG. 8C-3, 912a, S912b, and S912c in FIG. 13A-1 to FIG. 13C-4, S1006a and S1006b in FIG. 15A-1 to FIG. 15B-2 in the foregoing embodiments, and/or another action or function performed by the electronic device 200 in the foregoing method embodiments.

In some other embodiments, the electronic device may be the electronic device 100. The transceiver module 1601 may be configured to support the electronic device 1600 in performing S801a and S802a, S805a to S807a, S801b and S802b, S805b to S807b, S801c and S802c, and S805c to S807c in FIG. 8A-1 to FIG. 8C-3, 901a and S902a, S905a to S907a, S901b and S902b, S905b to S907b, S901c and S902c, and S905c to S907c in FIG. 13A-1 to FIG. 13C-4, S1001a and S1002a, S1005a, S1007a, S1001b and S1002b, S1005b, and S1007b in FIG. 15A-1 to FIG. 15B-2 in the foregoing embodiments, and/or another action or function performed by the electronic device 100 in the foregoing method embodiments. The processing module 1602 may be configured to support the electronic device 1600 in performing S805a and S806a, S814a, S805b and S806b, S814b, S805c and S806c, and S814c in FIG. 8A-1 to FIG. 8C-3, S905a and S906a, S916a, S905b and S906b, S916b, S905c and S906c, and S916c in FIG. 13A-1 to FIG. 13C-4 in the foregoing embodiments, and/or another action or function performed by the electronic device 100 in the foregoing method embodiments.

In some other embodiments, the electronic device may be the electronic device 300. The transceiver module 1601 may be configured to support the electronic device 1600 in performing S903a and S904a, S908a and S909a, S903b and S904b, S908b and S909b, S903c and S904c, S908c and S909c in FIG. 13A-1 to FIG. 13C-4 in the foregoing embodiments, and/or another action or function performed by the electronic device 300 in the foregoing method embodiments. The processing module 1602 may be configured to support the electronic device 1600 in performing S908a and S909a, S908b and S909b, and S908c and S909c in FIG. 13A-1 to FIG. 13C-4 in the foregoing embodiments, and/or another action or function performed by the electronic device 300 in the foregoing method embodiments.

All related content of the steps in the foregoing method embodiment may be referenced to function descriptions of corresponding function modules, and details are not described herein again.

In this embodiment of this application, the electronic device 1600 is presented in a form of functional modules obtained through division in an integrated manner. The "module" herein may be a specific ASIC, a circuit, a processor that executes one or more software or firmware programs, a memory, an integrated logic circuit, and/or another component that can provide the foregoing functions. In a simple embodiment, a person skilled in the art may figure out that the electronic device 1600 may be in a form shown in FIG. 3.

For example, the processor 210 in FIG. 3 may invoke the computer instructions stored in the internal memory 221, to enable the electronic device 1600 to perform the actions performed by the electronic device in the foregoing method embodiments.

Optionally, an embodiment of this application further provides a computer-readable storage medium. The computer-readable storage medium stores computer instructions. When the computer instructions are run on an electronic device, the electronic device is enabled to perform the foregoing related method steps, to implement the conference access method in the foregoing embodiments. For example, the electronic device may be the electronic device 100 in the foregoing method embodiments. Alternatively, the electronic device may be the electronic device 200 in the foregoing method embodiments. Alternatively, the electronic device may be the electronic device 300 in the foregoing method embodiments.

Optionally, an embodiment of this application further provides a computer program product. When the computer program product is run on a computer, the computer is enabled to perform the foregoing related steps, to implement the conference access method performed by the electronic device in the foregoing embodiments. For example, the electronic device may be the electronic device 100 in the foregoing method embodiments. Alternatively, the electronic device may be the electronic device 200 in the foregoing method embodiments. Alternatively, the electronic device may be the electronic device 300 in the foregoing method embodiments.

Optionally, an embodiment of this application further provides an electronic device. The electronic device may be specifically a chip, a component, a module, or a system-on-a-chip. The electronic device may include a processor and a memory that are connected to each other. The memory is configured to store computer instructions. When the apparatus is run, the processor may execute the computer instructions stored in the memory, so that the chip performs conference access method performed by the electronic device in the foregoing method embodiments. For example, the electronic device may be the electronic device 100 in the foregoing method embodiments. Alternatively, the electronic device may be the electronic device 200 in the foregoing method embodiments. Alternatively, the electronic device may be the electronic device 300 in the foregoing method embodiments.

Optionally, an embodiment of this application further provides a conference access system, and the conference access system includes an electronic device 100, an electronic device 200, and an electronic device 300. The electronic device 100, the electronic device 200, and the electronic device 300 in the conference access system may respectively perform the conference access methods performed by the electronic device 100, the electronic device 200, and the electronic device 300 in the foregoing embodiments. For example, for a schematic architectural diagram of the conference access system, refer to FIG. 1.

The electronic device, the computer-readable storage medium, the computer program product, the chip, or the system-on-a-chip provided in embodiments of this application is configured to perform the corresponding methods provided above. Therefore, for beneficial effects that can be achieved by the electronic device, the computer-readable storage medium, the computer program product, or the chip, refer to beneficial effects in the corresponding methods provided above. Details are not described herein again.

Based on the descriptions of the foregoing implementations, a person skilled in the art may understand that, for a purpose of convenient and brief description, division into the foregoing functional modules is used as an example for illustration. In actual application, the foregoing functions may be allocated to different functional modules and implemented based on requirements. In other words, an inner structure of an apparatus is divided into different functional modules to implement all or some of the functions described above.

In the several embodiments provided in this application, it should be understood that the disclosed apparatuses and methods may be implemented in other manners. For example, the described apparatus embodiments are merely examples. For example, division into the modules or units is merely logical function division, and may be other division during actual implementation. For example, a plurality of units or components may be combined or may be integrated into another apparatus, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may be one or more physical units, that is, may be located in one place, or may be distributed in a plurality of different places. Some or all of the units may be selected based on actual requirements to achieve the objectives of the solutions of embodiments.

In addition, function units in embodiments of this application may be integrated into one processing unit, or each of the units may exist alone physically, or two or more units are integrated into one unit. The integrated unit may be implemented in a form of hardware, or may be implemented in a form of a software functional unit.

When the integrated unit is implemented in a form of a software functional unit and sold or used as an independent product, the integrated unit may be stored in a readable storage medium. Based on such an understanding, the technical solutions of embodiments of this application essentially, or the part contributing to the conventional technology, or all or some of the technical solutions may be reflected in a form of a software product. The software product is stored in a storage medium and includes several instructions for enabling a device (which may be a single-chip microcomputer, a chip, or the like) or a processor (processor) to perform all or some of steps of methods in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application. The protection scope of this application shall be subject to the protection scope of the claims

## Claims

1. A first electronic device (100), wherein a first conference application is installed on the first electronic device (100), and the first electronic device wants to access a conference by using the first conference application, wherein the first electronic device (100) comprises:
a SIM card;
a processor (110);
a memory;
a first antenna, wherein a transmit distance of the first antenna is a first distance, and the first distance is greater than a preset first secure distance;
a second antenna, wherein a transmit distance of the second antenna is a second distance, and the second distance is less than or equal to the preset first secure distance; and
a computer program, wherein the computer program is stored in the memory (221), and when the computer program is executed by the processor (210), the first electronic device (100) is enabled to perform the following steps:
receiving (S801) a first input;
in response to the first input, broadcasting (S802) a first message by using the first antenna, wherein the first message comprises a conference joining request and an identity of the first electronic device (100);
receiving (S805) a first response message within a fourth distance from a second electronic device (200), wherein the first response message comprises a random key and an identity of the second electronic device (200), the first response message is associated with the first message, the second electronic device (200) accesses the conference by using the first conference application, and an account of the second electronic device (200) on the first conference application is a conference chairman in the conference;
receiving (S806) a second input used to indicate to join the conference;
in response to the second input, encrypting (S806) a SIM card number of the first electronic device (100) and the account of the first electronic device (100) on the first conference application by using the random key, to obtain encrypted information;
sending (S807) a second message by using the second antenna, wherein the second message comprises the identity of the second electronic device (200) and the encrypted information;
receiving (S813) a call of the first conference application; and
after the call is connected, joining (S814) the conference that the second electronic device (200) attends, wherein
the fourth distance is less than or equal to a preset second secure distance, the preset second secure distance is a secure distance for exchanging secret information between the second electronic device (200) and the first electronic device (100) in an ultra-short-distance mode, and the preset first secure distance is a secure distance for exchanging secret information between the first electronic device (100) and the second electronic device (200) in the ultra-short-distance mode.

2. The first electronic device (100) according to claim 1, wherein the first input is a user input, and the second input is a user input.

3. The first electronic device (100) according to claim 1 or 2, wherein the first electronic device (100) further comprises a wireless communication module (160), and both the first antenna and the second antenna are connected to the wireless communication module (160).

4. The first electronic device (100) according to claim 3, wherein the wireless communication module (160) comprises a Wi-Fi chip, a Bluetooth chip, or a ZigBee chip; and both the first antenna and the second antenna are connected to one of the Wi-Fi chip, the Bluetooth chip, and the ZigBee chip.

5. A second electronic device (200), wherein a first conference application is installed on the second electronic device (200), the second electronic device (200) accesses a conference by using the first conference application, and an account of the second electronic device (200) on the first conference application is a conference chairman in the conference; and the second electronic device (200) comprises:
a processor (210);
a memory (221);
a third antenna, wherein a transmit distance of the third antenna is a third distance, and the third distance is greater than a preset second secure distance;
a fourth antenna, wherein a transmit distance of the fourth antenna is a fourth distance, and the fourth distance is less than or equal to the preset second secure distance; and
a computer program, wherein the computer program is stored in the memory (221), and when the computer program is executed by the processor (210), the second electronic device (200) is enabled to perform the following steps:
receiving (S803) a first message from the first electronic device (100) within a first distance from the first electronic device (100), wherein the first message comprises a conference joining request and an identity of the first electronic device (100);
generating (S803) a random key in response to the first message;
sending (S804) a first response message by using the fourth antenna, wherein the first response message comprises the random key and an identity of the second electronic device;
receiving (S808) a second message from the first electronic device (100) within a second distance from the first electronic device (100), wherein the second message comprises the identity of the second electronic device (200) and encrypted information;
decrypting (S808) the encrypted information by using the random key, to obtain a SIM card number of the first electronic device (100) and an account of the first electronic device (100) on the first conference application;
receiving (S809) a third input used to indicate consent to join the conference; and
sending (S810) a third message to a server (400) of the first conference application by using the third antenna, wherein the third message comprises information obtained after the SIM card number of the first electronic device (100), the account of the first electronic device (100) on the first conference application, the account of the second electronic device (200) on the first conference application, and a conference identity of the conference are encrypted by using an encryption mechanism of the first conference application, wherein
the second distance is less than or equal to a preset first secure distance; the first distance is greater than the preset first secure distance; the preset first secure distance is a secure distance for exchanging secret information between the first electronic device (100) and the second electronic device (200) in an ultra-short-distance mode; and the preset second secure distance is a secure distance for exchanging secret information between the first electronic device (100) and the second electronic device (200) in the ultra-short-distance mode.

6. The second electronic device (200) according to claim 5, wherein the third input is a user input.

7. The second electronic device (200) according to claim 5 or 6, wherein the second electronic device (200) further comprises a wireless communication module (260), and both the third antenna and the fourth antenna are connected to the wireless communication module (260).

8. The second electronic device (200) according to claim 7, wherein the wireless communication module (260) comprises a Wi-Fi chip, a Bluetooth chip, or a ZigBee chip; and both the third antenna and the fourth antenna are connected to one of the Wi-Fi chip, the Bluetooth chip, and the ZigBee chip.

9. A conference access method, applied to a first electronic device (100), wherein a first conference application is installed on the first electronic device (100), the first electronic device (100) wants to access a conference by using the first conference application, and the first electronic device (100) comprises: a SIM card; a first antenna, wherein a transmit distance of the first antenna is a first distance, and the first distance is greater than a preset first secure distance; and a second antenna, wherein a transmit distance of the second antenna is a second distance, and the second distance is less than or equal to the preset first secure distance; and the method comprises:
receiving (S801) a first input;
in response to the first input, broadcasting (S802) a first message by using the first antenna, wherein the first message comprises a conference joining request and an identity of the first electronic device;
receiving (S805) a first response message within a fourth distance from a second electronic device (200), wherein the first response message comprises a random key and an identity of the second electronic device (200), the first response message is associated with the first message, the second electronic device (200) accesses the conference by using the first conference application, and an account of the second electronic device (200) on the first conference application is a conference chairman in the conference;
receiving (S806) a second input used to indicate to join the conference;
in response to the second input, encrypting (S806) a SIM card number of the first electronic device (100) and the account of the first electronic device (100) on the first conference application by using the random key, to obtain encrypted information;
sending (S807) a second message by using the second antenna, wherein the second message comprises the identity of the second electronic device (200) and the encrypted information;
receiving (S813) a call of the first conference application; and
after the call is connected, joining (S814) the conference that the second electronic device (200) attends, wherein
the fourth distance is less than or equal to a preset second secure distance, the preset second secure distance is a secure distance for exchanging secret information between the second electronic device (200) and the first electronic device (100) in an ultra-short-distance mode, and the preset first secure distance is a secure distance for exchanging secret information between the first electronic device (100) and the second electronic device (200) in the ultra-short-distance mode.

10. A conference access method, applied to a second electronic device (200), wherein a first conference application is installed on the second electronic device (200), the second electronic device (200) accesses a conference by using the first conference application, and an account of the second electronic device (200) on the first conference application is a conference chairman in the conference; the second electronic device (200) comprises: a third antenna, wherein a transmit distance of the third antenna is a third distance, and the third distance is greater than a preset second secure distance; and a fourth antenna, wherein a transmit distance of the fourth antenna is a fourth distance, and the fourth distance is less than or equal to the preset second secure distance; and the method comprises:
receiving (S803) a first message from the first electronic device (100) within a first distance from the first electronic device (100), wherein the first message comprises a conference joining request and an identity of the first electronic device (100);
generating (S803) a random key in response to the first message;
sending (S804) a first response message by using the fourth antenna, wherein the first response message comprises the random key and an identity of the second electronic device (200);
receiving (S808) a second message from the first electronic device (100) within a second distance from the first electronic device (100), wherein the second message comprises the identity of the second electronic device (200) and encrypted information;
decrypting (S808) the encrypted information by using the random key, to obtain a SIM card number of the first electronic device (100) and an account of the first electronic device (100) on the first conference application;
receiving (S809) a third input used to indicate consent to join the conference; and
sending (S810) a third message to a server of the first conference application by using the third antenna, wherein the third message comprises information obtained after the SIM card number of the first electronic device (100), the account of the first electronic device (100) on the first conference application, the account of the second electronic device (200) on the first conference application, and a conference identity of the conference are encrypted by using an encryption mechanism of the first conference application, wherein
the second distance is less than or equal to a preset first secure distance; the first distance is greater than the preset first secure distance; the preset first secure distance is a secure distance for exchanging secret information between the first electronic device (100) and the second electronic device (200) in an ultra-short-distance mode; and the preset second secure distance is a secure distance for exchanging secret information between the first electronic device (100) and the second electronic device (200) in the ultra-short-distance mode.

11. A computer-readable storage medium, wherein the computer-readable storage medium comprises a computer program, and when the computer program is run on a first electronic device (100), the first electronic device (100) is enabled to perform the method according to claims 9 or 10.

12. A computer program product, wherein when the computer program product is run on a computer, the computer is enabled to perform the method according to any one of claims 9 or 10.

## Patentansprüche

1. Erstes elektronisches Gerät (100), wobei eine erste Konferenzanwendung auf dem ersten elektronischen Gerät (100) installiert ist und das erste elektronische Gerät auf eine Konferenz unter Verwendung der ersten Konferenzanwendung zugreifen möchte, wobei das erste elektronische Gerät (100) Folgendes umfasst:
eine SIM-Karte;
einen Prozessor (110);
einen Speicher;
eine erste Antenne, wobei eine Übertragungsdistanz der ersten Antenne eine erste Distanz ist und die erste Distanz größer als eine voreingestellte erste sichere Distanz ist;
eine zweite Antenne, wobei eine Übertragungsdistanz der zweiten Antenne eine zweite Distanz ist und die zweite Distanz kleiner oder gleich der voreingestellten ersten sicheren Distanz ist; und
ein Computerprogramm, wobei das Computerprogramm in dem Speicher (221) gespeichert ist, und wenn das Computerprogramm durch den Prozessor (210) ausgeführt wird, das erste elektronische Gerät (100) in die Lage versetzt wird, die folgenden Schritte durchzuführen:
Empfangen (S801) einer ersten Eingabe;
als Reaktion auf die erste Eingabe, Rundsenden (S802) einer ersten Nachricht unter Verwendung der ersten Antenne, wobei die erste Nachricht eine Konferenzteilnahmeanfrage und eine Identität des ersten elektronischen Geräts (100) umfasst;
Empfangen (S805) einer ersten Antwortnachricht innerhalb einer vierten Distanz von einem zweiten elektronischen Gerät (200), wobei die erste Antwortnachricht einen Zufallsschlüssel und eine Identität des zweiten elektronischen Geräts (200) umfasst, die erste Antwortnachricht mit der ersten Nachricht assoziiert ist, das zweite elektronische Gerät (200) unter Verwendung der ersten Konferenzanwendung auf die Konferenz zugreift und ein Konto des zweiten elektronischen Geräts (200) auf der ersten Konferenzanwendung ein Konferenzvorsitzender in der Konferenz ist;
Empfangen (S806) einer zweiten Eingabe, die verwendet wird, um anzugeben, der Konferenz beizutreten;
als Reaktion auf die zweite Eingabe, Verschlüsseln (S806) einer SIM-Kartennummer des ersten elektronischen Geräts (100) und des Kontos des ersten elektronischen Geräts (100) in der ersten Konferenzanwendung unter Verwendung des Zufallsschlüssels, um verschlüsselte Informationen zu erhalten;
Senden (S807) einer zweiten Nachricht unter Verwendung der zweiten Antenne, wobei die zweite Nachricht die Identität des zweiten elektronischen Geräts (200) und die verschlüsselten Informationen umfasst;
Empfangen (S813) eines Anrufs der ersten Konferenzanwendung; und
nachdem der Anruf verbunden ist, Beitreten (S814) der Konferenz, an der das zweite elektronische Gerät (200) teilnimmt, wobei
die vierte Distanz kleiner oder gleich einer voreingestellten zweiten sicheren Distanz ist, die voreingestellte zweite sichere Distanz eine sichere Distanz zum Austauschen geheimer Informationen zwischen dem zweiten elektronischen Gerät (200) und dem ersten elektronischen Gerät (100) in einem Ultrakurzstreckenmodus ist und die voreingestellte erste sichere Distanz eine sichere Distanz zum Austauschen geheimer Informationen zwischen dem ersten elektronischen Gerät (100) und dem zweiten elektronischen Gerät (200) in dem Ultrakurzstreckenmodus ist.

2. Erstes elektronisches Gerät (100) nach Anspruch 1, wobei die erste Eingabe eine Benutzereingabe ist und die zweite Eingabe eine Benutzereingabe ist.

3. Erstes elektronisches Gerät (100) nach Anspruch 1 oder 2, wobei das erste elektronische Gerät (100) ferner ein Drahtloskommunikationsmodul (160) umfasst und sowohl die erste Antenne als auch die zweite Antenne mit dem Drahtloskommunikationsmodul (160) verbunden sind.

4. Erstes elektronisches Gerät (100) nach Anspruch 3, wobei das Drahtloskommunikationsmodul (160) einen WLAN-Chip, einen Bluetooth-Chip oder einen ZigBee-Chip umfasst; und sowohl die erste Antenne als auch die zweite Antenne mit einem von dem WLAN-Chip, dem Bluetooth-Chip und dem ZigBee-Chip verbunden sind.

5. Zweites elektronisches Gerät (200), wobei eine erste Konferenzanwendung auf dem zweiten elektronischen Gerät (200) installiert ist, das zweite elektronische Gerät (200) unter Verwendung der ersten Konferenzanwendung auf eine Konferenz zugreift und ein Konto des zweiten elektronischen Geräts (200) auf der ersten Konferenzanwendung ein Konferenzvorsitzender in der Konferenz ist; und das zweite elektronische Gerät (200) Folgendes umfasst:
einen Prozessor (210);
einen Speicher (221);
eine dritte Antenne, wobei eine Übertragungsdistanz der dritten Antenne eine dritte Distanz ist und die dritte Distanz größer als eine voreingestellte zweite sichere Distanz ist;
eine vierte Antenne, wobei eine Übertragungsdistanz der vierten Antenne eine vierte Distanz ist und die vierte Distanz kleiner oder gleich der voreingestellten zweiten sicheren Distanz ist; und
ein Computerprogramm, wobei das Computerprogramm in dem Speicher (221) gespeichert ist, und wenn das Computerprogramm durch den Prozessor (210) ausgeführt wird, das zweite elektronische Gerät (200) in die Lage versetzt wird, die folgenden Schritte durchzuführen:
Empfangen (S803) einer ersten Nachricht von dem ersten elektronischen Gerät (100) innerhalb einer ersten Distanz von dem ersten elektronischen Gerät (100), wobei die erste Nachricht eine Konferenzteilnahmeanfrage und eine Identität des ersten elektronischen Geräts (100) umfasst;
Erzeugen (S803) eines Zufallsschlüssels als Reaktion auf die erste Nachricht;
Senden (S804) einer ersten Antwortnachricht unter Verwendung der vierten Antenne, wobei die erste Antwortnachricht den Zufallsschlüssel und eine Identität des zweiten elektronischen Geräts umfasst;
Empfangen (S808) einer zweiten Nachricht von dem ersten elektronischen Gerät (100) innerhalb einer zweiten Distanz von dem ersten elektronischen Gerät (100), wobei die zweite Nachricht die Identität des zweiten elektronischen Geräts (200) und verschlüsselte Informationen umfasst;
Entschlüsseln (S808) der verschlüsselten Informationen unter Verwendung des Zufallsschlüssels, um eine SIM-Kartennummer des ersten elektronischen Geräts (100) und ein Konto des ersten elektronischen Geräts (100) auf der ersten Konferenzanwendung zu erhalten;
Empfangen (S809) einer dritten Eingabe, die verwendet wird, um die Zustimmung zur Teilnahme an der Konferenz anzugeben; und
Senden (S810) einer dritten Nachricht an einen Server (400) der ersten Konferenzanwendung unter Verwendung der dritten Antenne, wobei die dritte Nachricht Informationen umfasst, die nach der SIM-Kartennummer des ersten elektronischen Geräts (100), dem Konto des ersten elektronischen Geräts (100) auf der ersten Konferenzanwendung, dem Konto des zweiten elektronischen Geräts (200) auf der ersten Konferenzanwendung erhalten werden, und eine Konferenzidentität der Konferenz unter Verwendung eines Verschlüsselungsmechanismus der ersten Konferenzanwendung verschlüsselt wird, wobei
die zweite Distanz kleiner oder gleich einer voreingestellten ersten sicheren Distanz ist; die erste Distanz größer als die voreingestellte erste sichere Distanz ist; die voreingestellte erste sichere Distanz eine sichere Distanz zum Austauschen geheimer Informationen zwischen dem ersten elektronischen Gerät (100) und dem zweiten elektronischen Gerät (200) in einem Ultrakurzstreckenmodus ist; und die voreingestellte zweite sichere Distanz eine sichere Distanz zum Austauschen geheimer Informationen zwischen dem ersten elektronischen Gerät (100) und dem zweiten elektronischen Gerät (200) im Ultrakurzstreckenmodus ist.

6. Zweites elektronisches Gerät (200) nach Anspruch 5, wobei die dritte Eingabe eine Benutzereingabe ist.

7. Zweites elektronisches Gerät (200) nach Anspruch 5 oder 6, wobei das zweite elektronische Gerät (200) ferner ein Drahtloskommunikationsmodul (260) umfasst und sowohl die dritte Antenne als auch die vierte Antenne mit dem Drahtloskommunikationsmodul (260) verbunden sind.

8. Zweites elektronisches Gerät (200) nach Anspruch 7, wobei das Drahtloskommunikationsmodul (260) einen WLAN-Chip, einen Bluetooth-Chip oder einen ZigBee-Chip umfasst; und sowohl die dritte Antenne als auch die vierte Antenne mit einem von dem WLAN-Chip, dem Bluetooth-Chip und dem ZigBee-Chip verbunden sind.

9. Konferenzzugangsverfahren, das auf ein erstes elektronisches Gerät (100) angewendet wird, wobei eine erste Konferenzanwendung auf dem ersten elektronischen Gerät (100) installiert ist, das erste elektronische Gerät (100) unter Verwendung der ersten Konferenzanwendung auf eine Konferenz zugreifen möchte und das erste elektronische Gerät (100) Folgendes umfasst: eine SIM-Karte; eine erste Antenne, wobei eine Übertragungsdistanz der ersten Antenne eine erste Distanz ist und die erste Distanz größer als eine voreingestellte erste sichere Distanz ist; und eine zweite Antenne, wobei eine Übertragungsdistanz der zweiten Antenne eine zweite Distanz ist und die zweite Distanz kleiner oder gleich der voreingestellten ersten sicheren Distanz ist; und das Verfahren Folgendes umfasst:
Empfangen (S801) einer ersten Eingabe;
als Reaktion auf die erste Eingabe, Rundsenden (S802) einer ersten Nachricht unter Verwendung der ersten Antenne, wobei die erste Nachricht eine Konferenzteilnahmeanfrage und eine Identität des ersten elektronischen Geräts umfasst;
Empfangen (S805) einer ersten Antwortnachricht innerhalb einer vierten Distanz von einem zweiten elektronischen Gerät (200), wobei die erste Antwortnachricht einen Zufallsschlüssel und eine Identität des zweiten elektronischen Geräts (200) umfasst, die erste Antwortnachricht mit der ersten Nachricht assoziiert ist, das zweite elektronische Gerät (200) unter Verwendung der ersten Konferenzanwendung auf die Konferenz zugreift und ein Konto des zweiten elektronischen Geräts (200) auf der ersten Konferenzanwendung ein Konferenzvorsitzender in der Konferenz ist;
Empfangen (S806) einer zweiten Eingabe, die verwendet wird, um anzugeben, der Konferenz beizutreten;
als Reaktion auf die zweite Eingabe, Verschlüsseln (S806) einer SIM-Kartennummer des ersten elektronischen Geräts (100) und des Kontos des ersten elektronischen Geräts (100) in der ersten Konferenzanwendung unter Verwendung des Zufallsschlüssels, um verschlüsselte Informationen zu erhalten;
Senden (S807) einer zweiten Nachricht unter Verwendung der zweiten Antenne, wobei die zweite Nachricht die Identität des zweiten elektronischen Geräts (200) und die verschlüsselten Informationen umfasst;
Empfangen (S813) eines Anrufs der ersten Konferenzanwendung; und
nachdem der Anruf verbunden ist, Beitreten (S814) der Konferenz, an der das zweite elektronische Gerät (200) teilnimmt, wobei
die vierte Distanz kleiner oder gleich einer voreingestellten zweiten sicheren Distanz ist, die voreingestellte zweite sichere Distanz eine sichere Distanz zum Austauschen geheimer Informationen zwischen dem zweiten elektronischen Gerät (200) und dem ersten elektronischen Gerät (100) in einem Ultrakurzstreckenmodus ist und die voreingestellte erste sichere Distanz eine sichere Distanz zum Austauschen geheimer Informationen zwischen dem ersten elektronischen Gerät (100) und dem zweiten elektronischen Gerät (200) in dem Ultrakurzstreckenmodus ist.

10. Konferenzzugangsverfahren, das auf ein zweites elektronisches Gerät (200) angewendet wird, wobei eine erste Konferenzanwendung auf dem zweiten elektronischen Gerät (200) installiert ist, das zweite elektronische Gerät (200) unter Verwendung der ersten Konferenzanwendung auf eine Konferenz zugreift und ein Konto des zweiten elektronischen Geräts (200) auf der ersten Konferenzanwendung ein Konferenzvorsitzender in der Konferenz ist; das zweite elektronische Gerät (200) Folgendes umfasst: eine dritte Antenne, wobei eine Übertragungsdistanz der dritten Antenne eine dritte Distanz ist und die dritte Distanz größer als eine voreingestellte zweite sichere Distanz ist; und eine vierte Antenne, wobei eine Übertragungsdistanz der vierten Antenne eine vierte Distanz ist und die vierte Distanz kleiner als oder gleich der voreingestellten zweiten sicheren Distanz ist; und das Verfahren Folgendes umfasst:
Empfangen (S803) einer ersten Nachricht von dem ersten elektronischen Gerät (100) innerhalb einer ersten Distanz von dem ersten elektronischen Gerät (100), wobei die erste Nachricht eine Konferenzteilnahmeanfrage und eine Identität des ersten elektronischen Geräts (100) umfasst;
Erzeugen (S803) eines Zufallsschlüssels als Reaktion auf die erste Nachricht;
Senden (S804) einer ersten Antwortnachricht unter Verwendung der vierten Antenne, wobei die erste Antwortnachricht den Zufallsschlüssel und eine Identität des zweiten elektronischen Geräts (200) umfasst;
Empfangen (S808) einer zweiten Nachricht von dem ersten elektronischen Gerät (100) innerhalb einer zweiten Distanz von dem ersten elektronischen Gerät (100), wobei die zweite Nachricht die Identität des zweiten elektronischen Geräts (200) und verschlüsselte Informationen umfasst;
Entschlüsseln (S808) der verschlüsselten Informationen unter Verwendung des Zufallsschlüssels, um eine SIM-Kartennummer des ersten elektronischen Geräts (100) und ein Konto des ersten elektronischen Geräts (100) auf der ersten Konferenzanwendung zu erhalten;
Empfangen (S809) einer dritten Eingabe, die verwendet wird, um die Zustimmung zur Teilnahme an der Konferenz anzugeben; und
Senden (S810) einer dritten Nachricht an einen Server der ersten Konferenzanwendung unter Verwendung der dritten Antenne, wobei die dritte Nachricht Informationen umfasst, die nach der SIM-Kartennummer des ersten elektronischen Geräts (100), dem Konto des ersten elektronischen Geräts (100) auf der ersten Konferenzanwendung, dem Konto des zweiten elektronischen Geräts (200) auf der ersten Konferenzanwendung erhalten werden, und eine Konferenzidentität der Konferenz unter Verwendung eines Verschlüsselungsmechanismus der ersten Konferenzanwendung verschlüsselt wird, wobei
die zweite Distanz kleiner oder gleich einer voreingestellten ersten sicheren Distanz ist; die erste Distanz größer als die voreingestellte erste sichere Distanz ist; die voreingestellte erste sichere Distanz eine sichere Distanz zum Austauschen geheimer Informationen zwischen dem ersten elektronischen Gerät (100) und dem zweiten elektronischen Gerät (200) in einem Ultrakurzstreckenmodus ist; und die voreingestellte zweite sichere Distanz eine sichere Distanz zum Austauschen geheimer Informationen zwischen dem ersten elektronischen Gerät (100) und dem zweiten elektronischen Gerät (200) im Ultrakurzstreckenmodus ist.

11. Computerlesbares Speichermedium, wobei das computerlesbare Speichermedium ein Computerprogramm umfasst, und wenn das Computerprogramm auf einem ersten elektronischen Gerät (100) ausgeführt wird, das erste elektronische Gerät (100) in die Lage versetzt wird, das Verfahren nach Anspruch 9 oder 10 durchzuführen.

12. Computerprogrammprodukt, wobei, wenn das Computerprogrammprodukt auf einem Computer ausgeführt wird, der Computer in die Lage versetzt wird, das Verfahren nach einem der Ansprüche 9 oder 10 durchzuführen.

## Revendications

1. Premier dispositif électronique (100), dans lequel une première application de conférence est installée sur le premier dispositif électronique (100), et le premier dispositif électronique veut accéder à une conférence en utilisant la première application de conférence, dans lequel le premier dispositif électronique (100) comprend :
une carte SIM ;
un processeur (110) ;
une mémoire ;
une première antenne, dans lequel une distance de transmission de la première antenne est une première distance, et la première distance est supérieure à une première distance sécurisée prédéfinie ;
une deuxième antenne, dans lequel une distance de transmission de la deuxième antenne est une deuxième distance, et la deuxième distance est inférieure ou égale à la première distance sécurisée prédéfinie ; et
un programme d'ordinateur, dans lequel le programme d'ordinateur est stocké dans la mémoire (221), et, lorsque le programme d'ordinateur est exécuté par le processeur (210), le premier dispositif électronique (100) est en mesure de réaliser les étapes suivantes :
la réception (S801) d'une première entrée ;
en réponse à la première entrée, la diffusion (S802) d'un premier message en utilisant la première antenne, dans lequel le premier message comprend une demande de participation à conférence et une identité du premier dispositif électronique (100) ;
la réception (S805) d'un premier message de réponse dans les limites d'une quatrième distance par rapport à un second dispositif électronique (200), dans lequel le premier message de réponse comprend une clef aléatoire et une identité du second dispositif électronique (200), le premier message de réponse est associé au premier message, le second dispositif électronique (200) accède à la conférence en utilisant la première application de conférence, et un compte du second dispositif électronique (200) sur la première application de conférence est un président de conférence dans la conférence ;
la réception (S806) d'une deuxième entrée utilisée pour indiquer de participer à la conférence ;
en réponse à la deuxième entrée, le chiffrement (S806) d'un numéro de carte SIM du premier dispositif électronique (100) et du compte du premier dispositif électronique (100) sur la première application de conférence en utilisant la clef aléatoire, pour obtenir des informations chiffrées ;
l'envoi (S807) d'un deuxième message en utilisant la deuxième antenne, dans lequel le deuxième message comprend l'identité du second dispositif électronique (200) et les informations chiffrées ;
la réception (S813) d'un appel de la première application de conférence ; et
après que l'appel est connecté, la participation (S814) à la conférence à laquelle assiste le second dispositif électronique (200), dans lequel
la quatrième distance est inférieure ou égale à une seconde distance sécurisée prédéfinie, la seconde distance sécurisée prédéfinie est une distance sécurisée pour échanger des informations secrètes entre le second dispositif électronique (200) et le premier dispositif électronique (100) dans un mode à ultra-courte distance, et la première distance sécurisée prédéfinie est une distance sécurisée pour échanger des informations secrètes entre le premier dispositif électronique (100) et le second dispositif électronique (200) dans le mode à ultra-courte distance.

2. Premier dispositif électronique (100) selon la revendication 1, dans lequel la première entrée est une entrée utilisateur, et la deuxième entrée est une entrée utilisateur.

3. Premier dispositif électronique (100) selon la revendication 1 ou 2, dans lequel le premier dispositif électronique (100) comprend en outre un module de communication sans fil (160), et la première antenne et la deuxième antenne sont toutes les deux connectées au module de communication sans fil (160).

4. Premier dispositif électronique (100) selon la revendication 3, dans lequel le module de communication sans fil (160) comprend une puce Wi-Fi, une puce Bluetooth, ou une puce ZigBee ; et la première antenne et la deuxième antenne sont toutes les deux connectées à une de la puce Wi-Fi, de la puce Bluetooth, et de la puce ZigBee.

5. Second dispositif électronique (200), dans lequel une première application de conférence est installée sur le second dispositif électronique (200), le second dispositif électronique (200) accède à une conférence en utilisant la première application de conférence, et un compte du second dispositif électronique (200) sur la première application de conférence est un président de conférence dans la conférence ; et le second dispositif électronique (200) comprend :
un processeur (210) ;
une mémoire (221) ;
une troisième antenne, dans lequel une distance de transmission de la troisième antenne est une troisième distance, et la troisième distance est supérieure à une seconde distance sécurisée prédéfinie ;
une quatrième antenne, dans lequel une distance de transmission de la quatrième antenne est une quatrième distance, et la quatrième distance est inférieure ou égale à la seconde distance sécurisée prédéfinie ; et
un programme d'ordinateur, dans lequel le programme d'ordinateur est stocké dans la mémoire (221), et, lorsque le programme d'ordinateur est exécuté par le processeur (210), le second dispositif électronique (200) est en mesure de réaliser les étapes suivantes :
la réception (S803) d'un premier message en provenance du premier dispositif électronique (100) dans les limites d'une première distance par rapport au premier dispositif électronique (100), dans lequel le premier message comprend une demande de participation à conférence et une identité du premier dispositif électronique (100) ;
la génération (S803) d'une clef aléatoire en réponse au premier message ;
l'envoi (S804) d'un premier message de réponse en utilisant la quatrième antenne, dans lequel le premier message de réponse comprend la clef aléatoire et une identité du second dispositif électronique ;
la réception (S808) d'un deuxième message en provenance du premier dispositif électronique (100) dans les limites d'une deuxième distance par rapport au premier dispositif électronique (100), dans lequel le deuxième message comprend l'identité du second dispositif électronique (200) et des informations chiffrées ;
le déchiffrement (S808) des informations chiffrées en utilisant la clef aléatoire, pour obtenir un numéro de carte SIM du premier dispositif électronique (100) et un compte du premier dispositif électronique (100) sur la première application de conférence ;
la réception (S809) d'une troisième entrée utilisée pour indiquer un consentement de participer à la conférence ; et
l'envoi (S810) d'un troisième message à un serveur (400) de la première application de conférence en utilisant la troisième antenne, dans lequel le troisième message comprend des informations obtenues après le numéro de carte SIM du premier dispositif électronique (100), le compte du premier dispositif électronique (100) sur la première application de conférence, le compte du second dispositif électronique (200) sur la première application de conférence, et une identité de conférence de la conférence sont chiffrés en utilisant un mécanisme de chiffrement de la première application de conférence, dans lequel
la deuxième distance est inférieure ou égale à une première distance sécurisée prédéfinie ; la première distance est supérieure à la première distance sécurisée prédéfinie ; la première distance sécurisée prédéfinie est une distance sécurisée pour échanger des informations secrètes entre le premier dispositif électronique (100) et le second dispositif électronique (200) dans un mode à ultra-courte distance ; et la seconde distance sécurisée prédéfinie est une distance sécurisée pour échanger des informations secrètes entre le premier dispositif électronique (100) et le second dispositif électronique (200) dans le mode à ultra-courte distance.

6. Second dispositif électronique (200) selon la revendication 5, dans lequel la troisième entrée est une entrée utilisateur.

7. Second dispositif électronique (200) selon la revendication 5 ou 6, dans lequel le second dispositif électronique (200) comprend en outre un module de communication sans fil (260), et la troisième antenne et la quatrième antenne sont toutes les deux connectées au module de communication sans fil (260).

8. Second dispositif électronique (200) selon la revendication 7, dans lequel le module de communication sans fil (260) comprend une puce Wi-Fi, une puce Bluetooth, ou une puce ZigBee ; et la troisième antenne et la quatrième antenne sont toutes les deux connectées à une de la puce Wi-Fi, de la puce Bluetooth, et de la puce ZigBee.

9. Procédé d'accès à conférence, appliqué à un premier dispositif électronique (100), dans lequel une première application de conférence est installée sur le premier dispositif électronique (100), le premier dispositif électronique (100) veut accéder à une conférence en utilisant la première application de conférence, et le premier dispositif électronique (100) comprend : une carte SIM ; une première antenne, dans lequel une distance de transmission de la première antenne est une première distance, et la première distance est supérieure à une première distance sécurisée prédéfinie ; et une deuxième antenne, dans lequel une distance de transmission de la deuxième antenne est une deuxième distance, et la deuxième distance est inférieure ou égale à la première distance sécurisée prédéfinie ; et le procédé comprend :
la réception (S801) d'une première entrée ;
en réponse à la première entrée, la diffusion (S802) d'un premier message en utilisant la première antenne, dans lequel le premier message comprend une demande de participation à conférence et une identité du premier dispositif électronique ;
la réception (S805) d'un premier message de réponse dans les limites d'une quatrième distance par rapport à un second dispositif électronique (200), dans lequel le premier message de réponse comprend une clef aléatoire et une identité du second dispositif électronique (200), le premier message de réponse est associé au premier message, le second dispositif électronique (200) accède à la conférence en utilisant la première application de conférence, et un compte du second dispositif électronique (200) sur la première application de conférence est un président de conférence dans la conférence ;
la réception (S806) d'une deuxième entrée utilisée pour indiquer de participer à la conférence ;
en réponse à la deuxième entrée, le chiffrement (S806) d'un numéro de carte SIM du premier dispositif électronique (100) et du compte du premier dispositif électronique (100) sur la première application de conférence en utilisant la clef aléatoire, pour obtenir des informations chiffrées ;
l'envoi (S807) d'un deuxième message en utilisant la deuxième antenne, dans lequel le deuxième message comprend l'identité du second dispositif électronique (200) et les informations chiffrées ;
la réception (S813) d'un appel de la première application de conférence ; et
après que l'appel est connecté, la participation (S814) à la conférence à laquelle assiste le second dispositif électronique (200), dans lequel
la quatrième distance est inférieure ou égale à une seconde distance sécurisée prédéfinie, la seconde distance sécurisée prédéfinie est une distance sécurisée pour échanger des informations secrètes entre le second dispositif électronique (200) et le premier dispositif électronique (100) dans un mode à ultra-courte distance, et la première distance sécurisée prédéfinie est une distance sécurisée pour échanger des informations secrètes entre le premier dispositif électronique (100) et le second dispositif électronique (200) dans le mode à ultra-courte distance.

10. Procédé d'accès à conférence, appliqué à un second dispositif électronique (200), dans lequel une première application de conférence est installée sur le second dispositif électronique (200), le second dispositif électronique (200) accède à une conférence en utilisant la première application de conférence, et un compte du second dispositif électronique (200) sur la première application de conférence est un président de conférence dans la conférence ; le second dispositif électronique (200) comprend : une troisième antenne, dans lequel une distance de transmission de la troisième antenne est une troisième distance, et la troisième distance est supérieure à une seconde distance sécurisée prédéfinie ; et une quatrième antenne, dans lequel une distance de transmission de la quatrième antenne est une quatrième distance, et la quatrième distance est inférieure ou égale à la seconde distance sécurisée prédéfinie ; et le procédé comprend :
la réception (S803) d'un premier message en provenance du premier dispositif électronique (100) dans les limites d'une première distance par rapport au premier dispositif électronique (100), dans lequel le premier message comprend une demande de participation à conférence et une identité du premier dispositif électronique (100) ;
la génération (S803) d'une clef aléatoire en réponse au premier message ;
l'envoi (S804) d'un premier message de réponse en utilisant la quatrième antenne, dans lequel le premier message de réponse comprend la clef aléatoire et une identité du second dispositif électronique (200) ;
la réception (S808) d'un deuxième message en provenance du premier dispositif électronique (100) dans les limites d'une deuxième distance par rapport au premier dispositif électronique (100), dans lequel le deuxième message comprend l'identité du second dispositif électronique (200) et des informations chiffrées ;
le déchiffrement (S808) des informations chiffrées en utilisant la clef aléatoire, pour obtenir un numéro de carte SIM du premier dispositif électronique (100) et un compte du premier dispositif électronique (100) sur la première application de conférence ;
la réception (S809) d'une troisième entrée utilisée pour indiquer un consentement de participer à la conférence ; et
l'envoi (S810) d'un troisième message à un serveur de la première application de conférence en utilisant la troisième antenne, dans lequel le troisième message comprend des informations obtenues après le numéro de carte SIM du premier dispositif électronique (100), le compte du premier dispositif électronique (100) sur la première application de conférence, le compte du second dispositif électronique (200) sur la première application de conférence, et une identité de conférence de la conférence sont chiffrés en utilisant un mécanisme de chiffrement de la première application de conférence, dans lequel
la deuxième distance est inférieure ou égale à une première distance sécurisée prédéfinie ; la première distance est supérieure à la première distance sécurisée prédéfinie ; la première distance sécurisée prédéfinie est une distance sécurisée pour échanger des informations secrètes entre le premier dispositif électronique (100) et le second dispositif électronique (200) dans un mode à ultra-courte distance ; et la seconde distance sécurisée prédéfinie est une distance sécurisée pour échanger des informations secrètes entre le premier dispositif électronique (100) et le second dispositif électronique (200) dans le mode à ultra-courte distance.

11. Support lisible par ordinateur, dans lequel le support lisible par ordinateur comprend un programme d'ordinateur, et, lorsque le programme d'ordinateur est exploité sur un premier dispositif électronique (100), le premier dispositif électronique (100) est en mesure de réaliser le procédé selon les revendications 9 ou 10.

12. Produit programme d'ordinateur, dans lequel, lorsque le produit programme d'ordinateur est exploité sur un ordinateur, l'ordinateur est en mesure de réaliser le procédé selon l'une quelconque des revendications 9 ou 10.
